(19) Europäisches Patentamt
European Patent Office
Office européen des brevets

(11) **EP 4 776 684 A1**

(12) **EUROPEAN PATENT APPLICATION**
published in accordance with Art. 153(4) EPC

(43) Date of publication:
**15.07.2026  Bulletin 2026/29**

(51) International Patent Classification (IPC):
***H04W 28/02*** (2009.01)

(21) Application number: **23951096.9**

(52) Cooperative Patent Classification (CPC):
**H04W 28/02**

(22) Date of filing: **04.09.2023**

(86) International application number:
**PCT/CN2023/116845**

(87) International publication number:
**WO 2025/050267 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **WU, Danyang
  Dongguan, Guangdong 523860 (CN)**
• **LIN, Yanan
  Dongguan, Guangdong 523860 (CN)**

(74) Representative: **Novagraaf Technologies
2 rue Sarah Bernhardt
CS90017
92665 Asnières-sur-Seine Cedex (FR)**

(54) **CHANNEL TRANSMISSION METHOD AND APPARATUS, DEVICE, AND STORAGE MEDIUM**

(57)     The present application relates to the field of communications, and discloses a channel transmission method and apparatus, a device, and a storage medium. The method comprises: on the basis of a first parameter, determining a transport block size (TBS) of a transport block carried by a channel, wherein a first signal carried by the channel is used for acquiring a first sensing result, and the first parameter comprises at least one of the following: a first coefficient, the value of the first coefficient being greater than 1 or greater than 0 and less than 1; the number of resource blocks (RBs) occupied by the first signal; the number of time-domain units occupied by the first signal; the number of resource elements (REs) occupied by the first signal; and the amount of overhead for sensing function scheduling. The wireless communication quality and sensing requirements are both achieved.

210

Determining, based on a first parameter, a TBS of a transport block carried on a channel, wherein a first signal carried on the channel is used to acquire a first sensing result

FIG. 2

EP 4 776 684 A1

**Description**

**TECHNICAL FIELD**

The present disclosure relates to the field of communications, and in particular, relates to a method and an apparatus for transmitting a channel, and a device and a storage medium thereof.

**RELATED ART**

Sensing and communication integration is a promising technology. However, in a current wireless communication system, it is impossible to give consideration to both wireless communication quality and a sensing requirement. For example, usually, a time-frequency resource allocated to a physical channel can ensure wireless communication quality, but for a sensing service, time-frequency resources are still not enough to satisfy a sensing requirement. For example, in a case where enough time-frequency resources are scheduled for the sensing service to satisfy the sensing requirement, a transport block needs to be filled with more dummy bits, which negatively affects the wireless communication quality.

Therefore, how to balance wireless communication quality and a sensing requirement as much as possible is an urgent problem to be addressed.

**SUMMARY**

The present disclosure provides a method and apparatus for transmitting a channel, and a device and a storage medium thereof. The technical solutions are as follows.

According to an aspect of the embodiments of the present disclosure, a method for transmitting a channel is provided. The method is performed by a first node. The method includes: determining, based on a first parameter, a transport block size (TBS) of a transport block carried on a channel; wherein a first signal carried on the channel is used to acquire a first sensing result; and the first parameter includes at least one of: a first coefficient, wherein a value of the first coefficient is greater than 1 or greater than 0 and less than 1; the number of resource blocks (RBs) occupied by the first signal; the number of time-domain units occupied by the first signal; the number of resource elements (REs) occupied by the first signal; or a first overhead amount for sensing function scheduling.

According to another aspect of the embodiments of the present disclosure, a method for transmitting a channel is provided. The method is performed by a second node. The method includes: transmitting at least one of a transport block or a first signal on a channel; wherein the first signal is used to acquire a first sensing result, and a TBS of the transport block is determined based on a first parameter; wherein the first parameter includes at least one of: a first coefficient, wherein a value of the first coefficient is greater than 1 or greater than 0 and less than 1; the number of RBs occupied by the first signal; the number of time-domain units occupied by the first signal; the number of REs occupied by the first signal; or a first overhead amount for sensing function scheduling.

According to another aspect of the embodiments of the present disclosure, a method for transmitting a channel is provided. The method is performed by a first node. The method includes: acquiring a second sensing result based on a second signal carried on n channels that satisfy a constraint condition, wherein n is an integer greater than 1.

According to another aspect of the embodiments of the present disclosure, a method for transmitting a channel is provided. The method is performed by a second node. The method includes: transmitting a second signal on n channels that satisfy a constraint condition, wherein the second signal is used to acquire a second sensing result, and n is an integer greater than 1.

According to an aspect of the embodiments of the present disclosure, an apparatus for transmitting a channel is provided. The apparatus includes: a first processing module, configured to determine, based on a first parameter, a TBS of a transport block carried on a channel; wherein a first signal carried on the channel acquires a first sensing result; and the first parameter includes at least one of: a first coefficient, wherein a value of the first coefficient is greater than 1 or greater than 0 and less than 1; the number of RBs occupied by the first signal; the number of time-domain units occupied by the first signal; the number of REs occupied by the first signal; or a first overhead amount for sensing function scheduling.

According to another aspect of the embodiments of the present disclosure, an apparatus for transmitting a channel is provided. The apparatus includes: a second transmitting module, configured to transmit at least one of a transport block or a first signal on a channel; wherein the first signal is used to acquire a first sensing result, and a TBS of the transport block is determined based on a first parameter; wherein the first parameter includes at least one of: a first coefficient, wherein a value of the first coefficient is greater than 1 or greater than 0 and less than 1; the number of RBs occupied by the first signal; the number of time-domain units occupied by the first signal; the number of REs occupied by the first signal; or a first overhead amount for sensing function scheduling.

According to another aspect of the embodiments of the present disclosure, an apparatus for transmitting a channel is provided. The apparatus includes: a third processing module, configured to acquire a second sensing result based on a second signal carried on n channels that satisfy a constraint condition, wherein n is an integer greater than 1.

According to another aspect of the embodiments of the present disclosure, an apparatus for transmitting a channel is provided. The apparatus includes: a fourth transmitting module, configured to transmit a second signal on n channels that satisfy a constraint condition, wherein the second signal is used to acquire a second sensing result, and n is an integer greater than 1.

According to another aspect of the embodiments of the present disclosure, a terminal device is provided. The terminal device includes: a processor; a transceiver communicably connected to the processor; and a memory configured to store one or more executable instructions of the processor; wherein the terminal device is configured to perform the methods for transmitting a channel as described above.

According to another aspect of the embodiments of the present disclosure, a network device is provided. The network device includes: a processor; a transceiver communicably connected to the processor; and a memory configured to store one or more executable instructions of the processor; wherein the network device is configured to perform the methods for transmitting a channel as described above.

According to another aspect of the embodiments of the present disclosure, a computer-readable storage medium is provided. The computer-readable storage medium stores one or more executable instructions therein, wherein the one or more executable instructions, when loaded and executed by a processor, cause the processor to perform the methods for transmitting a channel as described above.

According to another aspect of the embodiments of the present disclosure, a computer program product is provided. The computer program product includes one or more computer instructions stored in a computer-readable storage medium, wherein the one or more computer instructions, when read from the computer-readable storage medium and executed by a processor of a computer device, cause the computer device to perform the methods for transmitting a channel as described above.

According to another aspect of the embodiments of the present disclosure, a chip is provided. The chip includes a programmable logic circuit and/or a program instruction, wherein the chip, when running, is configured to perform the methods for transmitting a channel as described above.

According to another aspect of the embodiments of the present disclosure, a computer program is provided. The computer program includes one or more computer instructions, wherein the one or more computer instructions, when executed by a processor of a computer device, cause the computer device to perform the methods for transmitting a channel as described above.

The technical solutions according to the embodiments of the present disclosure at least have the following beneficial effects.

A sensing requirement is satisfied using the first signal carried on the channel. Meanwhile, considering that in a case where the channel occupies more time-frequency resources to satisfy the sensing requirement, a TBS of the transport block carried on the channel increases accordingly, a solution of determining the TBS based on the first parameter is designed to ensure the wireless communication quality. Compared with filling a large number of dummy bits in a transport block with an increased TBS, a code rate, an amount of intermediate information, and the like that are transmitted on a channel are adjusted using the first parameter, such that the transport block with the increased TBS carries more valid bits instead of the large number of dummy bits, thereby reducing transmission of dummy bits on the channel, improving reliability, robustness, and efficiency of channel transmission, and implementing both a sensing requirement and a communication requirement.

Because the n channels occupy a large number of time-frequency resources, the second signal carried on the n channels can satisfy the sensing requirement, and a constraint condition effectively improves the transmission efficiency of the n channels. In this case, not only a waste caused by occupying excessive transmission resources by the n channels is avoided, but also a reduction in sensing precision and communication quality caused by occupying unreasonable transmission resources by the n channels is avoided, thereby implementing both a sensing requirement and a communication requirement.

## BRIEF DESCRIPTION OF DRAWINGS

To describe the technical solutions in embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other accompanying drawings from these accompanying drawings without creative efforts.

FIG. 1 illustrates a schematic diagram of a scenario of a communication system according to some embodiments of the present disclosure;

FIG. 2 illustrates a schematic flowchart of a method for transmitting a channel according to some embodiments of the present disclosure;

FIG. 3 illustrates a schematic flowchart of a method for transmitting a channel according to some embodiments of the present disclosure;

FIG. 4 illustrates a schematic flowchart of a method for transmitting a channel according to some embodiments of the present disclosure;

FIG. 5 illustrates a schematic flowchart of a method for transmitting a channel according to some embodiments of the present disclosure;

FIG. 6 illustrates a schematic flowchart of a method for transmitting a channel according to some embodiments of the present disclosure;

FIG. 7 illustrates a schematic flowchart of a method for transmitting a channel according to some embodiments of the present disclosure;

FIG. 8 illustrates a schematic flowchart of a method for transmitting a channel according to some embodiments of the present disclosure;

FIG. 9 illustrates a schematic flowchart of a method for transmitting a channel according to some embodiments of the present disclosure;

FIG. 10 illustrates a schematic flowchart of a method for transmitting a channel according to some exemplary embodiments of the present disclosure;

FIG. 11 illustrates a schematic flowchart of a method for transmitting a channel according to some embodiments of the present disclosure;

FIG. 12 illustrates a schematic flowchart of a method for transmitting a channel according to some embodiments of the present disclosure;

FIG. 13 illustrates a schematic flowchart of a method for transmitting a channel according to some embodiments of the present disclosure;

FIG. 14 illustrates a schematic flowchart of a method for transmitting a channel according to some embodiments of the present disclosure;

FIG. 15 illustrates a schematic flowchart of a method for transmitting a channel according to some embodiments of the present disclosure;

FIG. 16 illustrates a schematic diagram of a method for transmitting a channel according to some embodiments of the present disclosure;

FIG. 17 illustrates a schematic diagram of a method for transmitting a channel according to some embodiments of the present disclosure;

FIG. 18 illustrates a structural block diagram of an apparatus for transmitting a channel according to some embodiments of the present disclosure;

FIG. 19 illustrates a structural block diagram of an apparatus for transmitting a channel according to some embodiments of the present disclosure;

FIG. 20 illustrates a structural block diagram of an apparatus for transmitting a channel according to some embodiments of the present disclosure;

FIG. 21 illustrates a structural block diagram of an apparatus for transmitting a channel according to some embodiments of the present disclosure; and

FIG. 22 illustrates a schematic structural diagram of a communication device according to some embodiments of the present disclosure.

## DETAILED DESCRIPTION

For clearer descriptions of the objectives, technical solutions, and advantages of the present disclosure, the embodiments of the present disclosure are further described in detail hereinafter with reference to the accompanying drawings. The exemplary embodiments are described in detail herein, and examples are illustrated in the accompanying drawings. When the following description refers to the accompanying drawings, the same numbers in different accompanying drawings represent the same or similar elements unless otherwise indicated. The embodiments described in the following exemplary embodiments do not represent all embodiments consistent with the present disclosure. Rather, they are merely examples of apparatus and methods consistent with certain aspects of the present disclosure, as detailed in the appended claims.

The terms used in the present disclosure are for the purpose of describing particular embodiments only and are not intended to limit the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although terms such as "first," "second," and "third" may be used in the present disclosure to describe various information, such information should not be limited by these terms. These terms are only used to distinguish information of the same type from each other. For example, without departing from the scope of the present disclosure, first information may be referred to as second information, and similarly, second information may be referred to as first information. The term "if" as used herein may be interpreted as "in a case where," "when," or "in response to determining" depending on the context.

First, the communication technologies involved in the embodiments of the present disclosure are described as follows.

## 1. Integrated sensing and communication technology

Wireless communication and sensing are two important applications of modern radio frequency technologies. Sensing uses radio waves to detect parameters of a physical environment, so as to achieve environment sensing such as target positioning, action recognition, and imaging. Traditional sensing and wireless communication are present independently. This separated design leads to inefficiencies in the utilization of both wireless spectrum and hardware resources.

As the spectrum of wireless communication has stepped into millimeter wave, terahertz, and visible light bands, and the spectra of wireless communication and sensing increasingly overlap. An integrated sensing and communication technology is used to integrate the two functions of wireless communication and sensing, to support the same signal to simultaneously implement the functions of communication and sensing, thereby improving the spectrum utilization. In addition, wireless communication and wireless sensing have more and more similarities in system design, signal processing, data processing, and other aspects. Using the same device to implement communication and sensing functions is also conducive to reducing device costs.

The integrated sensing and communication technology, referred to as sensing and communication integration for short, is roughly categorized into the following two categories: communication-assisted sensing and sensing-assisted communication. Communication-assisted sensing refers to transmitting and aggregating sensing information via wireless communication, which can expand the breadth and depth of a sensing service and improve the timeliness of the sensing service. Based on the communication and sensing fusion technology, efficient sensing services such as high-accuracy positioning, high-resolution imaging, and virtual environment reconstruction are provided, and a digital twin environment is effectively constructed to implement digital representation and in-depth processing for a wide range of industries.

## 2. Time-frequency resource of physical channel

Generally, the network device allocates, to the terminal device based on factors such as a transport block size (TB Size, TBS) carried on a physical channel, a channel condition, and a reliability requirement, a time-frequency resource required for transmission on the physical channel. The physical channel is, for example, a physical downlink shared channel (PDSCH) or a physical uplink shared channel (PUSCH).

In a case where the channel condition is poor and the reliability requirement is high, the network device usually selects a low modulation and coding scheme (MCS) level. A lower MCS level indicates a lower code rate, such that the physical channel occupies more time-frequency resources. To adapt to various communication scenarios, a plurality of MCS mapping tables are present for selection, to satisfy communication requirements in the various communication scenarios. For details, please refer to related content in the 3rd Generation Partnership Project (3GPP) TS 38214.

For time-domain resource allocation, a granularity of scheduling a time-domain resource by the network device is refined to a single symbol or a plurality of symbols within a slot. For example, the MCS mapping table indicates a number L of symbols occupied by the physical channel and a start symbol S, to adapt to time-frequency resource allocation under different service requirements.

## 3. Determination process for TBS

Taking the physical channel being a PDSCH as an example, the TBS in the PDSCH is determined by using the following three processes.

1) Determining the number $N_{RE}$ of resource elements (REs) of the PDSCH, including:

i. determining the number of REs in one physical resource block (PRB), wherein the calculation equation is as follows:

$$N'_{RE} = N^{RB}_{sc} \times N^{sh}_{symb} - N^{PRB}_{DMRS} - N^{PRB}_{oh} \qquad (1)$$

wherein $N^{RB}_{sc} = 12$ represents the number of subcarriers in one resource block (RB); $N^{sh}_{symb}$ represents the number of symbols occupied by the PDSCH within one slot; $N^{PRB}_{DMRS}$ represents the number of REs occupied by a demodulation reference signal (DMRS) in one PRB; and $N^{PRB}_{oh}$ represents the number of overhead REs configured in one PRB. In some embodiments, the number of overhead REs includes the number of REs occupied by control information of at least one of a synchronization channel, a physical broadcast channel (PBCH), a physical downlink control channel (PDCCH), a physical uplink control channel (PUCCH), or the like. In some embodiments, the number of overhead REs includes, but is not limited to, the number of REs occupied by at least one of reference resources such as a channel state information reference signal (CSI-RS) or a control resource set (CORESET).

ii. determining the number of REs in the PDSCH, wherein a calculation equation is as follows:

$$N_{RE} = min\left(156, N'_{RE}\right) \times n_{PRB}.$$

Wherein $n_{PRB}$ represents the number of PRBs allocated by the network device to the terminal device.

2) Calculating an amount $N_{info}$ of intermediate information carried by the PDSCH, wherein a calculation equation is as follows: $N_{info} = N_{RE} \times R \times Q_m \times \upsilon$.

Wherein $N_{RE}$ represents the calculated number of REs in the PDSCH, R represents a code rate of the PDSCH, $Q_m$ represents a modulation order of data on the PDSCH, and $\upsilon$ represents the number of transmission layers of the PDSCH.

3) Determining the TBS based on the amount $N_{info}$ of the intermediate information:

i. determining, in a case where $N_{info} \leq 3824$, the TBS by quantizing and looking up a table; and

ii. determining, in a case where $N_{info} > 3824$, the TBS by quantitative calculation.

However, a code rate supported by the communication system has a lower limit; that is, the value of R has a minimum. Even if a small data volume is transmitted using the lowest code rate supported by the communication system (e.g., 30/1024), the time-frequency resources occupied by the physical channel are not large enough to satisfy the sensing requirement.

Taking TBS = 48 bits as an example, in a case where R = 30/1024 and the time-domain resource of the PDSCH includes at least two symbols, the frequency-domain resource of the PDSCH needs to include 51 RBs during dual-port transmission. In a case where the subcarrier spacing is 15 kHz, a bandwidth occupied by the PDSCH is approximately 9 M.

Taking TBS = 48 bits as an example, in a case where R = 30/1024 and the time-domain resource of the PUSCH includes at least one symbol, the frequency-domain resource of the PUSCH needs to include 90 RBs during single-port transmission. In a case where the subcarrier spacing is 15 kHz, a bandwidth occupied by the PUSCH is approximately 12 M.

In the case where the bandwidth is about 9 M or 12 M, the sensing resolution is about 15 m, which cannot satisfy the precision requirements in most sensing scenarios.

## 4. Sensing requirement

The sensing precision is usually affected by a transmission bandwidth and a transmission duration of a signal. For example, a larger transmission bandwidth of a signal indicates higher precision of sensing ranging, and a longer transmission duration of a signal indicates higher precision of sensing speed measurement.

In a case of using communication signals for sensing, two aspects of requirements need to be considered for the time-domain resource allocation for the communication signals:

I. Communication requirements, including data volume, transmission reliability, transmission delay, or the like.

II. Sensing requirements: different sensing services have different requirements for transmission bandwidth and transmission duration of signals.

In a case where the network device schedules a large number of time-frequency resources (i.e., a large bandwidth or a plurality of symbols) for transmission to satisfy the sensing requirements, the following problem is present: in a case where the volume of transmitted data is small, a transmitter generates a large TB for transmission by filling redundant information, thereby causing problems such as reduced system transmission efficiency, a waste of power consumption, and an increase in transmission delay.

Therefore, in a case where the above communication technologies are used to perform wireless communication and sensing, it is difficult to satisfy a sensing requirement while a communication requirement is satisfied, and it is difficult to satisfy a communication requirement while a sensing requirement is satisfied. Thus, a real integrated sensing and communication technology cannot be implemented.

Based on the above problem, the present disclosure provides a method for transmitting a channel, to support both wireless communication quality and a sensing requirement.

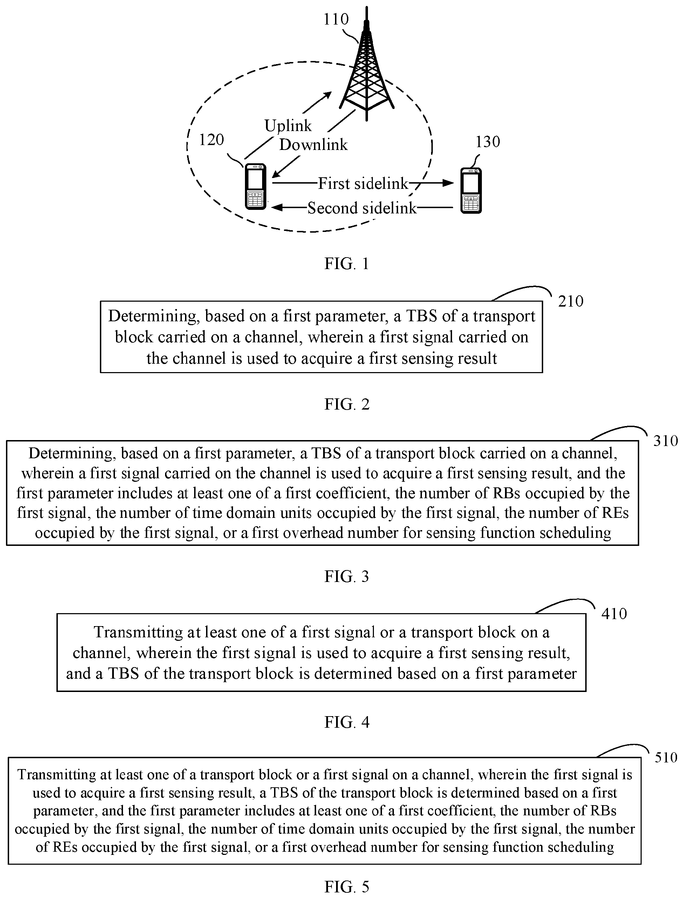

FIG. 1 illustrates a schematic diagram of a wireless communication system according to some embodiments of the present disclosure. The wireless communication system includes a network device 110 and a terminal device 120, and/or a terminal device 120 and a terminal device 130, which is not limited in the present disclosure.

The network device 110 in the present disclosure provides wireless communication functions. The network device 110 includes but is not limited to: an evolved Node-B (eNB), a radio network controller (RNC), a Node-B (NB), a base station controller (BSC), a base transceiver station (BTS), a home base station (e.g., a home evolved Node B or a home Node-B, HNB), a baseband unit (BBU), an access point (AP) in a wireless fidelity (Wi-Fi) system, a wireless relay node, a wireless backhaul node, a transmission point (TP) or a transmission and reception point (TRP), or the like. The network device 110 may also be a next generation Node-B (gNB) or a transmission point (TRP or TP) in a 5th generation (5G) mobile communication system, one or a group of (including a plurality of antenna panels) antenna panels of a base station in the 5G system, a network node constituting a gNB or a transmission point, such as a BBU or a distributed unit (DU), or a base station in a beyond-fifth generation (B5G) or 6th generation (6G) mobile communication system, or the like. The network device 110 may refer to a core network (CN), fronthaul, backhaul, a radio access network (RAN), a network slice, or the like; or a serving cell, a primary cell (PCell), a primary secondary cell (PSCell), a special cell (SpCell), a secondary cell (SCell), or a neighboring cell of the terminal device, or the like.

The terminal device 120 and/or the terminal device 130 in the present disclosure is also referred to as a UE, an access terminal, a subscriber unit, a subscriber station, a mobile site, a mobile station, a remote station, remote terminal, a mobile device, a user terminal, a terminal, a wireless communication device, a user agent, or a user device. The terminal device includes but is not limited to: a handheld device, a wearable device, a vehicle-mounted device, and an Internet of things (IoT) device, such as a mobile phone, a tablet computer, an e-book reader, a laptop computer, a desktop computer, a TV, a game console, a mobile Internet device (MID), an augmented reality (AR) terminal, a virtual reality (VR) terminal, a mixed reality (MR) terminal, a wearable device, a handle, an electronic tag, a controller, a wireless terminal in industrial control, a wireless terminal in self-driving, a wireless terminal in remote medical technology, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a wireless local loop (WLL) station, a personal digital assistant (PDA), a set-top box (STB), or a customer premises equipment (CPE), or the like.

The network device 110 and the terminal device 120 communicate with each other via an air interface technology, such as a Uu interface.

In some embodiments, two communication scenarios are present between the network device 110 and the terminal device 120, namely, an uplink communication scenario and a downlink communication scenario. The uplink communication refers to signal transmission to the network device 110. The downlink communication refers to signal transmission to the terminal device 120.

The terminal device 120 and the terminal device 130 communicate with each other via direct communication interface, such as a PC5 interface.

In some embodiments, two communication scenarios are present between the terminal device 120 and the terminal device 130, namely, a first sidelink communication scenario and a second sidelink communication scenario. The first sidelink communication refers to transmitting signals to the terminal device 130. The second sidelink communication refers to transmitting signals to the terminal device 120.

Both the terminal device 120 and the terminal device 130 are within the network coverage and located in the same cell, or both the terminal device 120 and the terminal device 130 are within the network coverage but located in different cells, or the terminal device 120 is within the network coverage but the terminal device 130 is outside the network coverage.

The technical solutions according to the embodiments of the present disclosure is applicable to various communication systems, such as, a global system of mobile communication (GSM) system, a code-division multiple access (CDMA) system, a wideband code-division multiple access (WCDMA) system, a general packet radio service (GPRS), a long-term evolution (LTE) system, an LTE frequency-division duplex (FDD) system, an LTE time-division duplex (TDD) system, an advanced long-term evolution (LTE-A) system, a universal mobile telecommunication system (UMTS), a worldwide interoperability for microwave access (WiMAX) communication system, a 5G mobile communication system, a new radio (NR) system, an evolved system of the NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN), a Wi-Fi system, a cellular IoT system, or a cellular passive IoT system. The technical solutions according to the embodiments of the present disclosure may also be applied to an evolved system of the 5G NR system, as well as B5G, 6G and subsequent evolved systems. In some embodiments of the present disclosure, "NR" may also be referred to as a 5G NR system or a 5G system. The 5G mobile communication system may include non-standalone (NSA) and/or standalone (SA).

The technical solutions according to the embodiments of the present disclosure may also be applied to a machine-type communication (MTC), a long-erm evolution-machine (LTE-M), a device-to-device (D2D) network, a machine-to-machine (M2M) network, an IoT network or other networks. The IoT network may include, for example, a vehicle-to-everything (V2X) network. Communication methods in a V2X network system are collectively referred to as vehicle-to-X (i.e., V2X, where X represents any object). For example, the V2X may include: vehicle-to-vehicle (V2V) communications, vehicle-to-infrastructure (V2I) communications, vehicle-to-pedestrian (V2P) communications, or vehicle-to-network (V2N) communications, or the like.

The wireless communication system according to the embodiments of the present disclosure is applicable to, but not limited to, at least one of: an uplink communication scenario, a downlink communication scenario, or a sidelink communication scenario.

It should be noted that, in the present disclosure, a bandwidth used for a downlink channel, a bandwidth configured for the downlink channel, a bandwidth used for downlink transmission, a bandwidth used for downlink data transmission, a bandwidth occupied by a downlink transmission resource, and the like have the same or similar meaning. Similarly, a bandwidth used for an uplink channel, a bandwidth configured for the uplink channel, a bandwidth used for uplink transmission, a bandwidth used for uplink data transmission, a bandwidth occupied by an uplink transmission resource, and the like have the same or similar meaning. Similarly, a bandwidth used for a sidelink channel, a bandwidth configured for the sidelink channel, a bandwidth used for sidelink transmission, a bandwidth used for sidelink data transmission, a bandwidth occupied by a sidelink transmission resource, and the like have the same or similar meaning.

FIG. 2 illustrates a schematic flowchart of a method for transmitting a channel according to some embodiments of the present disclosure. A schematic illustration will be provided by taking the execution of the method by a first node as an example. The method includes at least part of the following process.

**In process 210,** a TBS of a transport block carried on a channel is determined based on a first parameter, wherein a first signal carried on the channel is used to acquire a first sensing result.

In some embodiments, determining, based on the first parameter, the TBS of the transport block carried on the channel should also be understood as determining, based on the first parameter, the TBS corresponding to the channel.

In some embodiments, the first parameter includes at least one of:

·a first coefficient, wherein the value of the first coefficient is greater than 1 or greater than 0 and less than 1;
·the number of RBs occupied by the first signal;
the number of time-domain units occupied by the first signal;
·the number of REs occupied by the first signal; or
·a first overhead amount for sensing function scheduling.

In some embodiments, the channel is a physical channel or a data channel.

In some embodiments, the channel is a downlink physical channel; or the channel is an uplink physical channel; or the channel is a sidelink physical channel.

In some embodiments, the channel is a PDSCH, a PUSCH, or a physical sidelink shared channel (PSSCH).

In some embodiments, the channel is a channel configured for use by a terminal device. In some embodiments, the channel configuration is dynamic configuration or semi-static configuration with the granularity being a terminal device.

In some embodiments, the channel is a channel configured for use by the first node.

In some embodiments, the channel is used to transmit data, or the channel is used to transmit the first signal, or the channel is used to transmit data and the first signal.

The first node is a receiver of the transport block and/or the first signal, or the first node is referred to as a receiver of the channel. In some embodiments, in a downlink scenario, a receiver refers to a terminal device; in an uplink scenario, a receiver refers to a network device; and in a sidelink scenario, a receiver refers to a second terminal device.

In the present disclosure, the sensing result includes at least one of: a detection result of a target, a detection result of an environment, a recognition result of a target, a recognition result of an environment, a measurement result of a target, or a measurement result of an environment. The measurement includes at least one operation of measuring a distance, measuring a delay, measuring an angle, measuring a moving speed, measuring a phase, or the like.

In some embodiments, the sensing is equivalent to or replaced with at least one of: positioning, ranging, speed measurement, angle measurement, target imaging, target detection, target tracking, or target recognition.

In summary, in the method according to the embodiments of the present disclosure, the sensing requirement is satisfied using the first signal carried on the channel. Meanwhile, considering that in a case where the channel occupies more time-frequency resources to satisfy the sensing requirement, a TBS of the transport block carried on the channel increases accordingly, a solution of determining the TBS based on the first parameter is designed to ensure the wireless communication quality. Compared with filling a large number of dummy bits in a transport block with an increased TBS, in the method according to the embodiments of the present disclosure, a code rate, an amount of intermediate information, and the like that are transmitted on a channel are adjusted using the first parameter, such that the transport block with the increased TBS carries more valid bits instead of the large number of dummy bits, thereby reducing transmission of dummy bits on the channel, improving reliability, robustness, and efficiency of channel transmission, and implementing both a sensing requirement and a communication requirement.

In some embodiments, process 210 is implemented as process 310, as illustrated in FIG. 3. FIG. 3 illustrates a schematic flowchart of a method for transmitting a channel according to some embodiments of the present disclosure. A schematic illustration will be provided by taking the execution of the method by a first node as an example. The method includes at least part of the following process.

**In process 310,** a TBS of a transport block carried on a channel is determined based on a first parameter, wherein a first signal carried on the channel is used to acquire a first sensing result, and the first parameter includes at least one of a first coefficient, the number of RBs occupied by the first signal, the number of time-domain units occupied by the first signal, the number of REs occupied by the first signal, or a first overhead amount for sensing function scheduling.

In some embodiments, the first parameter includes the first coefficient. Or the first parameter includes the first overhead amount for sensing function scheduling. Or the first parameter includes the number of the RBs occupied by the first signal and the number of the time-domain units occupied by the first signal. Or the first parameter includes the number of the REs occupied by the first signal. Or the first parameter includes the number of the RBs occupied by the first signal and the number of the REs occupied by the first signal.

In some embodiments, the value of the first coefficient is greater than 1 or greater than 0 and less than 1.

In some embodiments, the first parameter includes the first coefficient. The TBS is determined based on a product of the first coefficient and a first number; or the TBS is determined based on a quotient of the first number and the first coefficient.

The quotient of the first number and the first coefficient is a result of dividing the first number by the first coefficient.

In some embodiments, the value of the first number is determined based on at least one of: a first code rate, a modulation order, the number of transmission layers, the number of first REs, or a first product.

The first product is a product of at least two of the first code rate, the modulation order, the number of the transmission layers, and the number of the first REs, and the number of the first REs is less than or equal to the number of REs in a time-frequency resource allocated to the channel.

In some embodiments, the value of the first number is equal to the value of the first product, and the first product is a product of the first code rate, the modulation order, the number of the transmission layers, and the number of the first REs. The TBS is determined based on a product of the first coefficient and the first product, or the TBS is determined based on a quotient of the first product and the first coefficient.

The quotient of the first product and the first coefficient is a result of dividing the first product by the first coefficient.

In some embodiments, the value of the first number is determined based on the first code rate. The TBS is determined based on a second code rate, wherein the second code rate is a product or a quotient of the first code rate and the first coefficient.

The quotient of the first code rate and the first coefficient is a result of dividing the first code rate by the first coefficient.

In some embodiments, the value of the first number is further determined based on the modulation order, the number of the transmission layers, and the number of the first REs. The TBS is determined based on a product of a second code rate, the modulation order, the number of the transmission layers, and the number of the first REs.

In some embodiments, the TBS is determined based on the number of second REs, wherein the number of the second REs is determined based on the first parameter. The number of the second REs is less than or equal to the number of REs in a time-frequency resource allocated to a channel.

In some embodiments, the first parameter includes at least one of the number of the RBs occupied by the first signal, the number of the time-domain units occupied by the first signal, the number of the REs occupied by the first signal, or the first overhead amount.

In some embodiments, the TBS is determined based on a product of the number of the second REs, the first code rate, the modulation order, and the number of the transmission layers.

In some embodiments, the number of the second REs is less than the number of the first REs.

In some embodiments, the number of the second REs is a difference between the number of the first REs and the number of REs occupied by the first signal.

In some embodiments, the first signal includes at least one of:

·a demodulation reference signal (DMRS);
·a sounding reference signal (SRS);
·an enhanced-SRS (E-SRS);
·a carrier phase reference signal (CPRS); or
·a channel state information reference signal (CSI-RS).

In some embodiments, the first signal is implemented as any one or more REs. Or the first signal is a signal formed by any one or more REs. Or the first signal is a signal carried on any one or more REs.

In some embodiments, the first signal is a data signal. Or the first signal is a signal in a transport block.

In some embodiments, the first signal includes both a data signal and one or more of a DMRS, an SRS, an E-SRS, a CPRS, and a CSI-RS.

In some embodiments, the first parameter is indicated by at least one of downlink control information (DCI) or higher layer signaling.

In some embodiments, the first node receives at least one of the transport block or the first signal on the channel.

In some embodiments, one or more channels are provided.

The first node is a receiver of the transport block and/or the first signal, or the first node is referred to as a receiver of the channel. In some embodiments, in a downlink scenario, a receiver refers to a terminal device; in an uplink scenario, a receiver refers to a network device; and in a sidelink scenario, a receiver refers to a second terminal device.

In the present disclosure, the sensing result includes at least one of: a detection result of a target, a detection result of an environment, a recognition result of a target, a recognition result of an environment, a measurement result of a target, or a measurement result of an environment. The measurement includes at least one operation of measuring a distance, measuring a delay, measuring an angle, measuring a moving speed, measuring a phase, or the like.

In some embodiments, the sensing is equivalent to or replaced with at least one of: positioning, ranging, speed measurement, angle measurement, target imaging, target detection, target tracking, or target recognition.

In summary, in the method according to the embodiments of the present disclosure, the sensing requirement is satisfied using the first signal carried on the channel. Meanwhile, considering that in a case where the channel occupies more time-frequency resources to satisfy the sensing requirement, a TBS of the transport block carried on the channel increases accordingly, a solution of determining the TBS based on the first parameter is designed to ensure the wireless communication quality. Compared with filling a large number of dummy bits in a transport block with an increased TBS, in the method according to the embodiments of the present disclosure, a code rate, an amount of intermediate information, and the like that are transmitted on a channel are adjusted using the first parameter, such that the transport block with the increased TBS carries more valid bits instead of the large number of dummy bits, thereby reducing transmission of dummy bits on the channel, improving reliability, robustness, and efficiency of channel transmission, and implementing both a sensing requirement and a communication requirement. In addition, a plurality of configurations of the first parameter are supported, and a plurality of methods for determining the TBS based on the first parameter are provided. In this way, implementability and robustness of the method according to the embodiments of the present disclosure are improved, and TBS determination requirements in different communication scenarios can be satisfied, thereby ensuring both wireless communication quality and a sensing requirement in different communication scenarios.

FIG. 4 illustrates a schematic flowchart of a method for transmitting a channel according to some embodiments of the present disclosure. A schematic illustration will be provided by taking the execution of the method by a second node as an example. The method includes at least part of the following process.

**In process 410,** at least one of a first signal or a transport block is transmitted on a channel, wherein the first signal is used to acquire a first sensing result, and a TBS of the transport block is determined based on a first parameter.

In some embodiments, the TBS of the transport block being determined based on the first parameter should also be understood as that the TBS corresponding to the channel is determined based on the first parameter.

In some embodiments, the first parameter includes at least one of:

·a first coefficient, wherein the value of the first coefficient is greater than 1 or greater than 0 and less than 1;
·the number of RBs occupied by the first signal;
the number of time-domain units occupied by the first signal;
·the number of REs occupied by the first signal; or
·a first overhead amount for sensing function scheduling.

In some embodiments, the channel is a physical channel or a data channel.

In some embodiments, the channel may be a downlink physical channel, such as PDSCH; the channel may be an uplink physical channel, such as PUSCH; or the channel may be a sidelink physical channel, such as PSSCH.

In some embodiments, the channel is a channel configured for use by a terminal device. In some embodiments, the channel configuration is dynamic configuration or semi-static configuration with the granularity being a terminal device.

In some embodiments, the channel is used to transmit data, or the channel is used to transmit the first signal, or the channel is used to transmit data and the first signal.

The second node is a transmitter of at least one of the transport block or the first signal, or the second node is referred to as a transmitter of the channel. In some embodiments, in a downlink scenario, the transmitter refers to a network device; in an uplink scenario, the transmitter refers to a terminal device; and in a sidelink scenario, the transmitter refers to a first terminal device.

In the present disclosure, the sensing result includes at least one of: a detection result of a target, a detection result of an environment, a recognition result of a target, a recognition result of an environment, a measurement result of a target, or a measurement result of an environment. The measurement includes at least one operation of measuring a distance, measuring a delay, measuring an angle, measuring a moving speed, measuring a phase, or the like.

In some embodiments, the sensing is equivalent to or replaced with at least one of: positioning, ranging, speed measurement, angle measurement, target imaging, target detection, target tracking, or target recognition.

In summary, in the method according to the embodiments of the present disclosure, the sensing requirement is satisfied using the first signal carried on the channel. Meanwhile, considering that in a case where the channel occupies more time-frequency resources to satisfy the sensing requirement, a TBS of the transport block carried on the channel increases accordingly, a solution of determining the TBS based on the first parameter is designed to ensure the wireless communication quality. Compared with filling a large number of dummy bits in a transport block with an increased TBS, in the method according to the embodiments of the present disclosure, a code rate, an amount of intermediate information, and the like that are transmitted on a channel are adjusted using the first parameter, such that the transport block with the increased TBS carries more valid bits instead of the large number of dummy bits, thereby reducing transmission of dummy bits on the channel, improving reliability, robustness, and efficiency of channel transmission, and implementing both a sensing requirement and a communication requirement.

In some embodiments, process 410 is implemented as process 510, as illustrated in FIG. 5. FIG. 5 illustrates a schematic flowchart of a method for transmitting a channel according to some embodiments of the present disclosure. A schematic illustration will be provided by taking the execution of the method by a second node as an example. The method includes at least part of the following process.

**In process 510,** at least one of a transport block or a first signal is transmitted on a channel, wherein the first signal is used to acquire a first sensing result, a TBS of the transport block is determined based on a first parameter, wherein the first parameter includes at least one of a first coefficient, the number of RBs occupied by the first signal, the number of time-domain units occupied by the first signal, the number of REs occupied by the first signal, or a first overhead amount for sensing function scheduling.

In some embodiments, the first parameter includes the first coefficient. Or the first parameter includes the first overhead amount for sensing function scheduling. Or the first parameter includes the number of the RBs occupied by the first signal and the number of the time-domain units occupied by the first signal. Or the first parameter includes the number of the REs occupied by the first signal. Or the first parameter includes the number of the RBs occupied by the first signal and the number of the REs occupied by the first signal.

In some embodiments, the value of the first coefficient is greater than 1 or greater than 0 and less than 1.

In some embodiments, the first parameter includes the first coefficient. The TBS is determined based on a product of the first coefficient and a first number; or the TBS is determined based on a quotient of the first number and the first coefficient.

In some embodiments, the value of the first number is determined based on at least one of: a first code rate, a modulation order, the number of transmission layers, the number of first REs, or a first product.

The first product is a product of at least two of the first code rate, the modulation order, the number of the transmission layers, and the number of the first REs, and the number of the first REs is less than or equal to the number of REs in a time-frequency resource allocated to the channel.

In some embodiments, the value of the first number is equal to the value of the first product, and the first product is a product of the first code rate, the modulation order, the number of the transmission layers, and the number of the first REs. The TBS is determined based on a product of the first coefficient and the first product, or the TBS is determined based on a quotient of the first product and the first coefficient.

In some embodiments, the value of the first number is determined based on the first code rate. The TBS is determined based on a second code rate, wherein the second code rate is a product or a quotient of the first code rate and the first coefficient.

In some embodiments, the value of the first number is further determined based on the modulation order, the number of the transmission layers, and the number of the first REs. The TBS is determined based on a product of a second code rate, the modulation order, the number of the transmission layers, and the number of the first REs.

In some embodiments, the TBS is determined based on the number of second REs, wherein the number of the second REs is determined based on the first parameter. The number of the second REs is less than or equal to the number of REs in a time-frequency resource allocated to a channel.

In some embodiments, the first parameter includes at least one of the number of the RBs occupied by the first signal, the number of the time-domain units occupied by the first signal, the number of the REs occupied by the first signal, or the first overhead amount.

In some embodiments, the TBS is determined based on a product of the number of the second REs, the first code rate, the modulation order, and the number of the transmission layers.

In some embodiments, the number of the second REs is less than the number of the first REs.

In some embodiments, the number of the second REs is a difference between the number of the first REs and the number of REs occupied by the first signal.

In some embodiments, the first signal includes at least one of: a DMRS, an SRS, an E-SRS, a CPRS, or a CSI-RS.

In some embodiments, the first signal is implemented as any one or more REs. Or the first signal is a signal formed by any one or more REs. Or the first signal is a signal carried on any one or more REs.

In some embodiments, the first signal is a data signal. Or the first signal is a signal in a transport block.

In some embodiments, the first parameter is indicated by at least one of DCI or higher layer signaling.

In some embodiments, one or more channels are provided.

The second node is a transmitter of at least one of the transport block or the first signal, or the second node is referred to as a transmitter of the channel. In some embodiments, in a downlink scenario, the transmitter refers to a network device; in an uplink scenario, the transmitter refers to a terminal device; and in a sidelink scenario, the transmitter refers to a first terminal device.

In the present disclosure, the sensing result includes at least one of: a detection result of a target, a detection result of an environment, a recognition result of a target, a recognition result of an environment, a measurement result of a target, or a measurement result of an environment. The measurement includes at least one operation of measuring a distance, measuring a delay, measuring an angle, measuring a moving speed, measuring a phase, or the like.

In some embodiments, the sensing is equivalent to or replaced with at least one of: positioning, ranging, speed measurement, angle measurement, target imaging, target detection, target tracking, or target recognition.

In summary, in the method according to the embodiments of the present disclosure, the sensing requirement is satisfied using the first signal carried on the channel. Meanwhile, considering that in a case where the channel occupies more time-frequency resources to satisfy the sensing requirement, a TBS of the transport block carried on the channel increases accordingly, a solution of determining the TBS based on the first parameter is designed to ensure the wireless communication quality. Compared with filling a large number of dummy bits in a transport block with an increased TBS, in the method according to the embodiments of the present disclosure, a code rate, an amount of intermediate information, and the like that are transmitted on a channel are adjusted using the first parameter, such that the transport block with the increased TBS carries more valid bits instead of the large number of dummy bits, thereby reducing transmission of dummy bits on the channel, improving reliability, robustness, and efficiency of channel transmission, and implementing both a sensing requirement and a communication requirement.

Considering that processes performed by the terminal device and the network device are not completely the same, the following respectively describes the method for transmitting a channel illustrated in FIG. 2, FIG. 3, FIG. 4, or FIG. 5 from a perspective of the terminal device and a perspective of the network device.

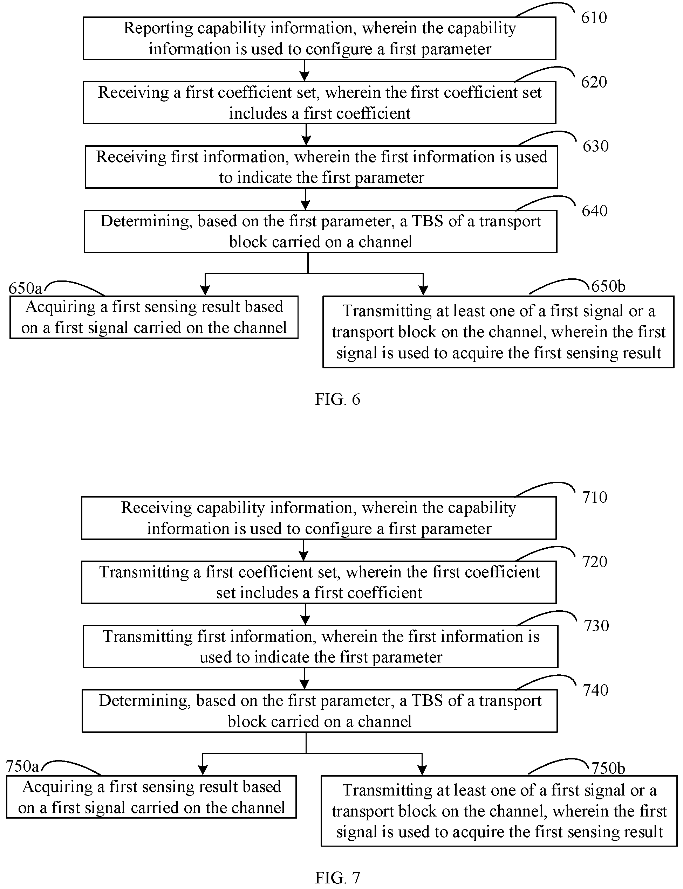

In some embodiments, process 210 or process 310 is implemented as process 650a, and process 410 or process 510 is implemented as process 650b. In addition to process 650a or 650b, the method for transmitting a channel further includes at least one of process 610, process 620, process 630, or process 640. As illustrated in FIG. 6, FIG. 6 illustrates a schematic flowchart of a method for transmitting a channel according to some embodiments of the present disclosure. A schematic illustration will be provided by taking the execution of the method by a terminal device as an example. The terminal device is implemented as the first node illustrated in FIG. 2 or FIG. 3, or the terminal device is implemented as the second node illustrated in FIG. 4 or FIG. 5. The method includes at least part of the following processes.

**In process 610,** capability information is reported, wherein the capability information is used to configure a first parameter.

The terminal device reports its own capability information to the network device. Subsequent to receiving the capability information, the network device configures, based on the capability information, the first parameter for the terminal device. In some embodiments, the capability information includes at least one of: a bandwidth supported by the terminal device, a bandwidth part (BWP) supported by the terminal device, a communication requirement of the terminal device, or a sensing requirement of the terminal device.

In some embodiments, the first parameter includes at least one of:

- a first coefficient, wherein the value of the first coefficient is greater than 1 or greater than 0 and less than 1;
- the number of RBs occupied by the first signal;
- the number of time-domain units occupied by the first signal;
- the number of REs occupied by the first signal; or
- a first overhead amount for sensing function scheduling.

The first coefficient is alternatively referred to as a scaling factor, an extension factor, an adjustment factor, a scaling coefficient, an extension coefficient, or an adjustment coefficient.

In the present disclosure, the time-domain unit includes at least one of a frame, a subframe, a slot, a mini-slot, a subslot, a symbol, a symbol group, or a unit based on another time-domain unit.

In the present disclosure, to distinguish from other overhead amounts, an overhead amount for sensing kinetic energy scheduling is referred to as a first overhead amount.

In some embodiments, the overhead amount for sensing function scheduling should also be understood as an overhead amount related to a sensing signal, an overhead amount related to a sensing task, an overhead amount related to a sensing operation, or an overhead amount related to a sensing target.

In some embodiments, the first signal includes at least one of: a DMRS, an SRS, an E-SRS, a CPRS, or a CSI-RS.

In some embodiments, the first signal is implemented as any one or more REs. Or the first signal is a signal formed by any one or more REs. Or the first signal is a signal carried on any one or more REs.

In some embodiments, the first signal is a data signal. Or the first signal is a signal in a transport block.

In some embodiments, the first signal is a signal that performs a sensing service, or a signal that performs a sensing operation, or a signal that implements a sensing target, or a signal that acquires a sensing result, or a signal that performs a sensing service designed in the future, or a signal that performs a sensing operation designed in the future, or a signal that implements a sensing target designed in the future, or a signal that acquires a sensing result designed in the future.

In some embodiments, the RBs occupied by the first signal are continuous or discontinuous, and the RBs occupied by the first signal correspond to one or more carriers. It should also be understood that the first signal occupies RBs on one or more carriers, wherein the number of RBs occupied by the first signal on different carriers may be the same or different, and the RBs are adjacent or spaced apart from each other.

The first parameter configured based on the reported capability information can further improve the sensing precision of the first signal carried on the channel, and can further improve the transmission efficiency and the receiving efficiency of the transport block on the channel.

**In process 620,** a first coefficient set is received, wherein the first coefficient set includes a first coefficient.

The first coefficient set is transmitted by the network device to the terminal device, and the first coefficient set includes one or more set elements.

In some embodiments, the first coefficient set is configured by the network device; or the first coefficient set is configured by the network device based on the capability information reported by the terminal device; or the first coefficient set is defined by a communication protocol.

**In process 630,** first information is received, wherein the first information is used to indicate a first parameter.

In some embodiments, the first parameter is indicated by DCI, and the first information includes the DCI.

In some embodiments, the first parameter is indicated by higher layer signaling, and the first information includes the higher layer signaling.

In some embodiments, the first parameter is indicated by the DCI and the higher layer signaling, and the first information includes the DCI and the higher layer signaling.

In some embodiments, the first information includes a first coefficient field, wherein the first coefficient field is used to indicate a value of a first coefficient F. In some embodiments, the first coefficient field corresponds to m bits, wherein m is an integer greater than or equal to 0.

In some embodiments, a mapping relationship or a one-to-one correspondence is present between the value of the first coefficient field and the value of the first coefficient. For example, in a case where the bit codeword of the first coefficient field is a first codeword, the value of the first coefficient is a first value. In some embodiments, in a case where the bit codeword of the first coefficient field is p1, the value of the first coefficient is q1; and in a case where the bit codeword of the first coefficient field is p2, the value of the first coefficient is q2, wherein p1 is different from p2, q1 is different from q2, and both q1 and q2 belong to the first coefficient set.

**In process 640,** the TBS of the transport block carried on the channel is determined based on the first parameter.

In some embodiments, at least one of the first signal or the transport block is transmitted by the network device to the terminal device, or the channel is transmitted by the network device to the terminal device. Prior to receiving the transport block, the terminal device determines the TBS of the transport block based on the first parameter.

In some embodiments, at least one of the first signal or the transport block is transmitted by the terminal device to the network device, or the channel is transmitted by the terminal device to the network device. Prior to transmitting the transport block, the terminal device determines, based on the first parameter, the TBS of the transport block.

The present disclosure includes at least the following three manners of determining the TBS.

1. First manner of determining the TBS:

In some embodiments, the TBS is determined based on a product of the first number and the first coefficient; or

the TBS is determined based on a quotient of the first number and the first coefficient.

In some embodiments, the value of the first number is equal to the value of the first product, and the first product is a product of the first code rate, the modulation order, the number of the transmission layers, and the number of the first REs.

In some embodiments, the first coefficient is F, the first code rate is R1, the modulation order is $Q_m$, the number of the transmission layers is $\upsilon$, the number of the first REs is $N_{RE}1$, and the first product is $N_{info}1 = N_{RE}1 \times R1 \times Q_m \times \upsilon$.

Taking determining the TBS based on $N_{info}1 \times F$ as an example, in a case where $N_{info}1 \times F \le X$, the TBS is determined by quantizing and looking up a table; and in a case where $N_{info}1 \times F >$

X, the TBS is determined by quantitative calculating. X is a positive integer defined by a communication protocol. In some embodiments, X = 3824, and in addition, X may be larger or smaller than 3824.

Taking determining the TBS based on $N_{info}1 / F$ as an example, in a case where $N_{info}1 / F \le X$, the TBS is determined by quantizing and looking up a table; and in a case where $N_{info}1 / F > X$, the TBS is determined by quantitative calculating. X is a positive integer defined by a communication protocol. In some embodiments, X = 3824, and in addition, X may be larger or smaller than 3824.

In some embodiments, the TBS is determined based on a table lookup manner or a calculation manner in a related section of a 3GPP related protocol.

In some embodiments, the number of the first REs is less than or equal to the number of REs in the time-frequency resource allocated to the channel.

In some embodiments, $N_{RE}1 = min(156, N'_{RE}1) \times n_{PRB}$, $n_{PRB}$ represents the number of PRBs allocated by the network device to the channel, and $N'_{RE}1$ represents the number of REs in one PRB allocated by the network device.

In some embodiments, $$N'_{RE}1 = N^{RB}_{sc} \times N^{sh}_{symb} - N^{PRB}_{DMRS} - N^{PRB}_{oh},$$

wherein $N^{RB}_{sc} = 12$, which represents the number of subcarriers in one PRB; $N^{sh}_{symb}$ represents the number of symbols occupied by the channel within one slot; $N^{PRB}_{DMRS}$ represents the number of REs occupied by a DMRS in one PRB; and $N^{PRB}_{oh}$ represents the number of overhead REs configured in one PRB. In some embodiments, the number of overhead REs includes the number of REs occupied by control information such as a synchronization channel, a PBCH, a PDCCH, and a PUCCH. In some embodiments, the number of overhead REs includes, but is not limited to, the number of REs occupied by a reference resource such as a CSI-RS and a CORESET.

2. Second manner of determining the TBS:

In some embodiments, the TBS is determined based on a product of the first code rate and the first coefficient; or the TBS is determined based on a quotient of the first code rate and the first coefficient.

In some embodiments, the value of the first number is further determined based on the modulation order, the number of the transmission layers, and the number of the first REs. The TBS is determined based on a product of the product of the first code rate and the first coefficient, the modulation order, the number of the transmission layers, and the number of the first REs, or the TBS is determined based on a product of the quotient of the first code rate and the first coefficient, the modulation order, the number of the transmission layers, and the number of the first REs.

In some embodiments, the first code rate is R1, the modulation order is $Q_m$, the number of the transmission layers is $\upsilon$, the number of the first REs is $N_{RE}1$, and the first product is $N_{info}2 = N_{RE}1 \times R1 \times Q_m \times \upsilon$.

Taking determining the TBS based on $R1 \times F$ as an example, in a case where $R1 \times F \times N_{RE}1 \times Q_m \times \upsilon \le X$, the TBS is determined by quantizing and looking up a table; and in a case where $R1 \times F \times N_{RE}1 \times Q_m \times \upsilon > X$, the TBS is determined by quantitative calculating. X is a positive integer defined by a communication protocol. In some embodiments, X = 3824, and in addition, X may be larger or smaller than 3824.

Taking determining the TBS based on $R1 / F$ as an example, in a case where $R1 / F \times N_{RE}1 \times Q_m \times \upsilon \le X$, the TBS is determined by quantizing and looking up a table; and in a case where $R1 / F \times N_{RE}1 \times Q_m \times \upsilon > X$, the TBS is determined by quantitative calculating. X is a positive integer defined by a communication protocol. In some embodiments, X = 3824, and in addition, X may be larger or smaller than 3824.

In some embodiments, the TBS is determined based on a table lookup manner or a calculation manner in a related section of a 3GPP related protocol.

In some embodiments, the number of the first REs is less than or equal to the number of REs in the time-frequency resource allocated to the channel.

In some embodiments, $N_{RE}1 = min\left(156, N'_{RE}1\right) \times n_{PRB}$, wherein $n_{PRB}$ represents the number of PRBs allocated by the network device to the channel, and $N'_{RE}1$ represents the number of REs in one PRB allocated by the network device.

In some embodiments, $N'_{RE}1 = N^{RB}_{sc} \times N^{sh}_{symb} - N^{PRB}_{DMRS} - N^{PRB}_{oh}$ ,

wherein $N^{RB}_{sc} = 12$, which represents the number of subcarriers in one PRB; $N^{sh}_{symb}$ represents the number of symbols occupied by the channel within one slot; $N^{PRB}_{DMRS}$ represents the number of REs occupied by a DMRS in one PRB; and $N^{PRB}_{oh}$ represents the number of overhead REs configured in one PRB. In some embodiments, the number of overhead REs includes the number of REs occupied by control information such as a synchronization channel, a PBCH, a PDCCH, and a PUCCH. In some embodiments, the number of overhead REs includes the number of REs occupied by a reference resource such as a CSI-RS and a CORESET.

3. Third manner of determining the TBS:

In some embodiments, the TBS is determined based on the number of second REs, wherein the number of second REs is determined based on the first parameter. The first parameter includes at least one of the number of the RBs occupied by the first signal, the number of the time-domain units occupied by the first signal, the number of the REs occupied by the first signal, or the first overhead amount. The number of the second REs is less than or equal to the number of REs in a time-frequency resource allocated to the channel.

In some embodiments, the first code rate is R1, the modulation order is $Q_m$, the number of the transmission layers is $\upsilon$, and the number of the second REs is $N_{RE}2$.

Taking determining the TBS based on $R1 \times N_{RE}2 \times Q_m \times \upsilon$ as an example, in a case where $R1 \times N_{RE}2 \times Q_m \times \upsilon \leq X$, the TBS is determined by quantizing and looking up a table; and in a case where $R1 \times N_{RE}2 \times Q_m \times \upsilon > X$, the TBS is determined by quantitative calculating. X is a positive integer defined by a communication protocol. In some embodiments, X = 3824, and in addition, X may be larger or smaller than 3824.

In some embodiments, the TBS is determined based on a table lookup manner or a calculation manner in a related section of a 3GPP related protocol.

Next, four manners of determining the number of second REs are provided.

(1) First manner of determining the number of second REs:

In some embodiments, the first parameter includes the number of REs occupied by the first signal $N^{PRB}_1$ , that is, the number of REs occupied by the first signal in one PRB.

In some embodiments, $N'_{RE}2 = N^{RB}_{sc} \times N^{sh}_{symb} - N^{PRB}_{DMRS} - N'^{PRB}_{oh} - N^{PRB}_1$ , and

$N_{RE}2 = min\left(156, N'_{RE}2\right) \times n_{PRB}$ . For a meaning or a value of each parameter, reference may be made to related content described above. Details are not elaborated herein.

(2) Second manner of determining the number of second REs:

In some embodiments, the first parameter includes a first overhead amount $N'^{PRB}_{oh}$ .

In some embodiments, the first overhead amount is a total overhead amount for sensing function scheduling, and the first overhead amount includes the number of REs occupied by control information such as a synchronization channel, a PBCH, a PDCCH, and a PUCCH, and the number of REs occupied by control information for a sensing service or a first signal. Alternatively, the first overhead amount includes the number of REs occupied by a reference resource such as a CSI-RS and a CORESET, and the number of REs occupied by control information for a sensing service or a first signal.

In some embodiments , $N'_{RE}2 = N^{RB}_{sc} \times N^{sh}_{symb} - N^{PRB}_{DMRS} - N'^{PRB}_{oh}$ , and

$N_{RE}2 = min\left(156, N'_{RE}2\right) \times n_{PRB}$ . For a meaning or a value of each parameter, reference may be made to related content described above. Details are not elaborated herein.

In some embodiments, the first overhead amount is an overhead amount for sensing function scheduling other than $N_{oh}^{PRB}$, and the first overhead amount includes the number of REs occupied by control information for a sensing service or a first signal.

In some embodiments, $N'_{RE}2 = N_{sc}^{RB} \times N_{symb}^{sh} - N_{DMRS}^{PRB} - N_{oh}^{PRB} - N_{oh}'^{PRB}$, and $N_{RE}2 = min\left(156, N'_{RE}2\right) \times n_{PRB}$. For a meaning or a value of each parameter, reference may be made to related content described above. Details are not elaborated herein.

(3) Third manner of determining the number of second REs:

In some embodiments, the first parameter includes the number of RBs occupied by the first signal $n'_{PRB}$ and the number of time-domain units occupied by the first signal $N_{symb}^1$.

In some embodiments, $N'_{RE}2 = N_{sc}^{RB} \times \left(N_{symb}^{sh} - N_{symb}^1\right) - N_{DMRS}^{PRB} - N_{oh}^{PRB}$, and $N_{RE}2 = min\left(156, N'_{RE}2\right) \times \left(n_{PRB} - n'_{PRB}\right)$. For a meaning or a value of each parameter, reference may be made to related content described above. Details are not elaborated herein.

(4) Fourth manner of determining the number of second REs:

In some embodiments, the first parameter includes the number of RBs occupied by the first signal $n'_{PRB}$ and the number of REs occupied by the first signal $N_1^{PRB}$.

In some embodiments, the number of REs in one RB that does not include the first signal is $N'_{RE}2_1 = N_{sc}^{RB} \times N_{symb}^{sh} - N_{DMRS}^{PRB} - N_{oh}^{PRB}$. The number of REs in one RB that includes the first signal is $N'_{RE}2_2 = N_{sc}^{RB} \times N_{symb}^{sh} - N_{DMRS}^{PRB} - N_{oh}^{PRB} - N_1^{PRB}$. Then, the number of the second REs is determined based on a sum of the number of the REs in all RBs that do not include the first signal and the number of all RBs that include the first signal, $N_{RE}2 = min\left(156, N'_{RE}2_1\right) \times \left(n_{PRB} - n'_{PRB}\right) + min\left(156, N'_{RE}2_2\right) \times n'_{PRB}$, or $N_{RE}2 = min\left(156, N'_{RE}2_1\right) \times n_{PRB} - N_1^{PRB} \times n'_{PRB}$.

It should be noted that the above three manners of determining the TBS may be used alone or in free combination. For example, the first parameter includes both the first coefficient and the first overhead amount; or the first parameter includes the number of RBs occupied by the first signal, the number of REs occupied by the first signal, and the first overhead amount; or the first parameter includes the number of RBs occupied by the first signal, the number of time-domain units occupied by the first signal, and the first overhead amount; or the first parameter includes the first coefficient, the number of RBs occupied by the first signal, the number of REs occupied by the first signal, and the first overhead amount; or the first parameter includes the first coefficient, the number of RBs occupied by the first signal, the number of time-domain units occupied by the first signal, and the first overhead amount.

**In process 650a,** a first sensing result is acquired based on a first signal carried on the channel.

In some embodiments, before process 650a is performed, the terminal device receives the first signal carried on the channel; or the terminal device receives the transport block carried on the channel, wherein the transport block includes the first signal; or the terminal device receives the first signal and the transport block that are carried on the channel.

In some embodiments, the terminal device acquires the first sensing result by measuring the first signal carried on the channel.

It should be understood that, in a case where at least one of the first signal or the transport block is transmitted by the network device to the terminal device, the terminal device acquires the first sensing result based on the first signal carried on the channel. That is, in a case where the terminal device belongs to the first node illustrated in FIG. 2 or FIG. 3, the terminal device performs process 650a.

**In process 650b,** at least one of the first signal or the transport block is transmitted on the channel, wherein the first signal acquires the first sensing result.

The TBS of the transport block carried on the channel is the TBS determined in process 640.

In some embodiments, the terminal device transmits the first signal on the channel; or the terminal device transmits the transport block on the channel, wherein the transport block includes the first signal; or the terminal device transmits the first signal and the transport block on the channel.

It should be understood that, in a case where at least one of the first signal or the transport block is transmitted by the terminal device to the network device, the network device acquires the first sensing result based on the first signal carried on the channel. That is, in a case where the terminal device belongs to the second node illustrated in FIG. 4 or FIG. 5, the terminal device performs process 650b.

In the present disclosure, the sensing result includes at least one of: a detection result of a target, a detection result of an environment, a recognition result of a target, a recognition result of an environment, a measurement result of a target, or a measurement result of an environment. The measurement includes at least one operation of measuring a distance, measuring a delay, measuring an angle, measuring a moving speed, measuring a phase, or the like.

In some embodiments, the sensing is equivalent to or replaced with at least one of: positioning, ranging, speed measurement, angle measurement, target imaging, target detection, target tracking, or target recognition.

It should be noted that the above processes 610, 620, 630, and 640 are optional processes. The execution order of the above processes may be adaptively adjusted based on actual circumstances. For example, process 620 is performed before process 610, or the like. The above processes may be combined. For example, process 610 is independently implemented as a method for reporting capability information, or process 620 is independently implemented as a configuration method, or process 630 is independently implemented as a configuration method, or process 640 is independently implemented as a method for determining a TBS, or process 610 and process 620 are combined to be implemented as a configuration method, or process 620 and process 630 are combined to be implemented as a configuration method, or process 610, process 620, and process 630 are combined to be implemented as a configuration method, or any one or more of process 610, process 620, process 630, and process 640 are combined with process 650a to be implemented as a sensing method, or any one or more of process 610, process 620, process 630, and process 640 are combined with process 650b to be implemented as a sensing method, or the like. The above processes may be split. For example, process 630 is split into a process of receiving first information that indicates a first parameter and a process of receiving first information that indicates a second parameter.

In summary, in the method according to the embodiments of the present disclosure, the sensing requirement is satisfied using the first signal carried on the channel. Meanwhile, considering that in a case where the channel occupies more time-frequency resources to satisfy the sensing requirement, a TBS of the transport block carried on the channel increases accordingly, a solution of determining the TBS based on the first parameter is designed to ensure the wireless communication quality. Compared with filling a large number of dummy bits in a transport block with an increased TBS, in the method according to the embodiments of the present disclosure, transmission parameters of the channel are effectively adjusted using the first parameter. For example, a code rate and an amount of intermediate information are reduced, such that the transport block with the increased TBS carries more valid bits instead of a large number of dummy bits, thereby reducing transmission of dummy bits in the channel, improving reliability, robustness, and efficiency of channel transmission, and implementing both a sensing requirement and a communication requirement. In addition, the terminal device is further supported to report the capability information to assist the network device in configuring the first parameter, such that the transport block/the first signal carried on the channel better conforms to a receiving capability of the terminal device, thereby improving the communication efficiency and transmission quality of a communication system.

In some embodiments, process 210 or process 310 is implemented as process 750a, and process 410 or process 510 is implemented as process 750b. In addition to process 750a or 750b, the method for transmitting a channel further includes at least one of process 710, process 720, process 730, or process 740. As illustrated in FIG. 7, FIG. 7 illustrates a schematic flowchart of a method for transmitting a channel according to some embodiments of the present disclosure. A schematic illustration will be provided by taking the execution of the method by a network device as an example. The network device is implemented as the second node illustrated in FIG. 4 or FIG. 5, or the network device is implemented as the first node illustrated in FIG. 2 or FIG. 3. The method includes at least part of the following processes.

In process 710, capability information is received, wherein the capability information configures a first parameter.

The network device receives the capability information reported by the terminal device. Subsequent to receiving the capability information, the network device configures, based on the capability information, the first parameter for the terminal device. In some embodiments, the capability information includes at least one of: a bandwidth supported by the terminal device, a BWP supported by the terminal device, a communication requirement of the terminal device, or a sensing requirement of the terminal device.

In some embodiments, the first parameter includes at least one of:

·a first coefficient, wherein the value of the first coefficient is greater than 1 or greater than 0 and less than 1;

·the number of RBs occupied by the first signal;

the number of time-domain units occupied by the first signal;

·the number of REs occupied by the first signal; or

·a first overhead amount for sensing function scheduling.

The first coefficient is alternatively referred to as a scaling factor, an extension factor, an adjustment factor, a scaling coefficient, an extension coefficient, or an adjustment coefficient.

In the present disclosure, the time-domain unit includes at least one of a frame, a subframe, a slot, a mini-slot, a subslot, a symbol, a symbol group, or a unit based on another time-domain unit.

In the present disclosure, to distinguish from other overhead quantities, an overhead amount for sensing kinetic energy scheduling is referred to as a first overhead amount.

In some embodiments, the overhead amount for sensing function scheduling should also be understood as an overhead amount related to a sensing signal, an overhead amount related to a sensing task, an overhead amount related to a sensing operation, or an overhead amount related to a sensing target.

In some embodiments, the first signal includes at least one of: a DMRS, an SRS, an E-SRS, a CPRS, or a CSI-RS.

In some embodiments, the first signal is implemented as any one or more REs. Or the first signal is a signal formed by any one or more REs. Or the first signal is a signal carried on any one or more REs.

In some embodiments, the first signal is a data signal. Or the first signal is a signal in a transport block.

In some embodiments, the first signal is a signal that performs a sensing service, or a signal that performs a sensing operation, or a signal that implements a sensing target, or a signal that acquires a sensing result, or a signal that performs a sensing service designed in the future, or a signal that performs a sensing operation designed in the future, or a signal that implements a sensing target designed in the future, or a signal that acquires a sensing result designed in the future.

In some embodiments, the RBs occupied by the first signal are continuous or discontinuous, and the RBs occupied by the first signal correspond to one or more carriers. It should also be understood that the first signal occupies RBs on one or more carriers, the number of RBs occupied by the first signal on different carriers may be the same or different, and the RBs are adjacent or spaced apart from each other.

The first parameter configured based on the reported capability information can further improve the sensing precision of the first signal carried on the channel, and can further improve the transmission efficiency and the receiving efficiency of the transport block on the channel.

**In process 720,** a first coefficient set is transmitted, wherein the first coefficient set includes the first coefficient.

The first coefficient set is transmitted by the network device to the terminal device, and the first coefficient set includes one or more set elements.

In some embodiments, the first coefficient set is configured by the network device; or the first coefficient set is configured by the network device based on the capability information reported by the terminal device; or the first coefficient set is defined by a communication protocol.

**In process 730,** first information is transmitted, wherein the first information indicates the first parameter.

In some embodiments, the first parameter is indicated by DCI, and the first information includes the DCI.

In some embodiments, the first parameter is indicated by higher layer signaling, and the first information includes the higher layer signaling.

In some embodiments, the first parameter is indicated by the DCI and the higher layer signaling, and the first information includes the DCI and the higher layer signaling.

For other content, reference may be made to process 630. Details are not elaborated herein any further.

**In process 740,** the TBS of the transport block carried on the channel is determined based on the first parameter.

In some embodiments, at least one of the first signal or the transport block is transmitted by the network device to the terminal device, or the channel is transmitted by the network device to the terminal device. Prior to transmitting the transport block, the network device determines, based on the first parameter, the TBS of the transport block.

In some embodiments, at least one of the first signal or the transport block is transmitted by the terminal device to the network device, or the channel is transmitted by the terminal device to the network device. Prior to receiving the transport block, the network device determines the TBS of the transport block based on the first parameter.

For determination of the TBS, reference may be made to related content in process 640. Details are not elaborated herein any further.

**In process 750a,** a first sensing result is acquired based on a first signal carried on the channel.

In some embodiments, before process 750a is performed, the network device receives the first signal carried on the channel; or the network device receives the transport block carried on the channel, wherein the transport block includes the first signal; or the network device receives the first signal and the transport block that are carried on the channel.

In some embodiments, the network device acquires the first sensing result by measuring the first signal carried on the channel.

It should be understood that, in a case where at least one of the first signal or the transport block is transmitted by the terminal device to the network device, the network device acquires the first sensing result based on the first signal carried on the channel. That is, in a case where the network device belongs to the first node illustrated in FIG. 2 or FIG. 3, the network device performs process 750a.

**In process 750b,** at least one of the first signal or the transport block is transmitted on the channel, wherein the first signal is used to acquire the first sensing result.

The TBS of the transport block carried on the channel is the TBS determined in process 740.

In some embodiments, the network device transmits the first signal on the channel; or the network device transmits the transport block on the channel, wherein the transport block includes the first signal; or the network device transmits the first signal and the transport block on the channel.

It should be understood that, in a case where at least one of the first signal or the transport block is transmitted by the network device to the terminal device, the terminal device acquires the first sensing result based on the first signal carried on the channel. That is, in a case where the network device belongs to the second node illustrated in FIG. 4 or FIG. 5, the network device performs process 750b.

In the present disclosure, the sensing result includes at least one of: a detection result of a target, a detection result of an environment, a recognition result of a target, a recognition result of an environment, a measurement result of a target, or a measurement result of an environment. The measurement includes at least one operation of measuring a distance, measuring a delay, measuring an angle, measuring a moving speed, measuring a phase, or the like.

In some embodiments, the sensing is equivalent to or replaced with at least one of: positioning, ranging, speed measurement, angle measurement, target imaging, target detection, target tracking, or target recognition.

It should be noted that the above processes 710, 720, 730, and 740 are optional processes. The execution order of the above processes may be adaptively adjusted based on actual circumstances. For example, process 720 is performed before process 710, or the like. The above processes may be combined. For example, process 710 is independently implemented as a method for reporting capability information, or process 720 is independently implemented as a configuration method, or process 730 is independently implemented as a configuration method, or process 740 is independently implemented as a method for determining a TBS, or process 710 and process 720 are combined to be implemented as a configuration method, or process 720 and process 730 are combined to be implemented as a configuration method, or process 710, process 720, and process 730 are combined to be implemented as a configuration method, or any one or more of process 710, process 720, process 730, and process 740 are combined with process 750a to be implemented as a sensing method, or any one or more of process 710, process 720, process 730, and process 740 are combined with process 750b to be implemented as a sensing method, or the like. The above processes may be split. For example, process 730 is split into a process of transmitting first information that indicates a first parameter and a process of transmitting first information that indicates a second parameter.

In summary, in the method according to the embodiments of the present disclosure, the sensing requirement is satisfied using the first signal carried on the channel. Meanwhile, considering that in a case where the channel occupies more time-frequency resources to satisfy the sensing requirement, a TBS of the transport block carried on the channel increases accordingly, a solution of determining the TBS based on the first parameter is designed to ensure the wireless communication quality. Compared with filling a large number of dummy bits in a transport block with an increased TBS, in the method according to the embodiments of the present disclosure, transmission parameters of the channel are effectively adjusted using the first parameter. For example, a code rate and an amount of intermediate information are reduced, such that the transport block with the increased TBS carries more valid bits instead of a large number of dummy bits, thereby reducing transmission of dummy bits in the channel, improving reliability, robustness, and efficiency of channel transmission, and implementing both a sensing requirement and a communication requirement. In addition, the terminal device is further supported to report the capability information to assist the network device in configuring the first parameter, such that the transport block/the first signal carried on the channel better conforms to a receiving capability of the terminal device, thereby improving the communication efficiency and transmission quality of a communication system.

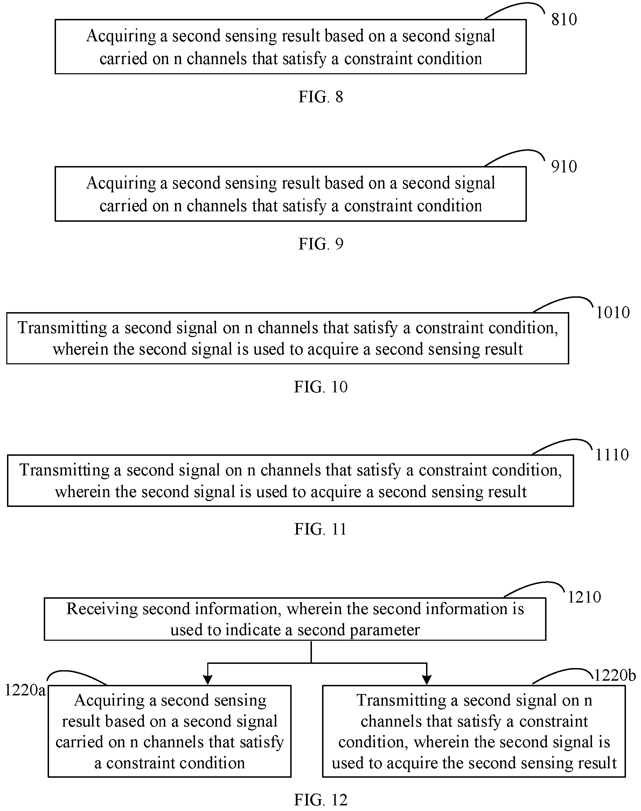

FIG. 8 illustrates a schematic flowchart of a method for transmitting a channel according to some embodiments of the present disclosure. A schematic illustration will be provided by taking the execution of the method by a first node as an example. The method includes at least part of the following process.

**In process 810,** a second sensing result is acquired based on a second signal carried on n channels that satisfy a constraint condition.

Wherein n is an integer greater than 1.

In some embodiments, the channel is a physical channel or a data channel.

In some embodiments, the channel may be a downlink physical channel, such as PDSCH; the channel may be an uplink physical channel, such as PUSCH; or the channel may be a sidelink physical channel, such as PSSCH.

In some embodiments, the channel is a channel configured for use by a terminal device. In some embodiments, the channel configuration is dynamic configuration or semi-static configuration with the granularity being a terminal device.

In some embodiments, the n channels are used to transmit data, or the n channels are used to transmit the second signal, or the n channels are used to transmit data and the second signal.

The first node is a receiver of the second signal, or the first node is considered as a receiver of the n channels. In some embodiments, in a downlink scenario, a receiver refers to a terminal device; in an uplink scenario, a receiver refers to a network device; and in a sidelink scenario, a receiver refers to a second terminal device.

In the present disclosure, the sensing result includes at least one of: a detection result of a target, a detection result of an environment, a recognition result of a target, a recognition result of an environment, a measurement result of a target, or a measurement result of an environment. The measurement includes at least one operation of measuring a distance, measuring a delay, measuring an angle, measuring a moving speed, measuring a phase, or the like.

In some embodiments, the sensing is equivalent to or replaced with at least one of: positioning, ranging, speed measurement, angle measurement, target imaging, target detection, target tracking, or target recognition.

In summary, in the method according to the embodiments of the present disclosure, because the n channels occupy a large number of time-frequency resources, the second signal carried on the n channels can satisfy the sensing requirement, and the constraint condition effectively improves the transmission efficiency of the n channels. The method according to the embodiments of the present disclosure not only avoids a waste caused by occupying excessive transmission resources by the n channels, but also avoids a reduction in sensing precision and communication quality caused by occupying unreasonable transmission resources by the n channels, thereby implementing both a sensing requirement and a communication requirement.

In some embodiments, process 810 is implemented as process 910, as illustrated in FIG. 9. FIG. 9 illustrates a schematic flowchart of a method for transmitting a channel according to some embodiments of the present disclosure. A schematic illustration will be provided by taking the execution of the method by a first node as an example. The method includes at least part of the following process.

**In process 910,** a second sensing result is acquired based on a second signal carried on n channels that satisfy a constraint condition.

Wherein n is an integer greater than 1.

In some embodiments, the channel is a physical channel or a data channel.

In some embodiments, the channel may be a downlink physical channel, such as PDSCH; the channel may be an uplink physical channel, such as PUSCH; or the channel may be a sidelink physical channel, such as PSSCH.

In some embodiments, the channel is a channel configured for use by a terminal device. In some embodiments, the channel configuration is dynamic configuration or semi-static configuration with the granularity being a terminal device.

In some embodiments, the n channels are used to transmit data, or the n channels are used to transmit the second signal, or the n channels are used to transmit data and the second signal.

In some embodiments, the second sensing result corresponds to one sensing operation; and/or, the second sensing result corresponds to one sensing task; and/or, the second sensing result corresponds to one sensing target; and/or, the second sensing result corresponds to one sensing measurement; and/or, the second sensing result corresponds to one sensing estimation; and/or, the second sensing result is transmitted over one channel; and/or, the second sensing result includes n sets of information, wherein one of the n sets of information is acquired based on one of the n channels; and/or, the second sensing result includes one set of information;

wherein the one set of information includes a joint detection result of the n sets of information, or a joint estimation result of the n sets of information, or an average value determined based on the n sets of information, or a median determined based on the n sets of information, or a maximum value determined based on the n sets of information, or a minimum value determined based on the n sets of information.

In some embodiments, the second sensing result is transmitted over one channel, wherein the channel is any one of the n channels, or the channel is another channel other than the n channels. In some embodiments, one set of information is acquired by performing joint detection on the n sets of information. The joint detection may be understood as acquiring one set of information by performing same or similar detection on the n sets of information based on a same detection method, a same detection principle, or a same detection target, wherein the one set of information may reflect features of the n sets of information. That is, the n sets of information may be represented using the one set of information.

In some embodiments, one set of information is acquired by performing joint estimation on the n sets of information. The joint estimation may be understood as acquiring one set of information by performing same or similar estimation on the n sets of information based on a same estimation method, a same estimation principle, or a same estimation target, wherein the one set of information may reflect features of the n sets of information. That is, the n sets of information may be represented using the one set of information.

In some embodiments, the constraint condition includes at least one of:

time-domain resources occupied by the n channels are the same;
time-domain resources occupied by the n channels have an overlapping part;
time-domain resources occupied by the n channels belong to one time-domain resource set;

a time-domain interval between time-domain resources occupied by the n channels is less than a first threshold;

a time-domain interval between time-domain resources occupied by the n channels is equal to the first threshold;

frequency-domain resources occupied by the n channels belong to one frequency-domain resource set;

the n channels transmit a same transport block; or

the n channels are indicated by one piece of DCI.

The one time-domain resource set is configured by the network device, or defined by a communication protocol, or determined by the network device and the terminal device over negotiation. The one frequency-domain resource set is configured by the network device, or defined by a communication protocol, or determined by the network device and the terminal device over negotiation. The first threshold is configured by the network device, or defined by a communication protocol, or determined by the network device and the terminal device over negotiation.

The n channels are indicated by one piece of DCI, wherein the one piece of DCI is transmitted by the network device. It should also be understood that the network device schedules the n channels using one piece of DCI, or the network device configures time-frequency resources of the n channels using one piece of DCI. In some embodiments, the time-domain resources occupied by the n channels are the same. Or the time-domain resources occupied by the n channels have an overlapping part. Or the time-domain resources occupied by the n channels belong to one time-domain resource set. Or a time-domain interval between the time-domain resources occupied by the n channels is less than a first threshold. Or the time-domain interval between the time-domain resources occupied by the n channels is equal to the first threshold. Or the time-domain resources occupied by the n channels have an overlapping part, and the time-domain resources occupied by the n channels belong to one time-domain resource set. Or the time-domain resources occupied by the n channels have an overlapping part, and the time-domain interval between the time-domain resources occupied by the n channels is less than the first threshold. Or the time-domain resources occupied by the n channels have an overlapping part, and the time-domain interval between the time-domain resources occupied by the n channels is equal to the first threshold. Or the time-domain resources occupied by the n channels belong to one time-domain resource set, and the time-domain interval between the time-domain resources occupied by the n channels is less than the first threshold. Or the time-domain resources occupied by the n channels belong to one time-domain resource set, and the time-domain interval between the time-domain resources occupied by the n channels is equal to the first threshold.

In some embodiments, one time-domain resource set satisfies at least one of:

a time-domain length of the one time-domain resource set is defined by a communication protocol;

a time-domain length of the one time-domain resource set is configured by a network device;

time-domain start positions of time-domain resources in the one time-domain resource set are periodically distributed in a time domain;

a time-domain start position of the one time-domain resource set is indicated by the DCI;

time-domain end positions of time-domain resources in the one time-domain resource set are periodically distributed in a time domain; or

a time-domain end position of the one time-domain resource set is indicated by the DCI.

In some embodiments, the communication protocol specifies a total time-domain length of one time-domain resource set, and/or specifies a time-domain length of each time-domain resource in one time-domain resource set.

In some embodiments, the network device configures a total time-domain length of one time-domain resource set, and/or configures a time-domain length of each time-domain resource in one time-domain resource set.

In some embodiments, the time-domain start positions of the time-domain resources in one time-domain resource set are periodically distributed in a time domain, which should also be understood as that one time-domain resource set includes a plurality of time-domain resource parts whose start positions are periodically distributed in a time domain, wherein the durations of the time-domain resource parts are the same or different.

In some embodiments, the time-domain end positions of the time-domain resources in one time-domain resource set are periodically distributed in a time domain, which should also be understood as that one time-domain resource set includes a plurality of time-domain resource parts whose end positions are periodically distributed in a time domain, wherein the durations of the time-domain resource parts may be the same or different.

In some embodiments, the constraint condition includes at least one of:

a time-domain interval between a start time-domain unit of a first channel and an end time-domain unit of a second channel is less than a second threshold;

a time-domain interval between a start time-domain unit of a first channel and an end time-domain unit of a second channel is equal to a second threshold;

a time-domain interval between a start time-domain unit of the first channel and a start time-domain unit of a second channel is less than a second threshold;

a time-domain interval between a start time-domain unit of a first channel and a start time-domain unit of a second channel is equal to a second threshold;

a time-domain interval between an end time-domain unit of the first channel and a start time-domain unit of a second channel is less than a second threshold;

a time-domain interval between an end time-domain unit of a first channel and a start time-domain unit of a second channel is equal to a second threshold;

a time-domain interval between an end time-domain unit of a first channel and an end time-domain unit of a second channel is less than a second threshold; or

a time-domain interval between an end time-domain unit of a first channel and an end time-domain unit of a second channel is equal to a second threshold;

wherein the first channel is a channel at an earliest time-domain start position in the n channels, and the second channel is a channel at a latest time-domain end position in the n channels.

In some embodiments, the time-domain intervals occupied by the n channels are different. Taking the time-domain resources occupied by the n channels belonging to the same slot as an example, the first channel is a channel in the n channels that corresponds to a smallest symbol ID, and the second channel is a channel in the n channels that corresponds to a largest symbol ID. It should also be understood that the symbol occupied by the first channel is the earliest symbol in the symbols occupied by the n channels, and the symbol occupied by the second channel is the latest symbol in the symbols occupied by the n channels.

In some embodiments, the time-domain resources occupied by the n channels are different. Taking the time-domain resources occupied by the n channels belonging to different slots as an example, the first channel is a channel with a smallest corresponding slot ID in the n channels, and the second channel is a channel with a largest corresponding slot ID in the n channels. It should also be understood that the slot occupied by the first channel is the earliest slot in the slots occupied by the n channels, and the slot occupied by the second channel is the latest slot in the slots occupied by the n channels.

In some embodiments, the constraint condition includes one or more of: a time-domain interval between a start time-domain unit of a first channel and an end time-domain unit of a second channel is less than a second threshold; a time-domain interval between the start time-domain unit of the first channel and a start time-domain unit of the second channel is less than the second threshold; a time-domain interval between an end time-domain unit of the first channel and the start time-domain unit of the second channel is less than the second threshold; or a time-domain interval between the end time-domain unit of the first channel and the end time-domain unit of the second channel is less than the second threshold.

In some embodiments, the constraint condition includes one or more of: a time-domain interval between a start time-domain unit of a first channel and an end time-domain unit of a second channel is equal to a second threshold; a time-domain interval between the start time-domain unit of the first channel and a start time-domain unit of the second channel is less than the second threshold; a time-domain interval between an end time-domain unit of the first channel and the start time-domain unit of the second channel is less than the second threshold; or a time-domain interval between the end time-domain unit of the first channel and the end time-domain unit of the second channel is less than the second threshold.

In some embodiments, the second threshold is configured by the network device, or defined by a communication protocol, or determined by the network device and the terminal device over negotiation.

In some embodiments, the constraint condition includes at least one of:

a third channel of the n channels is indicated by first DCI; or
a time-frequency resource of the third channel in the n channels is determined based on a period P;
wherein the third channel is any one or more of the n channels.

In some embodiments, the period P is configured by the network device, or defined by a communication protocol, or determined by the network device and the terminal device over negotiation.

In some embodiments, the time-frequency resources of the third channel in the n channels are periodically distributed in a time domain based on the period P. In some embodiments, the n channels are periodically distributed in a time domain using K time-domain units as one period, and/or the n channels are periodically distributed in a frequency domain using K frequency-domain units as one period.

In some embodiments, the distribution of time-frequency resources of the third channel in the n channels is associated with the period P. In some embodiments, the period P indicates that K time-domain units are used as one period, and a time-domain resource occupied by a channel in the n channels may be before the K time-domain units or after the K time-domain units. It may also be understood that time-domain resources occupied by different channels are not periodically distributed in a time domain using K time-domain units as one period, but the time-domain resources occupied by the different channels are determined based on the period P, for example, several time-domain units whose time-domain start positions in a certain channel are before the period P, or several time-domain units whose time-domain start positions are after the period P. In some embodiments, the period P indicates that the K frequency-domain units are used as one period, and a frequency-domain resource occupied by a channel in the n channels may be before the K frequency-domain units or after the K frequency-domain units. It may also be understood that frequency-domain resources occupied by different channels are not periodically distributed in a frequency domain using the K frequency-domain units as one period, but the frequency-domain resources occupied by the different channels are determined based on the period P, for example, several frequency-domain units whose frequency-domain start positions in a certain channel are before the period P, or several frequency-domain units whose frequency-domain start positions are after the period P.

In some embodiments, the n channels include at least two fourth channels, wherein the at least two fourth channels repeatedly transmit first transport blocks, and first transport blocks in different fourth channels correspond to different redundancy version (RV) numbers.

The RV number may also be implemented as an RV identity (ID) or an RV index.

In some embodiments, the transport blocks carried on the at least two fourth channels in the n channels are transmitted repeatedly. It should also be understood that the first transport block is repeatedly transmitted over at least two fourth channels.

In some embodiments, the RV numbers corresponding to the first transport blocks in the at least two fourth channels are arranged in a first order.

In some embodiments, the first order is defined by a communication protocol or determined based on DCI.

In some embodiments, the n channels include at least two fifth channels, wherein the at least two fifth channels respectively transmit different transport blocks, and the transport blocks on the different fifth channels correspond to different hybrid automatic repeat request (HARQ) IDs.

The HARQ ID may also be implemented as a HARQ number or a HARQ index.

In some embodiments, the transport blocks carried on at least two fifth channels in the n channels are different.

In some embodiments, the HARQ IDs corresponding to the transport blocks in the at least two fifth channels are arranged in a second order.

In some embodiments, the second order is defined by a communication protocol or determined based on DCI.

In some embodiments, the second signal includes at least one of: a DMRS, an SRS, an E-SRS, a CPRS, or a CSI-RS.

In some embodiments, the second signal is implemented as any one or more REs. Or the second signal is a signal formed by any one or more REs. Or the second signal is a signal carried on any one or more REs.

In some embodiments, the second signal is a data signal. Or the second signal is a signal in a transport block.

In some embodiments, the second signal is a signal that performs a sensing service, or a signal that performs a sensing operation, or a signal that implements a sensing target, or a signal that acquires a sensing result, or a signal that performs a sensing service designed in the future, or a signal that performs a sensing operation designed in the future, or a signal that implements a sensing target designed in the future, or a signal that acquires a sensing result designed in the future.

The first node is a receiver of the second signal, or the first node is considered as a receiver of the n channels. In some embodiments, in a downlink scenario, a receiver refers to a terminal device; in an uplink scenario, a receiver refers to a network device; and in a sidelink scenario, a receiver refers to a second terminal device.

In the present disclosure, the sensing result includes at least one of: a detection result of a target, a detection result of an environment, a recognition result of a target, a recognition result of an environment, a measurement result of a target, or a measurement result of an environment. The measurement includes at least one operation of measuring a distance, measuring a delay, measuring an angle, measuring a moving speed, measuring a phase, or the like.

In some embodiments, the sensing is equivalent to or replaced with at least one of: positioning, ranging, speed measurement, angle measurement, target imaging, target detection, target tracking, or target recognition.

In summary, in the method according to the embodiments of the present disclosure, because the n channels occupy a large number of time-frequency resources, the second signal carried on the n channels can satisfy the sensing requirement, and the constraint condition effectively improves the transmission efficiency of the n channels. The method according to the embodiments of the present disclosure not only avoids a waste caused by occupying excessive transmission resources by the n channels, but also avoids a reduction in sensing precision and communication quality caused by occupying unreasonable transmission resources by the n channels, thereby implementing both a sensing requirement and a communication requirement. In addition, RV numbers and/or HARQ IDs of transport blocks carried on the n channels may be flexibly adjusted based on different orders, and time-frequency resources of the n channels are fully used, such that a retransmission gain, coding and decoding gains, and a coverage gain can be acquired during the transmission of the transport blocks. The method according to the embodiments of the present disclosure not only reduces the control overhead of the n channels using the constraint condition, but also improves the transmission reliability and the sensing precision of the n channels.

FIG. 10 illustrates a schematic flowchart of a method for transmitting a channel according to some embodiments of the present disclosure. A schematic illustration will be provided by taking the execution of the method by a second node as an example. The method includes at least part of the following process.

**In process 1010,** a second signal is transmitted on n channels that satisfy a constraint condition, wherein the second signal is used to acquire a second sensing result.

Wherein n is an integer greater than 1.

In some embodiments, the channel is a physical channel or a data channel.

In some embodiments, the channel may be a downlink physical channel, such as PDSCH; the channel may be an uplink physical channel, such as PUSCH; or the channel may be a sidelink physical channel, such as PSSCH.

In some embodiments, the channel is a channel configured for use by a terminal device. In some embodiments, the channel configuration is dynamic configuration or semi-static configuration with the granularity being a terminal device.

In some embodiments, the n physical channels are used to transmit data, or the n physical channels are used to transmit a second signal, or the n physical channels are used to transmit data and the second signal.

The second node is a transmitter of the second signal, or the second node is considered as a transmitter of the n channels. In some embodiments, in a downlink scenario, the transmitter refers to a network device; in an uplink scenario, the transmitter refers to a terminal device; and in a sidelink scenario, the transmitter refers to a first terminal device.

In the present disclosure, the sensing result includes at least one of: a detection result of a target, a detection result of an environment, a recognition result of a target, a recognition result of an environment, a measurement result of a target, or a measurement result of an environment. The measurement includes at least one operation of measuring a distance, measuring a delay, measuring an angle, measuring a moving speed, measuring a phase, or the like.

In some embodiments, the sensing is equivalent to or replaced with at least one of: positioning, ranging, speed measurement, angle measurement, target imaging, target detection, target tracking, or target recognition.

In summary, in the method according to the embodiments of the present disclosure, because the n channels occupy a large number of time-frequency resources, the second signal carried on the n channels can satisfy the sensing requirement, and the constraint condition effectively improves the transmission efficiency of the n channels. The method according to the embodiments of the present disclosure not only avoids a waste caused by occupying excessive transmission resources by the n channels, but also avoids a reduction in sensing precision and communication quality caused by occupying unreasonable transmission resources by the n channels, thereby implementing both a sensing requirement and a communication requirement.

In some embodiments, process 1010 is implemented as process 1110, as illustrated in FIG. 11. FIG. 11 illustrates a schematic flowchart of a method for transmitting a channel according to some embodiments of the present disclosure. A schematic illustration will be provided by taking the execution of the method by a second node as an example. The method includes at least part of the following process.

**In process 1110,** a second signal is transmitted on n channels that satisfy a constraint condition, wherein the second signal is used to acquire a second sensing result.

Wherein n is an integer greater than 1.

In some embodiments, the channel is a physical channel or a data channel.

In some embodiments, the channel may be a downlink physical channel, such as PDSCH; the channel may be an uplink physical channel, such as PUSCH; or the channel may be a sidelink physical channel, such as PSSCH.

In some embodiments, the channel is a channel configured for use by a terminal device. In some embodiments, the channel configuration is dynamic configuration or semi-static configuration with the granularity being a terminal device.

In some embodiments, the n channels are used to transmit data, or the n channels are used to transmit the second signal, or the n channels are used to transmit data and the second signal.

In some embodiments, the second sensing result corresponds to one sensing operation; and/or, the second sensing result corresponds to one sensing task; and/or, the second sensing result corresponds to one sensing target; and/or, the second sensing result corresponds to one sensing measurement; and/or, the second sensing result corresponds to one sensing estimation; and/or, the second sensing result is transmitted over one channel; and/or, the second sensing result includes n sets of information, wherein one of the n sets of information is acquired based on one of the n channels; and/or, the second sensing result includes one set of information;

wherein the one set of information includes a joint detection result of the n sets of information, or a joint estimation result of the n sets of information, or an average value determined based on the n sets of information, or a median determined based on the n sets of information, or a maximum value determined based on the n sets of information, or a minimum value determined based on the n sets of information.

For related content of a constraint condition, reference may be made to process 910. Details are not elaborated herein any further.

In some embodiments, the n channels include at least two fourth channels, wherein the at least two fourth channels repeatedly transmit first transport blocks, and the first transport blocks in different fourth channels correspond to different RV numbers. In this design, while the n channels carry the second signal to ensure a sensing requirement, a retransmission gain can be acquired through repeated transmission, such that the transmission quality of the first transport block is improved, and the transmission efficiency is ensured.

The RV number may be implemented as an RV ID or an RV index.

In some embodiments, the RV numbers corresponding to the first transport blocks in the at least two fourth channels are arranged in a first order.

In some embodiments, the first order is defined by a communication protocol or determined based on DCI.

In some embodiments, the n channels include at least two fifth channels, wherein the at least two fifth channels respectively transmit different transport blocks, and the transport blocks on different fifth channels correspond to different HARQ IDs. In this design, while the n channels carry the second signal to ensure a sensing requirement, the transmission efficiency can be improved by transmitting different transport blocks on different channels, and a retransmission gain can be acquired by setting different channels to correspond to different HARQ IDs, such that the transmission quality of the n channels is ensured.

The HARQ ID may be implemented as a HARQ number or a HARQ index.

In some embodiments, the HARQ IDs corresponding to the transport blocks in the at least two fifth channels are arranged in a second order.

In some embodiments, the second order is defined by a communication protocol or determined based on DCI.

In some embodiments, the second signal includes at least one of: a DMRS, an SRS, an E-SRS, a CPRS, or a CSI-RS.

In some embodiments, the second signal is implemented as any one or more REs. Or the second signal is a signal formed by any one or more REs. Or the second signal is a signal carried on any one or more REs.

In some embodiments, the second signal is a data signal. Or the second signal is a signal in a transport block.

In some embodiments, the second signal is a signal that performs a sensing service, or a signal that performs a sensing operation, or a signal that implements a sensing target, or a signal that acquires a sensing result, or a signal that performs a sensing service designed in the future, or a signal that performs a sensing operation designed in the future, or a signal that implements a sensing target designed in the future, or a signal that acquires a sensing result designed in the future.

The first node is a receiver of the second signal, or the first node is considered as a receiver of the n channels. In some embodiments, in a downlink scenario, a receiver refers to a terminal device; in an uplink scenario, a receiver refers to a network device; and in a sidelink scenario, a receiver refers to a second terminal device.

In the present disclosure, the sensing result includes at least one of: a detection result of a target, a detection result of an environment, a recognition result of a target, a recognition result of an environment, a measurement result of a target, or a measurement result of an environment. The measurement includes at least one operation of measuring a distance, measuring a delay, measuring an angle, measuring a moving speed, measuring a phase, or the like.

In some embodiments, the sensing is equivalent to or replaced with at least one of: positioning, ranging, speed measurement, angle measurement, target imaging, target detection, target tracking, or target recognition.

In summary, in the method according to the embodiments of the present disclosure, because the n channels occupy a large number of time-frequency resources, the second signal carried on the n channels can satisfy the sensing requirement, and the constraint condition effectively improves the transmission efficiency of the n channels. The method according to the embodiments of the present disclosure not only avoids a waste caused by occupying excessive transmission resources by the n channels, but also avoids a reduction in sensing precision and communication quality caused by occupying unreasonable transmission resources by the n channels, thereby implementing both a sensing requirement and a communication requirement. In addition, RV numbers and/or HARQ IDs of transport blocks carried on the n channels may be flexibly adjusted based on different orders, and time-frequency resources of the n channels are fully used, such that a retransmission gain, coding and decoding gains, and a coverage gain can be acquired during the transmission of the transport blocks. The method according to the embodiments of the present disclosure not only reduces the control overhead of the n channels using the constraint condition, but also improves the transmission reliability and the sensing precision of the n channels.

Considering that processes performed by the terminal device and the network device are not completely the same, the following respectively describes the method for transmitting a channel illustrated in FIG. 8, FIG. 9, FIG. 10, or FIG. 11 from a perspective of the terminal device and a perspective of the network device.

In some embodiments, process 810 or process 910 is implemented as process 1220a, and process 1010 or process 1110 is implemented as process 1220b. In addition to process 1220a or process 1220b, the method for transmitting a channel further includes process 1210. As illustrated in FIG. 12, FIG. 12 illustrates a schematic flowchart of a method for transmitting a channel according to some embodiments of the present disclosure. A schematic illustration will be provided by taking the execution of the method by a terminal device as an example. The terminal device is implemented as the first node illustrated in FIG. 8 or FIG. 9, or the terminal device is implemented as the second node illustrated in FIG. 10 or FIG. 11. The method includes at least part of the following processes.

**In process 1210,** second information is received, wherein the second information is used to indicate a second parameter.

In some embodiments, the second parameter includes at least one of:

time-domain resources of at least part of the n channels;
frequency-domain resources of at least part of the n channels;
a time-domain interval between time-domain resources of at least two channels;
a frequency-domain interval between frequency-domain resources of at least two channels;
a maximum number of HARQ processes of n channels;
HARQ IDs of at least part of the n channels;
RV numbers of at least part of the n channels;
a first order; or
a second order.

In some embodiments, the second parameter includes slots corresponding to the n channels, respectively. Or the second parameter is used to indicate a slot corresponding to a channel A in the n channels, and indicate a slot interval between another channel and the channel A. The another channel is a channel other than the channel A in the n channels. The slot may be replaced with another time-domain unit. Herein, only the slot is used as an example for description, and does not mean a limitation.

In some embodiments, the second parameter includes PRBs corresponding to the n channels, respectively. Or the second parameter is used to indicate a PRB corresponding to a channel A in the n channels, and indicate a frequency-domain interval between another channel and the channel A. The another channel is a channel other than the channel A in the n channels. The PRB may be replaced with another frequency-domain unit. The another frequency-domain unit includes, for example, at least one of a carrier, a BWP, a subband, a subchannel, a subcarrier, or a unit based on another frequency-domain unit. Only the PRB is used as an example for description herein, and does not mean a limitation.

In some embodiments, the second information is DCI.

In some embodiments, the second information is the same as the first information, or the second information is different from the first information.

In some embodiments, different channels in the n channels correspond to a same second parameter, and/or different channels in the n channels correspond to different second parameters. In some embodiments, the second parameters corresponding to different channels in the n channels are configured uniformly or independently.

In some embodiments, the n channels correspond to the same slot. Or time-domain resources corresponding to the n channels are disposed in a same slot set, wherein the slot set includes one or more slots. Or the n channels respectively correspond to different slots, wherein a slot interval between slots corresponding to the n channels is less than a first threshold. Or some of the n channels correspond to the same slot, and the other channels correspond to different slots. The slot interval between slots corresponding to the n channels is less than the first threshold. The slot may be replaced with another time-domain unit. Herein, only the slot is used as an example for description, and does not mean a limitation.

It should be understood that the time-domain resources of the n channels are limited, such that the first node can complete receiving of the n channels within a short time. In this way, the validity of the second signal carried on the n channels that acquires the second sensing result is ensured, such that the second sensing result has high sensing precision and accuracy.

In some embodiments, a time-domain resource corresponding to one channel includes at least one time-domain unit, wherein the at least one time-domain unit is continuous or discontinuous. One channel is one of the n channels.

In some embodiments, a frequency-domain resource corresponding to one channel includes at least one frequency-domain unit, wherein the at least one frequency-domain unit is continuous or discontinuous. One channel is one of the n channels.

In process 1220a, a second sensing result is acquired based on a second signal carried on the n channels that satisfy a constraint condition.

Wherein n is an integer greater than 1.

In some embodiments, the second signal includes at least one of: a DMRS, an SRS, an E-SRS, a CPRS, or a CSI-RS.

In some embodiments, the second signal is implemented as any one or more REs. Or the second signal is a signal formed by any one or more REs. Or the second signal is a signal carried on any one or more REs.

In some embodiments, the second signal is a data signal. Or the second signal is a signal in the transport blocks carried on the n channels.

In some embodiments, the second signal is a signal that performs a sensing service, or a signal that performs a sensing operation, or a signal that implements a sensing target, or a signal that acquires a sensing result, or a signal that performs a sensing service designed in the future, or a signal that performs a sensing operation designed in the future, or a signal that implements a sensing target designed in the future, or a signal that acquires a sensing result designed in the future.

In some embodiments, before process 1220a is performed, the terminal device receives the second signal carried on the n channels; or the terminal device receives the transport block carried on the n channels, wherein the transport block includes the second signal; or the terminal device receives the second signal and the transport block that are carried on the n channels.

**In** some embodiments, the terminal device acquires the second sensing result by measuring the second signal carried on the n channels.

It should be understood that, in a case where at least one of the second signal or the transport block is transmitted by the network device to the terminal device, the terminal device acquires the second sensing result based on the second signal carried on the n channels. That is, in a case where the terminal device belongs to the first node illustrated in FIG. 8 or FIG. 9, the terminal device performs process 1220a.

For related content of a constraint condition, reference may be made to process 910. Details are not elaborated herein any further.

**In** process **1220b,** a second signal is transmitted on n channels that satisfy a constraint condition, wherein the second signal is used to acquire a second sensing result.

In some embodiments, the second signal includes at least one of: a DMRS, an SRS, an E-SRS, a CPRS, or a CSI-RS.

In some embodiments, the second signal is implemented as any one or more REs. Or the second signal is a signal formed by any one or more REs. Or the second signal is a signal carried on any one or more REs.

In some embodiments, the second signal is a data signal. Or the second signal is a signal in the transport blocks carried on the n channels.

In some embodiments, the second signal is a signal that performs a sensing service, or a signal that performs a sensing operation, or a signal that implements a sensing target, or a signal that acquires a sensing result, or a signal that performs a sensing service designed in the future, or a signal that performs a sensing operation designed in the future, or a signal that implements a sensing target designed in the future, or a signal that acquires a sensing result designed in the future.

In some embodiments, the terminal device transmits the second signal on the n channels; or the terminal device transmits the transport block on the n channels, wherein the transport block includes the second signal; or the terminal device transmits the second signal and the transport block on the n channels.

It should be understood that, in a case where at least one of the second signal or the transport block is transmitted by the terminal device to the network device, the network device acquires the second sensing result based on the second signal carried on the n channels. That is, in a case where the terminal device belongs to the second node illustrated in FIG. 10 or FIG. 11, the terminal device performs process 1220b.

In some embodiments, the RBs occupied by the second signal are continuous or discontinuous, and the RBs occupied by the second signal correspond to one or more carriers. It should also be understood that the second signal occupies RBs on one or more carriers, the number of RBs occupied by the second signal on different carriers may be the same or different, and the RBs are adjacent or spaced apart from each other.

In some embodiments, the second sensing result corresponds to one sensing operation; and/or, the second sensing result corresponds to one sensing task; and/or, the second sensing result corresponds to one sensing target; and/or, the second sensing result corresponds to one sensing measurement; and/or, the second sensing result corresponds to one sensing estimation; and/or, the second sensing result is transmitted over one channel; and/or, the second sensing result includes n sets of information, wherein one of the n sets of information is acquired based on one of the n channels; and/or, the second sensing result includes one set of information;

wherein the one set of information includes a joint detection result of the n sets of information, or a joint estimation result of the n sets of information, or an average value determined based on the n sets of information, or a median determined based on the n sets of information, or a maximum value determined based on the n sets of information, or a minimum value determined based on the n sets of information.

For related content of a constraint condition, reference may be made to process 910. Details are not elaborated herein any further.

In some embodiments, the n channels satisfy at least one of the following conditions:

· channels with the same modulation order are present in the n channels;
· channels with different modulation orders are present in the n channels;
· channels with the same code rate are present in the n channels; or
· channels with different code rates are present in the n channels.

In some embodiments, the n channels carry a total of n transport blocks. The mapping relationship between the n transport blocks and the n channels includes at least one of:

· the n transport blocks are one-to-one mapped to the n channels in ascending order of frequency in the frequency domain; or

· the n transport blocks are one-to-one mapped to the n channels in a time domain from earlier to later.

In some embodiments, the n channels include a channel A, a channel B, a channel C, and a channel D. The channel A, the channel B, the channel C, and the channel D are arranged in ascending order of frequency in the frequency domain or descending order of frequency in the frequency domain.

In some embodiments, the n channels include a channel A, a channel B, a channel C, and a channel D. The channel A, the channel B, the channel C, and the channel D are arranged in a time domain from earlier to later or from later to earlier.

In some embodiments, the n channels include at least two fourth channels, wherein the at least two fourth channels repeatedly transmit first transport blocks, and RV numbers corresponding to the first transport blocks carried on the at least two fourth channels are arranged in a first order.

In some embodiments, the n channels include at least two fourth channels, wherein the at least two fourth channels repeatedly transmit first transport blocks, and the first transport blocks in different fourth channels correspond to different RV numbers.

The RV number may be implemented as an RV ID or an RV index.

In some embodiments, the RV numbers corresponding to the first transport blocks in the at least two fourth channels are arranged in a first order.

In some embodiments, the first order is defined by a communication protocol or determined based on DCI.

In some embodiments, the n channels include at least two fifth channels, wherein the at least two fifth channels respectively transmit different transport blocks, and the transport blocks on different fifth channels correspond to different HARQ IDs.

The HARQ ID may be implemented as a HARQ number or a HARQ index.

In some embodiments, the HARQ IDs corresponding to the transport blocks in the at least two fifth channels are arranged in a second order.

In some embodiments, the second order is defined by a communication protocol or determined based on DCI.

It should also be understood that channels in the fourth channel are distinguished using different RV numbers, and channels in the fifth channel are distinguished using different HARQ IDs.

First, the fourth channel is described:

In some embodiments, the same first transport block is repeatedly transmitted on each fourth channel, and different RVs are generated for the same first transport block by performing at least one of cyclic redundancy check (CRC), channel coding, rate matching, or the like. Different RVs are distinguished by different RV numbers, such that fourth channels correspond to different RV numbers.

In this design, the fourth channels are transmitted on the n channels that satisfy the constraint condition using different RVs, such that transport blocks carried on the fourth channels can acquire a retransmission gain within a short time or even within one slot, thereby improving the transmission reliability of the fourth channels and improving the reliability and the effectiveness of the second sensing result.

In some embodiments, HARQ IDs of the fourth channels are the same, and RV numbers are arranged in a first order. In some embodiments, the first order is a cycle of 0, 2, 3, and 1. In some embodiments, in a case where the n channels include four fourth channels, RV numbers of transport blocks carried on the four fourth channels are 0, 2, 3, and 1 in sequence; in a case where the n channels include six fourth channels, RV numbers of transport blocks carried on the six fourth channels are 0, 2, 3, 1, 0, and 2 in sequence; in a case where the n channels include nine fourth channels, RV numbers of transport blocks carried on the nine fourth channels are 0, 2, 3, 1, 0, 2, 3, 1, and 0 in sequence; and so on. It should be understood that the first order may alternatively be an order other than a cycle of 0, 2, 3, and 1. For example, the first order is a cycle of 3, 1, 0, and 2. Herein, only the cycle of 0, 2, 3, and 1 is used as an example for description, and does not mean a limitation.

Second, the fifth channel is described:

In some embodiments, different transport blocks are transmitted on the respective fifth channels, and the different transport blocks are distinguished by different HARQ IDs, such that the fifth channels correspond to different HARQ IDs.

In this design, the fifth channels are transmitted on the n channels that satisfy the constraint condition using different HARQ IDs, such that transport blocks carried on the fifth channels can acquire a retransmission gain within a short time or even within one slot, thereby improving the transmission reliability of the fifth channels and improving the reliability and the effectiveness of the second sensing result.

In some embodiments, the RV numbers of the fifth channels are the same, and the HARQ IDs are arranged in a second order. In some embodiments, the second order is a cycle of 0 to (y-1), wherein y = the maximum number of HARQ processes. In some embodiments, y = 4. In a case where the n channels include four fifth channels, HARQ IDs of transport blocks carried on the four fifth channels are 0, 1, 2, and 3 in sequence; in a case where the n channels include six fifth channels, HARQ IDs of transport blocks carried on the six fifth channels are 0, 1, 2, 3, 0, and 1 in sequence; in a case where the n channels include nine fifth channels, HARQ IDs of transport blocks carried on the nine fifth channels are 0, 1, 2, 3, 0, 1, 2, 3, and 0 in sequence; and so on. In some embodiments, y = 2. In a case where the n channels include four fifth channels, HARQ IDs of transport blocks carried on the four fifth channels are 0, 1, 0, and 1 in sequence; in a case where the n channels include six fifth channels, HARQ IDs of transport blocks carried on the six fifth channels are 0, 1, 0, 1, 0, and 1 in sequence; in a case where the n channels include nine fifth channels, HARQ IDs of transport blocks carried on the nine fifth channels are 0, 1, 0, 1, 0, 1, 0, 1, and 0 in sequence; and so on.

In a case where the n channels include both the fourth channels and the fifth channels:

In some embodiments, at least part of the n channels belong to both the fourth channel and the fifth channel. It should also be understood that at least part of the n channels have both an RV number and a HARQ ID. Taking the channel A as an example, the n channels include another channel that corresponds to a different RV number from the channel A, and another channel that corresponds to a different HARQ ID from the channel A.

In some embodiments, the second order has a higher priority than the first order. That is, for channels that belong to both the fourth channel and the fifth channel, the channels are first arranged based on HARQ IDs in the second order, and then the channels are arranged based on RV numbers in the first order. In some embodiments, y transport blocks with the first RV number are one-to-one mapped to y channels based on the HARQ IDs in the second order, y transport blocks with the second RV number are one-to-one mapped to y channels based on the HARQ IDs in the second order, y transport blocks with the third RV number are one-to-one mapped to y channels based on the HARQ IDs in the second order, and so on.

In some embodiments, the second order corresponding to the HARQ IDs is 0 and 1, and the first order corresponding to the RV numbers is 0, 2, 3, and 1. n is 4, the n channels all belong to both the fourth channels and the fifth channels, and the n channels include SH1, SH2, SH3, and SH4 (arranged in ascending order of frequency in a frequency domain). In this case, the channels whose RV number is 0 are first mapped in the second order, and then the channels whose RV number is 2 are mapped in the second order. That is, two transport blocks whose RV numbers are 0 are first one-to-one mapped to the SH1 and the SH2 in an order of 0 and 1 based on the HARQ IDs, and then the two transport blocks whose RV numbers are 2 are one-to-one mapped to the SH3 and the SH4 in an order of 0 and 1 based on the HARQ IDs. In this case, the HARQ ID of the SH1 is 0, and the RV number is 0; the HARQ ID of the SH2 is 1, and the RV number is 0; the HARQ ID of the SH3 is 0, and the RV number is 2; and the HARQ ID of the SH3 is 1, and the RV number is 2.

In some embodiments, in a case where a time-frequency resource corresponding to a certain channel is unavailable, resource mapping is performed by skipping the unavailable time-frequency resource based on the agreement of the communication protocol, or no transmission is performed on the channel. The unavailable time-frequency resource includes, but is not limited to, at least one of: a PRB corresponding to a certain channel overlaps a PRB that transmits a synchronization signal/PBCH block (SS/PBCH, SSB), a conflict between transmission directions of a certain channel and n channels, a time-frequency resource corresponding to a certain channel has been pre-configured by the network device, or another transmission with a higher priority is performed on a certain channel. In some embodiments, a time-frequency resource of a certain channel has been scheduled by a PDCCH subjected to CRC scrambling by a cell radio network temporary identifier (C-RNTI), or a modulation and coding Scheme C-RNTI (MCS-C-RNTI), or a configured scheduling RNTI (CS-RNTI), or a group RNTI (G-RNTI), or a group configured scheduling RNTI (G-CS-RNTI), or a multicast control channel RNTI (MCCH-RNTI), or scheduled by SPS, or the like.

In some embodiments, the TBS corresponding to one or more of the n channels uses the method illustrated in process 210 or process 310. It should be noted that the method illustrated in process 210 or process 310 is an optional method for the embodiments of the present disclosure. That is, the TBS corresponding to one or more of the n channels may not use the method illustrated in process 210 or process 310.

In the present disclosure, the sensing result includes at least one of: a detection result of a target, a detection result of an environment, a recognition result of a target, a recognition result of an environment, a measurement result of a target, or a measurement result of an environment. The measurement includes at least one operation of measuring a distance, measuring a delay, measuring an angle, measuring a moving speed, measuring a phase, or the like.

In some embodiments, the sensing is equivalent to or replaced with at least one of: positioning, ranging, speed measurement, angle measurement, target imaging, target detection, target tracking, or target recognition.

It should be noted that process 1210 is an optional process. Process 1210 may be independently implemented as a configuration method.

In summary, in the method according to the embodiments of the present disclosure, because the n channels occupy a large number of time-frequency resources, the second signal carried on the n channels can satisfy the sensing requirement, and the constraint condition effectively improves the transmission efficiency of the n channels. The method according to the embodiments of the present disclosure not only avoids a waste caused by occupying excessive transmission resources by the n channels, but also avoids a reduction in sensing precision and communication quality caused by occupying unreasonable transmission resources by the n channels, thereby implementing both a sensing requirement and a communication requirement. In addition, RV numbers and/or HARQ IDs of transport blocks carried on the n channels may be flexibly adjusted based on different orders, and time-frequency resources of the n channels are fully used, such that a retransmission gain, coding and decoding gains, and a coverage gain can be acquired during the transmission of the transport blocks. The method according to the embodiments of the present disclosure not only reduces the control overhead of the n channels using the constraint condition, but also improves the transmission reliability and the sensing precision of the n channels.

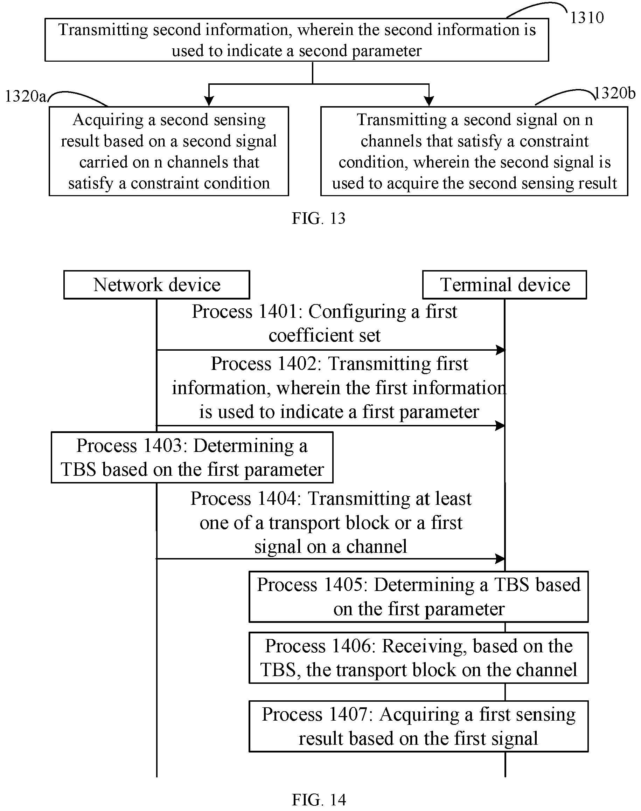

In some embodiments, process 810 or process 910 is implemented as process 1320a, and process 1010 or process 1110 is implemented as process 1320b. In addition to process 1320a or process 1320b, the method for transmitting a channel further includes process 1310. As illustrated in FIG. 13, FIG. 13 illustrates a schematic flowchart of a method for transmitting a channel according to some embodiments of the present disclosure. A schematic illustration will be provided by taking the execution of the method by a network device as an example. The network device is implemented as the second node illustrated in FIG. 10 or FIG. 11, or the network device is implemented as the first node illustrated in FIG. 8 or FIG. 9. The method includes at least part of the following processes.

In process 1310, second information is transmitted, wherein the second information is used to indicate a second parameter.

In some embodiments, the second parameter includes at least one of:

time-domain resources of at least part of the n channels;
frequency-domain resources of at least part of the n channels;
a time-domain interval between time-domain resources of at least two channels;
a frequency-domain interval between frequency-domain resources of at least two channels;
a maximum number of HARQ processes of n channels;
HARQ IDs of at least part of the n channels;
RV numbers of at least part of the n channels;
a first order; or
a second order.

In some embodiments, the second parameter includes slots corresponding to the n channels, respectively. Or the second parameter indicates a slot corresponding to a channel A in the n channels, and indicates a slot interval between another channel and the channel A. The another channel is a channel other than the channel A in the n channels. The slot may be replaced with another time-domain unit. Herein, only the slot is used as an example for description, and does not mean a limitation.

In some embodiments, the second parameter includes PRBs corresponding to the n channels, respectively. Or the second parameter indicates a PRB corresponding to a channel A in the n channels, and indicates a frequency-domain interval between another channel and the channel A. The another channel is a channel other than the channel A in the n channels. The PRB may be replaced with another frequency-domain unit. The another frequency-domain unit includes, for example, at least one of a carrier, a BWP, a subband, a subchannel, a subcarrier, or a unit based on another frequency-domain unit. Only the PRB is used as an example for description herein, and does not mean a limitation.

In some embodiments, the second information is DCI.

In some embodiments, the second information is the same as the first information, or the second information is different from the first information.

In some embodiments, different channels in the n channels correspond to a same second parameter, and/or different channels in the n channels correspond to different second parameters. In some embodiments, the second parameters corresponding to different channels in the n channels are configured uniformly or independently.

In some embodiments, the n channels correspond to the same slot. Optionally, time-domain resources corresponding to the n channels are disposed in a same slot set, wherein the slot set includes one or more slots. Optionally, the n channels respectively correspond to different slots, and a slot interval between slots corresponding to the n channels is less than a first threshold. Optionally, some of the n channels correspond to the same slot, and the other channels correspond to different slots. The slot interval between slots corresponding to the n channels is less than the first threshold. The slot may be replaced with another time-domain unit. Herein, only the slot is used as an example for description, and does not mean a limitation.

It should be understood that the time-domain resources of the n channels are limited, such that the second node can transmit the n channels within a short time. In this way, the validity of the second signal carried on the n channels that acquires the second sensing result is ensured, such that the second sensing result has high sensing precision and accuracy.

In some embodiments, a time-domain resource corresponding to one channel includes at least one time-domain unit, wherein the at least one time-domain unit is continuous or discontinuous. One channel is one of the n channels.

In some embodiments, a frequency-domain resource corresponding to one channel includes at least one frequency-domain unit, wherein the at least one frequency-domain unit is continuous or discontinuous. One channel is one of the n channels.

**In process 1320a,** a second sensing result is acquired based on a second signal carried on the n channels that satisfy a constraint condition;

wherein n is an integer greater than 1.

**In** some embodiments, the second signal includes at least one of: a DMRS, an SRS, an E-SRS, a CPRS, or a CSI-RS.

**In** some embodiments, the second signal is implemented as any one or more REs. Or the second signal is a signal formed by any one or more REs. Or the second signal is a signal carried on any one or more REs.

In some embodiments, the second signal is a data signal. Or the second signal is a signal in the transport blocks carried on the n channels.

In some embodiments, the second signal is a signal that performs a sensing service, or a signal that performs a sensing operation, or a signal that implements a sensing target, or a signal that acquires a sensing result, or a signal that performs a sensing service designed in the future, or a signal that performs a sensing operation designed in the future, or a signal that implements a sensing target designed in the future, or a signal that acquires a sensing result designed in the future.

In some embodiments, before process 1320a is performed, the network device receives the second signal carried on the n channels; or the network device receives the transport block carried on the n channels, wherein the transport block includes the second signal; or the network device receives the second signal and the transport block that are carried on the n channels.

In some embodiments, the network device acquires the second sensing result by measuring the second signal carried on the n channels.

It should be understood that, in a case where at least one of the second signal or the transport block is transmitted by the terminal device to the network device, the network device acquires the second sensing result based on the second signal carried on the n channels. That is, in a case where the network device belongs to the first node illustrated in FIG. 8 or FIG. 9, the network device performs process 1220a.

For related content of a constraint condition, reference may be made to process 910. Details are not elaborated herein any further.

**In** process 1320b, a second signal is transmitted on n channels that satisfy a constraint condition, the second signal is used to acquire a second sensing result.

In some embodiments, the second signal includes at least one of: a DMRS, an SRS, an E-SRS, a CPRS, or a CSI-RS.

In some embodiments, the second signal is implemented as any one or more REs. Or the second signal is a signal formed by any one or more REs. Or the second signal is a signal carried on any one or more REs.

In some embodiments, the second signal is a data signal. Or the second signal is a signal in the transport blocks carried on the n channels.

In some embodiments, the second signal is a signal that performs a sensing service, or a signal that performs a sensing operation, or a signal that implements a sensing target, or a signal that acquires a sensing result, or a signal that performs a sensing service designed in the future, or a signal that performs a sensing operation designed in the future, or a signal that implements a sensing target designed in the future, or a signal that acquires a sensing result designed in the future.

In some embodiments, the network device transmits the second signal on the n channels; or the network device transmits the transport block on the n channels, wherein the transport block includes the second signal; or the network device transmits the second signal and the transport block on the n channels.

It should be understood that, in a case where at least one of the second signal or the transport block is transmitted by the network device to the terminal device, the terminal device acquires the second sensing result based on the second signal carried on the n channels. That is, in a case where the network device belongs to the second node illustrated in FIG. 10 or FIG. 11, the network device performs process 1220b.

In some embodiments, the RBs occupied by the second signal are continuous or discontinuous, and the RBs occupied by the second signal correspond to one or more carriers. It should also be understood that the second signal occupies RBs on one or more carriers, wherein the number of RBs occupied by the second signal on different carriers may be the same or different, and the RBs are adjacent or spaced apart from each other.

In some embodiments, the second sensing result corresponds to one sensing operation; and/or, the second sensing result corresponds to one sensing task; and/or, the second sensing result corresponds to one sensing target; and/or, the second sensing result corresponds to one sensing measurement; and/or, the second sensing result corresponds to one sensing estimation; and/or, the second sensing result is transmitted over one channel; and/or, the second sensing result includes n sets of information, wherein one of the n sets of information is acquired based on one of the n channels; and/or, the second sensing result includes one set of information;

wherein the one set of information includes a joint detection result of the n sets of information, or a joint estimation result of the n sets of information, or an average value determined based on the n sets of information, or a median determined based on the n sets of information, or a maximum value determined based on the n sets of information, or a minimum value determined based on the n sets of information.

In some embodiments, the n channels satisfy at least one of the following conditions:

channels with the same modulation order are present in the n channels;
channels with different modulation orders are present in the n channels;
channels with the same code rate are present in the n channels; or
channels with different code rates are present in the n channels.

In some embodiments, the n channels carry a total of n transport blocks. The mapping relationship between the n transport blocks and the n channels includes at least one of:

the n transport blocks are one-to-one mapped to the n channels in ascending order of frequency in the frequency domain; or
the n transport blocks are one-to-one mapped to the n channels in a time domain from earlier to later.

In some embodiments, the n channels include a channel A, a channel B, a channel C, and a channel D. The channel A, the channel B, the channel C, and the channel D are arranged in ascending order of frequency in the frequency domain or in descending order of frequency in the frequency domain.

In some embodiments, the n channels include a channel A, a channel B, a channel C, and a channel D. The channel A, the channel B, the channel C, and the channel D are arranged in a time domain from earlier to later or from later to earlier.

In some embodiments, the n channels include at least two fourth channels, wherein the at least two fourth channels repeatedly transmit first transport blocks, and RV numbers corresponding to the first transport blocks carried on the at least two fourth channels are arranged in a first order.

For related content of a constraint condition, reference may be made to process 910. Details are not elaborated herein any further.

In some embodiments, the n channels include at least two fourth channels, wherein the at least two fourth channels repeatedly transmit first transport blocks, and the first transport blocks in different fourth channels correspond to different RV numbers.

The RV number may be implemented as an RV ID or an RV index.

In some embodiments, the RV numbers corresponding to the first transport blocks in the at least two fourth channels are arranged in a first order.

In some embodiments, the first order is defined by a communication protocol or determined based on DCI.

In some embodiments, the n channels include at least two fifth channels, wherein the at least two fifth channels respectively transmit different transport blocks, and the transport blocks on different fifth channels correspond to different HARQ IDs.

The HARQ ID may be implemented as a HARQ number or a HARQ index.

In some embodiments, the HARQ IDs corresponding to the transport blocks in the at least two fifth channels are arranged in a second order.

In some embodiments, the second order is defined by a communication protocol or determined based on DCI.

It should also be understood that channels in the fourth channel are distinguished using different RV numbers, and channels in the fifth channel are distinguished using different HARQ IDs.

For related content of the fourth channel and the fifth channel, reference may be made to the embodiment illustrated in FIG. 12. Details are not elaborated herein any further.

In some embodiments, in a case where a time-frequency resource corresponding to a certain channel is unavailable, resource mapping is performed by skipping the unavailable time-frequency resource based on the agreement of the communication protocol, or no transmission is performed on the channel. The unavailable time-frequency resource includes, but is not limited to, at least one of: a PRB corresponding to a certain channel overlaps a PRB that transmits an SSB, a conflict between transmission directions of a certain channel and n channels, a time-frequency resource corresponding to a certain channel has been pre-configured by the network device, or another transmission with a higher priority is performed on a certain channel. In some embodiments, a time-frequency resource of a certain channel has been scheduled by a PDCCH subjected to CRC scrambling by a C-RNTI, or an MCS-C-RNTI, or a CS-RNTI, or a G-RNTI, or a G-CS-RNTI, or an MCCH-RNTI, or scheduled by SPS, or the like.

In the present disclosure, the sensing result includes at least one of: a detection result of a target, a detection result of an environment, a recognition result of a target, a recognition result of an environment, a measurement result of a target, or a measurement result of an environment. The measurement includes at least one operation of measuring a distance, measuring a delay, measuring an angle, measuring a moving speed, measuring a phase, or the like.

In some embodiments, the sensing is equivalent to or replaced with at least one of: positioning, ranging, speed measurement, angle measurement, target imaging, target detection, target tracking, or target recognition.

It should be noted that process 1310 is an optional process. Process 1310 may be indenpendently implemented as a configuration method.

In summary, in the method according to the embodiments of the present disclosure, because the n channels occupy a large number of time-frequency resources, the second signal carried on the n channels can satisfy the sensing requirement, and the constraint condition effectively improves the transmission efficiency of the n channels. The method according to the embodiments of the present disclosure not only avoids a waste caused by occupying excessive transmission resources by the n channels, but also avoids a reduction in sensing precision and communication quality caused by occupying unreasonable transmission resources by the n channels, thereby implementing both a sensing requirement and a communication requirement. In addition, RV numbers and/or HARQ IDs of transport blocks carried on the n channels may be flexibly adjusted based on different orders, and time-frequency resources of the n channels are fully used, such that a retransmission gain, coding and decoding gains, and a coverage gain can be acquired during the transmission of the transport blocks. The method according to the embodiments of the present disclosure not only reduces the control overhead of the n channels using the constraint condition, but also improves the transmission reliability and the sensing precision of the n channels.

FIG. 14 illustrates a schematic flowchart of a method for transmitting a channel according to some embodiments of the present disclosure. A schematic illustration will be provided by taking the execution of the method by a terminal device illustrated in FIG. 6 and a network device illustrated in FIG. 7 as an example. The method includes at least part of the following processes.

**In process 1401,** the network device configures a first coefficient set for the terminal device.

The first coefficient set includes one or more set elements.

In some embodiments, the first coefficient set is configured by the network device; or the first coefficient set is configured by the network device based on the capability information reported by the terminal device; or the first coefficient set is defined by a communication protocol.

In some embodiments, the first coefficient set includes z set elements, wherein z is an integer greater than or equal to 1, and each set element is a positive number. In some embodiments, the first coefficient set includes four set elements, and the first coefficient set = {1, 0.5, 0.25, 0.125}. It should be understood that the value of each set element in the first coefficient set may also be a positive number such as 2, 3, 2.5, 4, 0.3, or 0.9. {1, 0.5, 0.25, 0.125} does not mean that the value of the set element is limited.

**In process 1402,** the network device transmits first information to the terminal device, wherein the first information is used to indicate a first parameter.

In some embodiments, the first parameter includes at least one of: a first coefficient, wherein the value of the first coefficient is greater than 1 or greater than 0 and less than 1; the number of RBs occupied by the first signal; the number of time-domain units occupied by the first signal; the number of REs occupied by the first signal; or a first overhead amount for sensing function scheduling.

The first coefficient is alternatively referred to as a scaling factor, an extension factor, an adjustment factor, a scaling coefficient, an extension coefficient, or an adjustment coefficient.

In some embodiments, before process 1402 is performed, the network device receives the capability information reported by the terminal device, and the network device configures the first parameter based on the capability information.

In some embodiments, the first information includes at least one of DCI or higher layer signaling.

In some embodiments, the first information includes a first coefficient field, wherein the first coefficient field is used to indicate the value of a first coefficient F. In some embodiments, the first coefficient field corresponds to m bits, wherein m is an integer greater than or equal to 0.

In some embodiments, a mapping relationship or a one-to-one correspondence is present between the value of the first coefficient field and the value of the first coefficient. For example, in a case where the bit codeword of the first coefficient field is a first codeword, the value of the first coefficient is a first value. In some embodiments, in a case where the bit codeword of the first coefficient field is p1, the value of the first coefficient is q1; and in a case where the bit codeword of the first coefficient field is p2, the value of the first coefficient is q2, wherein p1 is different from p2, q1 is different from q2, and both q1 and q2 belong to the first coefficient set.

In the embodiments of the present disclosure, m = 2 is used as an example to exemplarily provide a correspondence between the first coefficient field and the first coefficient, as illustrated in Table 1.

Table 1. A correspondence between the first coefficient field and the first coefficient

| Bit codeword of the first coefficient field | Value of the first coefficient F |
|---|---|
| 00 | 1 |
| 01 | 0.5 |

(continued)

| Bit codeword of the first coefficient field | Value of the first coefficient F |
|---|---|
| 10 | 0.25 |
| 11 | 0.125 |

It should be noted that the value of the first coefficient illustrated in Table 1 is only used as an example instead of a limitation, and the value of the first coefficient may also be a positive number such as 2, 3, 2.5, 4, 0.3, or 0.9.

Similarly, the values of the first coefficients corresponding to the bit codewords illustrated in Table 1 are also merely used as an example instead of a limitation. For example, "00" corresponds to 0.125, "01" corresponds to 0.5, "10" corresponds to 1, and "11" corresponds to 0.5. All possibilities are not listed one by one herein. However, it should be understood that any bit codeword corresponding to m bits may be in a one-to-one correspondence with one set element in the first coefficient set. Even in a case where the first coefficient set is not present, that is, in a case where the network device does not configure the first coefficient set for the terminal device, any bit codeword corresponding to the m bits may be in a one-to-one correspondence with one positive number.

In addition, each row in Table 1 may be used independently. For example, only "00" indicates that the value of the first coefficient is 1, only "01" indicates that the value of the first coefficient is 0.5, only "10" indicates that the value of the first coefficient is 0.25, and only "11" indicates that the value of the first coefficient is 0.125. Any two or any three rows in Table 1 may be used in combination. For example, "00" indicates that the value of the first coefficient is 1, and "01" indicates that the value of the first coefficient is 0.5; "10" indicates that the value of the first coefficient is 0.25, and "11" indicates that the value of the first coefficient is 0.125; "01" indicates that the value of the first coefficient is 0.5, "10" indicates that the value of the first coefficient is 0.25, and "11" indicates that the value of the first coefficient is 0.125; and so on, which are not listed one by one herein.

**In** process 1403, the network device determines the TBS based on the first parameter.

In some embodiments, a DCI format used by the DCI in the first information is a DCI format 1-0 or a DCI format 0-1.

For details about determining the TBS, reference may be made to related content in process 640. Two examples are used for schematic illustration herein.

Example 1:

Taking the channel being a PDSCH as an example, the first information includes DCI in a DCI format 1-0 and higher layer signaling. The network device schedules the PDSCH to transmit data based on the DCI format 1-0, and the configuration of the channel overhead within the transmission resource based on a higher-layer parameter implicitly triggers the indication of the sensing function; that is, the network device configures $N'^{PRB}_{oh}$ over the higher-layer parameter. $N'^{PRB}_{oh}$ represents a first overhead amount, wherein the first overhead amount includes the number of REs occupied by control information such as a synchronization channel, a PBCH, a PDCCH, and a PUCCH, and the number of REs occupied by control information for a sensing service or a first signal.

The first parameter includes a first coefficient F and $N'^{PRB}_{oh}$. The first number includes a first code rate $R1$, a modulation order $Q$, the number of transmission layers $v$, and the number of first REs $N_{RE}1$. Then, $N'_{RE}2 = N^{RB}_{sc} \times N^{sh}_{symb} - N^{PRB}_{DMRS} - N'^{PRB}_{oh}$ is determined. Then, $N_{RE}2 = min(156, N'_{RE}2) \times n_{PRB}$ is determined, wherein $n_{PRB}$ represents the number of PRBs allocated by the network device to the channel. Then, $N_{info} = N_{RE}2 \times R1 \times F \times Q_m \times v$ or $N_{info} = N_{RE}2 \times R1 / F \times Q_m \times v$ is determined.

In a case where $N_{info} \leq X$, the TBS is determined by quantizing and looking up a table; and in a case where $N_{info} > X$, the TBS is determined by quantitative calculating. X is a positive integer defined by a communication protocol. In some embodiments, X = 3824, and in addition, X may be larger or smaller than 3824.

In some embodiments, the TBS is determined based on a table lookup manner or a calculation manner in a related section of a 3GPP related protocol.

Example 2:

Taking the channel being a PUSCH as an example, the first information includes DCI in a DCI format 0-1 and higher layer signaling. The DCI schedules the PUSCH to transmit data and satisfies a sensing requirement over transmission of CPRS near a plurality of frequency points. The first information activates a plurality of carriers and/or activates a plurality of BWPs using a higher-layer parameter.

The first parameter includes a first coefficient F and the number of REs occupied by the first signal $N_1^{PRB}$. The first number includes a first code rate R 1, a modulation order $Q_m$, number of transmission layers v. Then,

$$N'_{RE}2 = N_{sc}^{RB} \times N_{symb}^{sh} - N_{DMRS}^{PRB} - N_{oh}^{PRB} - N_1^{PRB}$$

is determined. Then, $N_{RE}2 = min(156, N'_{RE}\ 2) \times n_{PRB}$ is determined, wherein $n_{PRB}$ represents the total number of PRBs required for the transmission of the first signal. Then, $N = N_{RE}2 \times R1 \times Q_m \times v \times F$ or $N_{info} = N_{RE}2 \times R1 \times Q_m \times v \div F$ is determined.

In a case where $N_{info} \leq X$, the TBS is determined by quantizing and looking up a table; and in a case where $N_{info} > X$, the TBS is determined by quantitative calculating. X is a positive integer defined by a communication protocol. In some embodiments, X = 3824, and in addition, X may be larger or smaller than 3824.

In some embodiments, the TBS is determined based on a table lookup manner or a calculation manner in a related section of a 3GPP related protocol.

**In process 1404,** the network device transmits at least one of the transport block or the first signal to the terminal device on the channel.

The TBS of the transport block transmitted by the network device is the TBS determined in process 1003, and the first signal is used to acquire the first sensing result.

**In** process 1405, the terminal device determines the TBS based on the first parameter.

For content of determining the TBS by the terminal device, reference may be made to process 1403. Details are not elaborated herein any further.

**In** process 1406, the terminal device receives the transport block over the channel based on the TBS.

The TBS of the transport block received by the terminal device is the TBS determined in process 1405.

**In** process 1407, the terminal device acquires a first sensing result based on the first signal.

In some embodiments, the terminal device measures the first signal, and acquires the first sensing result based on a measurement result.

In some embodiments, the first signal includes at least one of: a DMRS, an SRS, an E-SRS, a CPRS, a CSI-RS, or a data signal.

In some embodiments, the sensing result includes at least one of: a detection result of a target, a detection result of an environment, a recognition result of a target, a recognition result of an environment, a measurement result of a target, or a measurement result of an environment. The measurement includes at least one operation of measuring a distance, measuring a delay, measuring an angle, measuring a moving speed, measuring a phase, or the like.

In some embodiments, the sensing is equivalent to or replaced with at least one of: positioning, ranging, speed measurement, angle measurement, target imaging, target detection, target tracking, or target recognition.

It should be noted that processes 1401, 1402, 1404, 1406, and 1407 are optional processes. The execution order of the above processes may be adaptively adjusted based on actual circumstances. For example, process 1403 is performed before process 1401, or process 1403 is performed before process 1402, process 1405 is performed before process 1404, and process 1405 is performed before process 1403. The above processes may be used alone or in combination. For example, process 1401 is independently implemented as a configuration method, or process 1402 is independently implemented as a configuration method, process 1404 is independently implemented as a method for transmitting a channel, process 1406 is independently implemented as a method for transmitting a channel, process 1407 is independently implemented as a sensing method, process 1402 and process 1401 are combined to be implemented as a configuration method, process 1402 and process 1403 are combined to be implemented as a configuration method, process 1403 and process 1405 are combined to be implemented as a method for determining a TBS, or process 1404 and process 1406 are combined to be implemented as a method for transmitting a channel. The above processes may be split. For example, process 1402 is split into a process of transmitting first information that indicates a first parameter and a process of transmitting first information that indicates a second parameter.

**In** summary, in the method according to the embodiments of the present disclosure, the sensing requirement is satisfied using the first signal carried on the channel. Meanwhile, considering that in a case where the channel occupies more time-frequency resources to satisfy the sensing requirement, a TBS of the transport block carried on the channel increases accordingly, a solution of determining the TBS based on the first parameter is designed to ensure the wireless communication quality. Compared with filling a large number of dummy bits in a transport block with an increased TBS, in the method according to the embodiments of the present disclosure, transmission parameters of the channel are effectively adjusted using the first parameter. For example, a code rate and an amount of intermediate information are reduced, such that the transport block with the increased TBS carries more valid bits instead of a large number of dummy bits, thereby reducing transmission of dummy bits in the channel, improving reliability, robustness, and efficiency of channel transmission, and implementing both a sensing requirement and a communication requirement. In addition, the terminal device is further supported to report the capability information to assist the network device in configuring the first parameter, such that the transport block/the first signal carried on the channel better conforms to a receiving capability of the terminal device, thereby improving the communication efficiency and transmission quality of a communication system.

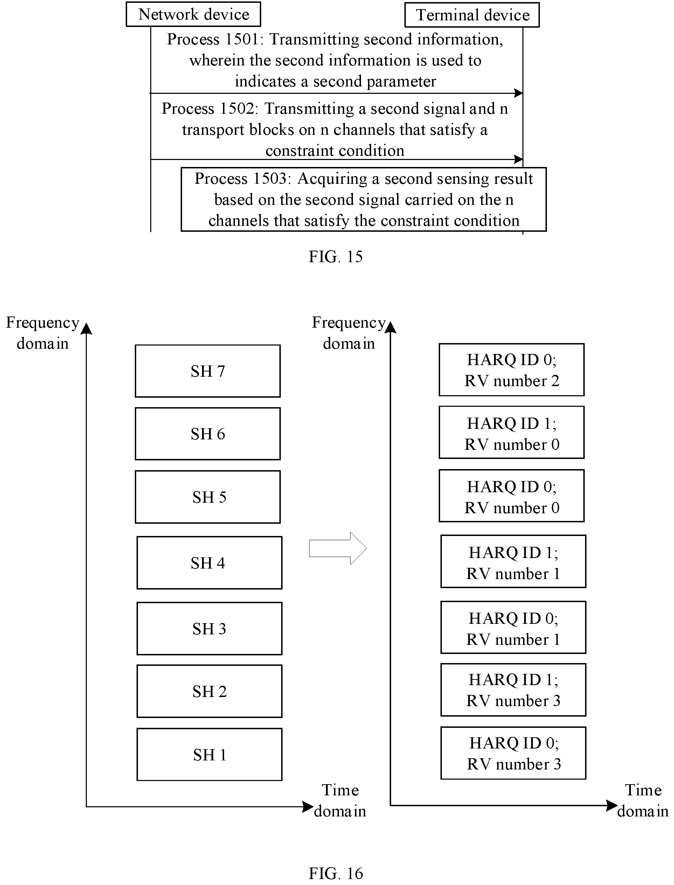

FIG. 15 illustrates a schematic flowchart of a method for transmitting a channel according to some embodiments of the present disclosure. A schematic illustration will be provided by taking the execution of the method by a terminal device illustrated in FIG. 12 and a network device illustrated in FIG. 13 as an example. The method includes at least part of the following processes.

**In process 1501,** the network device transmits second information, wherein the second information is used to indicate a second parameter.

**In** some embodiments, the second parameter includes at least one of: ttitimeme-domain resources of at least part of the n channels; frequency-domain resources of at least part of the n channels; a time-domain interval between time-domain resources of at least two channels; a frequency-domain interval between frequency-domain resources of at least two channels; a maximum number of HARQ processes of the n channels; HARQ IDs of at least part of the n channels; RV numbers of at least part of the n channels; a first order; or a second order.

For other content, reference may be made to process 1310. Details are not elaborated herein any further.

**In** process 1502, the network device transmits the second signal and the n transport blocks on the n channels that satisfy the constraint condition.

For related content, reference may be made to process 1320b, which is not elaborated herein any further.

The network device respectively performs at least one of the following operations on the n transport blocks: CRC code addition, channel coding, rate matching, or the like.

The network device maps the n transport blocks to the n channels in a one-to-one correspondence, and transmits the n transport blocks over the n channels. Each transport block has a corresponding RV number and/or HARQ ID.

In some embodiments, as illustrated in FIG. 16, n is 7, and the n channels occupy the same time-domain resource. The n channels are arranged in ascending order of frequency in the frequency domain, and the n channels are respectively SH 1, SH 2, SH 3, SH 4, SH 5, SH 6, and SH 7.

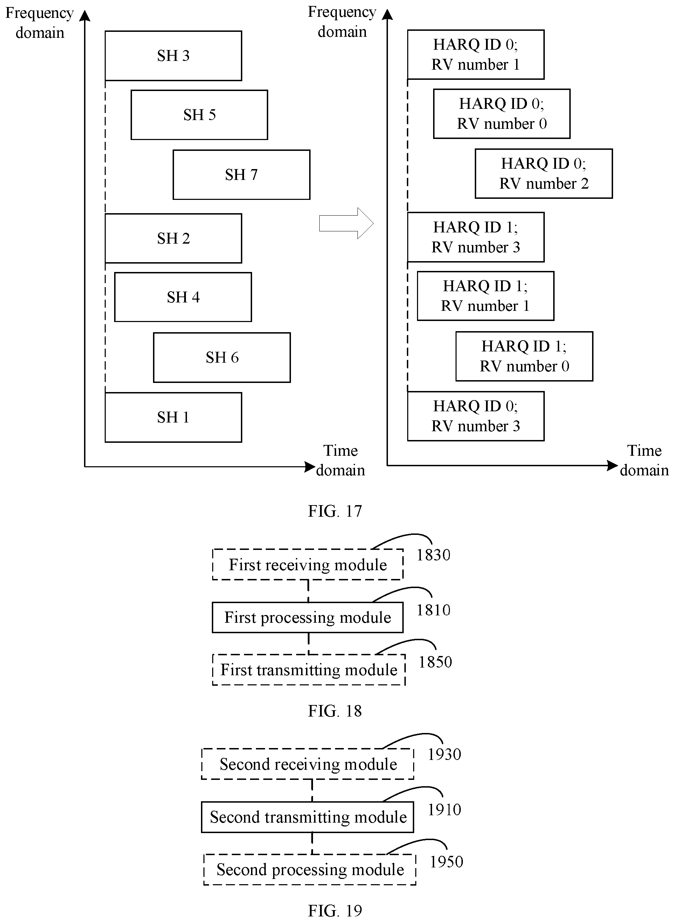

Or, as illustrated in FIG. 17, n is 7, time-domain resources occupied by the n channels belong to a same time-domain resource set, and/or a time-domain interval between the time-domain resources occupied by the n channels is less than a first threshold. The n channels are arranged in ascending order of frequency in the frequency domain and from earlier to later in a time domain.

Assuming that the maximum number of HARQ processes y indicated by the second information is 2, the second order is 0 and 1. Assuming that the first order is 3, 1, 0, and 2,

in this case, RV numbers and HARQ IDs of the n transport blocks carried on the n channels are as follows: a HARQ ID of the SH 1 is 0, and a RV number of the SH 1 is 3; a HARQ ID of the SH 2 is 1, and a RV number of the SH 2 is 3; a HARQ ID of the SH 3 is 0, and a RV number of the SH 3 is 1; a HARQ ID of the SH 4 is 1, and a RV number of the SH 4 is 1; a HARQ ID of the SH 5 is 0, and a RV number of the SH 5 is 0; a HARQ ID of the SH 6 is 1, and a RV number of the SH 4 is 0; and a HARQ ID of the SH 7 is 0, and a RV number of the SH 4 is 2.

FIG. 16 illustrates RV numbers and HARQ IDs of transport blocks carried on n channels in a case where the channels occupy the same time-domain resource.

FIG. 17 illustrates RV numbers and HARQ IDs of transport blocks carried on n channels in a case where the channels occupy different time-domain resources.

**In process 1503,** the terminal device acquires a second sensing result based on a second signal carried on the n channels that satisfy the constraint condition.

In some embodiments, the terminal device measures the second signal carried on the n channels, and acquires the second sensing result based on the measurement result.

In some embodiments, the second signal includes at least one of: a DMRS, an SRS, an E-SRS, a CPRS, a CSI-RS, or a data signal.

In some embodiments, the second sensing result corresponds to one sensing operation; and/or, the second sensing result corresponds to one sensing task; and/or the second sensing result corresponds to one sensing target; and/or, the second sensing result corresponds to one sensing measurement; and/or the second sensing result corresponds to one sensing estimation; and/or the second sensing result is transmitted over one channel; and/or, the second sensing result includes n sets of information, wherein one of the n sets of information is acquired based on one of the n channels; and/or, the second sensing result includes one set of information.

In some embodiments, the sensing result includes at least one of: a detection result of a target, a detection result of an environment, a recognition result of a target, a recognition result of an environment, a measurement result of a target, or a measurement result of an environment. The measurement includes at least one operation of measuring a distance, measuring a delay, measuring an angle, measuring a moving speed, measuring a phase, or the like.

In some embodiments, the sensing is equivalent to or replaced with at least one of: positioning, ranging, speed measurement, angle measurement, target imaging, target detection, target tracking, or target recognition.

It should be noted that process 1501 and process 1503 are optional processes. The execution order of the above processes may be adaptively adjusted based on actual circumstances. The above processes may be used alone or in combination. For example, process 1501 is independently implemented as a configuration method, or process 1503 is independently implemented as a sensing method, process 1501 and process 1502 are combined to be implemented as a transmission method, or process 1502 and process 1503 are combined to be implemented as a sensing method, or the like. The above processes may be split. For example, process 1501 is split into a process of transmitting the second information that indicates the first parameter and a process of transmitting the second information that indicates the third parameter; or process 1502 is split into processes of respectively transmitting the n transport blocks.

In summary, in the method according to the embodiments of the present disclosure, because the n channels occupy a large number of time-frequency resources, the second signal carried on the n channels can satisfy the sensing requirement, and the constraint condition effectively improves the transmission efficiency of the n channels. The method according to the embodiments of the present disclosure not only avoids a waste caused by occupying excessive transmission resources by the n channels, but also avoids a reduction in sensing precision and communication quality caused by occupying unreasonable transmission resources by the n channels, thereby implementing both a sensing requirement and a communication requirement. In addition, RV numbers and/or HARQ IDs of transport blocks carried on the n channels may be flexibly adjusted based on different orders, and time-frequency resources of the n channels are fully used, such that a retransmission gain, coding and decoding gains, and a coverage gain can be acquired during the transmission of the transport blocks. The method according to the embodiments of the present disclosure not only reduces the control overhead of the n channels using the constraint condition, but also improves the transmission reliability and the sensing precision of the n channels.

FIG. 18 illustrates a structural block diagram of an apparatus for transmitting a channel according to some embodiments of the present disclosure. The apparatus may be implemented as the first node illustrated in FIG. 2, FIG. 3, FIG. 6, or FIG. 7, or may be implemented as a part of the first node illustrated in FIG. 2, FIG. 3, FIG. 6, or FIG. 7. The apparatus includes at least part of a first processing module 1810, a first receiving module 1830, or a first transmitting module 1850. The first receiving module 1830 and the first transmitting module 1850 are optional modules.

The first processing module 1810 is configured to determine a TBS of a transport block carried on a channel based on a first parameter, wherein a first signal carried on the channel is used to acquire a first sensing result; and the first parameter includes at least one of: a first coefficient, wherein the value of the first coefficient is greater than 1 or greater than 0 and less than 1; the number of resource blocks RBs occupied by the first signal; the number of time-domain units occupied by the first signal; the number of resource elements REs occupied by the first signal; or a first overhead amount for sensing function scheduling.

In some embodiments, the first parameter includes the first coefficient; and the TBS is determined based on a product of the first number and the first coefficient; or the TBS is determined based on a quotient of the first number and the first coefficient.

In some embodiments, the value of the first number is determined based on at least one of: a first code rate, a modulation order, the number of transmission layers, the number of first REs, or a first product.

The first product is a product of at least two of the first code rate, the modulation order, the number of the transmission layers, and the number of the first REs, and the number of the first REs is less than or equal to the number of REs in a time-frequency resource allocated to the channel.

In some embodiments, the value of the first number is equal to the value of the first product, and the first product is a product of the first code rate, the modulation order, the number of the transmission layers, and the number of the first REs.

The TBS is determined based on a product of the first product and the first coefficient, or the TBS is determined based on a quotient of the first product and the first coefficient.

In some embodiments, the value of the first number is determined based on the first code rate; and the TBS is determined based on a product or a quotient of the first code rate and the first coefficient.

In some embodiments, the value of the first number is further determined based on the modulation order, the number of the transmission layers, and the number of the first REs.

The TBS is determined based on a product of the product of the first code rate and the first coefficient, the modulation order, the number of the transmission layers, and the number of the first REs, or the TBS is determined based on a product of the quotient of the first code rate and the first coefficient, the modulation order, the number of the transmission layers, and the number of the first REs.

In some embodiments, the TBS is determined based on the number of second REs, wherein the number of second REs is determined based on the first parameter.

The number of the second REs is less than or equal to the number of REs in a time-frequency resource allocated to the channel.

In some embodiments, the first parameter includes at least one of the number of RBs occupied by the first signal, the number of time-domain units occupied by the first signal, the number of REs occupied by the first signal, or a first overhead amount.

In some embodiments, the TBS is determined based on a product of the number of the second REs, the first code rate, the modulation order, and the number of the transmission layers.

In some embodiments, the first signal includes at least one of: a DMRS, an SRS, an SRS, a CPRS, or a CSI-RS.

In some embodiments, the first parameter is indicated by at least one of DCI or higher layer signaling.

In some embodiments, the apparatus further includes: a first receiving module 1830, configured to receive at least one of the first signal or the transport block carried on the channel.

In some embodiments, the apparatus further includes: a first receiving module 1830, configured to receive a first coefficient set, wherein the first coefficient set includes the first coefficient; or a first transmitting module 1850, configured to transmit the first coefficient set.

In some embodiments, the apparatus further includes: a first transmitting module 1850, configured to report capability information, wherein the capability information is used to configure the first parameter; or a first receiving module 1830, configured to receive the capability information.

In some embodiments, the apparatus further includes: a first receiving module 1830, configured to receive first information, wherein the first information is used to indicate the first parameter; or a first transmitting module 1830, configured to transmit the first information.

In some embodiments, the first processing module 1810 is configured to perform at least the determining process, the processing process, and the acquiring process in the above embodiments, such as, one or more of process 210, process 310, process 640, process 650a, process 750a, process 1403, process 1405, and process 1407.

In some embodiments, the first receiving module 1830 is configured to perform the receiving processes in the above embodiments, such as, one or more of process 620, process 630, process 710, and process 1406.

In some embodiments, the first transmitting module 1850 is configured to perform at least the transmitting processes in the above embodiments, such as, one or more of process 610, process 650b, process 720, process 730, process 750b, process 1401, process 1402, and process 1404.

In some embodiments, the apparatus according to the embodiments of the present disclosure includes one first transmitting module 1850 or a plurality of first transmitting modules 1850. The processes performed by different first transmitting modules 1850 are completely the same, partially the same, or completely different.

In some embodiments, the apparatus according to the embodiments of the present disclosure includes one first processing module 1810 or a plurality of first processing modules 1810. The processes performed by different first determining modules 1510 are completely the same, partially the same, or completely different.

In some embodiments, the apparatus according to the embodiments of the present disclosure includes one first receiving module 1830 or a plurality of first receiving modules 1830. The processes performed by different first receiving modules 1830 are completely the same, partially the same, or completely different.

In summary, in the apparatus according to the embodiments of the present disclosure, the sensing requirement is satisfied using the first signal carried on the channel. In addition, considering that in a case where the channel occupies more time-frequency resources to satisfy the sensing requirement, the TBS of the transport block carried on the channel also increases accordingly, a solution in which the TBS is determined based on the first parameter is designed to ensure the wireless communication quality. Compared with filling a large number of dummy bits in a transport block with an increased TBS, in the apparatus according to the embodiments of the present disclosure, transmission parameters of the channel are effectively adjusted using the first parameter. For example, a code rate and an amount of intermediate information are reduced, such that the transport block with the increased TBS carries more valid bits instead of a large number of dummy bits, thereby reducing transmission of dummy bits in the channel, improving reliability, robustness, and efficiency of channel transmission, and implementing both a sensing requirement and a communication requirement. In addition, the terminal device is further supported to report the capability information to assist the network device in configuring the first parameter, such that the transport block/the first signal carried on the channel better conforms to a receiving capability of the terminal device, thereby improving the communication efficiency and transmission quality of a communication system.

FIG. 19 illustrates a structural block diagram of an apparatus for transmitting a channel according to some embodiments of the present disclosure. The apparatus may be implemented as the second node illustrated in FIG. 4, FIG. 5, FIG. 6, or FIG. 7, or may be implemented as a part of the second node illustrated in FIG. 4, FIG. 5, FIG. 6, or FIG. 7. The apparatus includes at least part of a second transmitting module 1910, a second receiving module 1930, or a second processing module 1950. The second receiving module 1930 and the second processing module 1950 are optional modules.

The second transmitting module 1910 is configured to transmit at least one of a transport block or a first signal on a channel, wherein the first signal carried on the channel is used to acquire a first sensing result; and the first parameter includes at least one of: a first coefficient, wherein the value of the first coefficient is greater than 1 or greater than 0 and less than 1; the number of resource blocks RBs occupied by the first signal; the number of time-domain units occupied by the first signal; the number of resource elements REs occupied by the first signal; or a first overhead amount for sensing function scheduling.

In some embodiments, the first parameter includes the first coefficient; and the TBS is determined based on a product of the first number and the first coefficient; or the TBS is determined based on a quotient of the first number and the first coefficient.

In some embodiments, the value of the first number is determined based on at least one of: a first code rate, a modulation order, the number of transmission layers, the number of first REs, or a first product.

The first product is a product of at least two of the first code rate, the modulation order, the number of the transmission layers, and the number of the first REs, and the number of the first REs is less than or equal to the number of REs in a time-frequency resource allocated to the channel.

In some embodiments, the value of the first number is equal to the value of the first product, and the first product is a product of the first code rate, the modulation order, the number of the transmission layers, and the number of the first REs.

The TBS is determined based on a product of the first product and the first coefficient, or the TBS is determined based on a quotient of the first product and the first coefficient.

In some embodiments, the value of the first number is determined based on the first code rate; and the TBS is determined based on a product or a quotient of the first code rate and the first coefficient.

In some embodiments, the value of the first number is further determined based on the modulation order, the number of the transmission layers, and the number of the first REs.

The TBS is determined based on a product of the product of the first code rate and the first coefficient, the modulation order, the number of the transmission layers, and the number of the first REs, or the TBS is determined based on a product of the quotient of the first code rate and the first coefficient, the modulation order, the number of the transmission layers, and the number of the first REs.

In some embodiments, the TBS is determined based on the number of second REs, wherein the number of second REs is determined based on the first parameter.

The number of the second REs is less than or equal to the number of REs in a time-frequency resource allocated to the channel.

In some embodiments, the first parameter includes at least one of the number of RBs occupied by the first signal, the number of time-domain units occupied by the first signal, the number of REs occupied by the first signal, or a first overhead amount.

In some embodiments, the TBS is determined based on a product of the number of the second REs, the first code rate, the modulation order, and the number of the transmission layers.

In some embodiments, the first signal includes at least one of: a DMRS, an SRS, an SRS, a CPRS, or a CSI-RS.

In some embodiments, the first parameter is indicated by at least one of DCI or higher layer signaling.

In some embodiments, the apparatus further includes: a second receiving module 1930, configured to receive a first coefficient set, wherein the first coefficient set includes the first coefficient.

In some embodiments, the second transmitting module 1910 is further configured to transmit the first coefficient set.

In some embodiments, the second transmitting module 1910 is further configured to report capability information, wherein the capability information is used to configure the first parameter.

In some embodiments, the second receiving module 1930 is further configured to receive the capability information.

In some embodiments, the second receiving module 1930 is further configured to receive first information, wherein the first information is used to indicate the first parameter.

In some embodiments, the second transmitting module 1910 is further configured to transmit the first information.

In some embodiments, the first signal includes at least one of: a DMRS, an SRS, an enhanced-SRS, a CPRS, or a CSI-RS.

In some embodiments, the second processing module 1950 is configured to perform at least the determining process, the processing process, and the acquiring process in the above embodiments, such as, one or more of process 640, process 650a, process 740, process 750a, process 1403, process 1405, and process 1407.

In some embodiments, the second receiving module 1930 is configured to perform at least the receiving processes in the above embodiments, such as, one or more of process 620, process 630, process 710, and process 1406.

In some embodiments, the second transmitting module 1910 is configured to perform at least the transmitting processes in the above embodiments, such as, one or more of process 410, process 510, process 610, process 650b, process 720, process 730, process 750b, process 1401, process 1402, and process 1404.

In some embodiments, the apparatus according to the embodiments of the present disclosure includes one second transmitting module 1910 or a plurality of second transmitting modules 1910. In some embodiments, the processes performed by different second transmitting modules 1910 are completely the same, partially the same, or completely different.

In some embodiments, the apparatus according to the embodiments of the present disclosure includes one second processing module 1950 or a plurality of second processing modules 1950. The processes performed by different second processing modules 1950 are completely the same, partially the same, or completely different.

In some embodiments, the apparatus according to the embodiments of the present disclosure includes one second receiving module 1930 or a plurality of second receiving modules 1930. The processes performed by different second receiving modules 1930 are completely the same, partially the same, or completely different.

In summary, in the apparatus according to the embodiments of the present disclosure, the sensing requirement is satisfied using the first signal carried on the channel. In addition, considering that in a case where the channel occupies more time-frequency resources to satisfy the sensing requirement, the TBS of the transport block carried on the channel also increases accordingly, a solution in which the TBS is determined based on the first parameter is designed to ensure the wireless communication quality. Compared with filling a large number of dummy bits in a transport block with an increased TBS, in the apparatus according to the embodiments of the present disclosure, transmission parameters of the channel are effectively adjusted using the first parameter. For example, a code rate and an amount of intermediate information are reduced, such that the transport block with the increased TBS carries more valid bits instead of a large number of dummy bits, thereby reducing transmission of dummy bits in the channel, improving reliability, robustness, and efficiency of channel transmission, and implementing both a sensing requirement and a communication requirement. In addition, the terminal device is further supported to report the capability information to assist the network device in configuring the first parameter, such that the transport block/the first signal carried on the channel better conforms to a receiving capability of the terminal device, thereby improving the communication efficiency and transmission quality of a communication system.

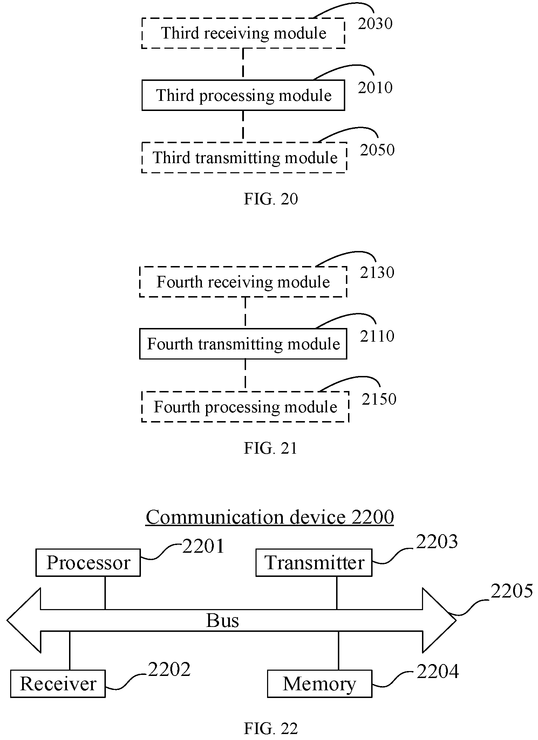

FIG. 20 illustrates a structural block diagram of an apparatus for transmitting a channel according to some embodiments of the present disclosure. The apparatus may be implemented as the first node illustrated in FIG. 8, FIG. 9, FIG. 12, or FIG. 13, or may be implemented as a part of the first node illustrated in FIG. 8, FIG. 9, FIG. 12, or FIG. 13. The apparatus includes at least part of a third processing module 2010, a third receiving module 2030, and a third transmitting module 2050. The third receiving module 2030 and the third transmitting module 2050 are optional modules.

The third processing module 2010 is configured to acquire a second sensing result based on a second signal carried on n channels that satisfy a constraint condition, wherein n is an integer greater than 1.

In some embodiments, the second sensing result corresponds to one sensing operation; and/or, the second sensing result corresponds to one sensing task; and/or, the second sensing result corresponds to one sensing target; and/or, the second sensing result corresponds to one sensing measurement; and/or, the second sensing result corresponds to one sensing estimation; and/or, the second sensing result is transmitted over one channel; and/or, the second sensing result includes n sets of information, wherein one of the n sets of information is acquired based on one of the n channels; and/or, the second sensing result includes one set of information;

wherein the one set of information includes a joint detection result of the n sets of information, or a joint estimation result of the n sets of information, or an average value determined based on the n sets of information, or a median determined based on the n sets of information, or a maximum value determined based on the n sets of information, or a minimum value determined based on the n sets of information.

In some embodiments, the constraint condition includes at least one of: time-domain resources occupied by the n channels are the same; the time-domain resources occupied by the n channels have an overlapping part; the time-domain resources occupied by the n channels belong to one time-domain resource set; a time-domain interval between the time-domain resources occupied by the n channels is less than a first threshold; the time-domain interval between the time-domain resources occupied by the n channels is equal to the first threshold; frequency-domain resources occupied by the n channels belong to one frequency-domain resource set; the n channels are used to transmit the same transport block; or the n channels are indicated by one piece of downlink control information (DCI).

In some embodiments, the one time-domain resource set satisfies at least one of: a time-domain length of the one time-domain resource set is defined by a communication protocol; the time-domain length of the one time-domain resource set is configured by a network device; time-domain start positions of the one time-domain resource set are periodically distributed in a time domain; a time-domain start position of the one time-domain resource set is indicated by DCI; time-domain end positions of the one time-domain resource set are periodically distributed in a time domain; or a time-domain end position of the one time-domain resource set is indicated by the DCI.

In some embodiments, the constraint condition includes at least one of: a time-domain interval between a start time-domain unit of a first channel and an end time-domain unit of a second channel is less than a second threshold; the time-domain interval between the start time-domain unit of the first channel and the end time-domain unit of the second channel is equal to the second threshold; a time-domain interval between the start time-domain unit of the first channel and a start time-domain unit of the second channel is less than the second threshold; the time-domain interval between the start time-domain unit of the first channel and the start time-domain unit of the second channel is equal to the second threshold; a time-domain interval between an end time-domain unit of the first channel and the start time-domain unit of the second channel is less than the second threshold; the time-domain interval between the end time-domain unit of the first channel and the start time-domain unit of the second channel is equal to the second threshold; a time-domain interval between the end time-domain unit of the first channel and the end time-domain unit of the second channel is less than the second threshold; or the time-domain interval between the end time-domain unit of the first channel and the end time-domain unit of the second channel is equal to the second threshold.

The first channel is a channel at an earliest time-domain start position in the n channels, and the second channel is a channel at a latest time-domain end position in the n channels.

In some embodiments, the constraint condition includes at least one of: a third channel of the n channels is indicated by first DCI; or a time-frequency resource of the third channel of the n channels is determined based on a period P.

The third channel is any one or more of the n channels.

In some embodiments, the n channels include at least two fourth channels, wherein the at least two fourth channels repeatedly transmit first transport blocks, and the first transport blocks on different fourth channels correspond to different redundancy version (RV) numbers.

In some embodiments, the RV numbers corresponding to the first transport blocks in the at least two fourth channels are arranged in a first order.

In some embodiments, the first order is defined by a communication protocol or determined based on DCI.

In some embodiments, the n channels include at least two fifth channels, wherein the at least two fifth channels respectively transmit different transport blocks, and the transport blocks on different fifth channels correspond to different hybrid automatic repeat request (HARQ) identifier IDs.

In some embodiments, the HARQ IDs corresponding to the transport blocks in the at least two fifth channels are arranged in a second order.

In some embodiments, the second order is defined by a communication protocol or determined based on downlink control information (DCI).

In some embodiments, the second signal includes at least one of: a DMRS, an SRS, an enhanced-SRS, a CPRS, or a CSI-RS.

In some embodiments, the third processing module 2010 is configured to perform at least the determining process, the processing process, and the acquiring process in the above embodiments, such as, one or more of process 810, process 910, process 1220a, process 1320a, and process 1503.

In some embodiments, the apparatus further includes a third receiving module 2030 that is configured to perform at least the receiving processes in the above embodiments, such as, one or more of process 1210 and process 1310.

In some embodiments, the apparatus further includes a third transmitting module 2050 that is configured to perform at least the transmitting processes in the above embodiments, for example, one or more of process 1220b, process 1320b, process 1501, and process 1502.

In some embodiments, the apparatus according to the embodiments of the present disclosure includes one third transmitting module 2050 or a plurality of third transmitting modules 2050. The processes performed by different third transmitting modules 2050 are completely the same, partially the same, or completely different.

In some embodiments, the apparatus according to the embodiments of the present disclosure includes one third processing module 2010 or a plurality of third processing modules 2010. The processes performed by different third processing modules 2010 are completely the same, partially the same, or completely different.

In some embodiments, the apparatus according to the embodiments of the present disclosure includes one third receiving module 2030 or a plurality of third receiving modules 2030. The processes performed by different third receiving modules 2030 are completely the same, partially the same, or completely different.

In summary, in the apparatus according to the embodiments of the present disclosure, because the n channels occupy a large number of time-frequency resources, the second signal carried on the n channels can satisfy the sensing requirement, and the constraint condition effectively improves the transmission efficiency of the n channels. The method according to the embodiments of the present disclosure not only avoids a waste caused by occupying excessive transmission resources by the n channels, but also avoids a reduction in sensing precision and communication quality caused by occupying unreasonable transmission resources by the n channels, thereby implementing both a sensing requirement and a communication requirement. In addition, RV numbers and/or HARQ IDs of transport blocks carried on the n channels may be flexibly adjusted based on different orders, and time-frequency resources of the n channels are fully used, such that a retransmission gain, coding and decoding gains, and a coverage gain can be acquired during the transmission of the transport blocks. The method according to the embodiments of the present disclosure not only reduces the control overhead of the n channels using the constraint condition, but also improves the transmission reliability and the sensing precision of the n channels.

FIG. 21 illustrates a structural block diagram of an apparatus for transmitting a channel according to some embodiments of the present disclosure. The apparatus may be implemented as the second node illustrated in FIG. 10, FIG. 11, FIG. 12, or FIG. 13, or may be implemented as a part of the second node illustrated in FIG. 10, FIG. 11, FIG. 12, or FIG. 13. The apparatus includes at least part of a fourth transmitting module 2110, a fourth receiving module 2130, or a fourth processing module 2150. The fourth receiving module 2130 and the fourth processing module 2150 are optional modules.

The fourth transmitting module 2110 is configured to transmit a second signal on n channels that satisfy a constraint condition, wherein the second signal is used to acquire a second sensing result, and n is an integer greater than 1.

In some embodiments, the second sensing result corresponds to one sensing operation; and/or, the second sensing result corresponds to one sensing task; and/or, the second sensing result corresponds to one sensing target; and/or, the second sensing result corresponds to one sensing measurement; and/or, the second sensing result corresponds to one sensing estimation; and/or, the second sensing result is transmitted over one channel; and/or, the second sensing result includes n sets of information, wherein one of the n sets of information is acquired based on one of the n channels; and/or, the second sensing result includes one set of information;

wherein the one set of information includes a joint detection result of the n sets of information, or a joint estimation result of the n sets of information, or an average value determined based on the n sets of information, or a median determined based on the n sets of information, or a maximum value determined based on the n sets of information, or a minimum value determined based on the n sets of information.

In some embodiments, the constraint condition includes at least one of: time-domain resources occupied by the n channels are the same; the time-domain resources occupied by the n channels have an overlapping part; the time-domain resources occupied by the n channels belong to one time-domain resource set; a time-domain interval between the time-domain resources occupied by the n channels is less than a first threshold; the time-domain interval between the time-domain resources occupied by the n channels is equal to the first threshold; frequency-domain resources occupied by the n channels belong to one frequency-domain resource set; the n channels are used to transmit the same transport block; or the n channels are indicated by one piece of downlink control information (DCI).

In some embodiments, the one time-domain resource set satisfies at least one of: a time-domain length of the one time-domain resource set is defined by a communication protocol; the time-domain length of the one time-domain resource set is configured by a network device; time-domain start positions of the one time-domain resource set are periodically distributed in a time domain; a time-domain start position of the one time-domain resource set is indicated by DCI; time-domain end positions of the one time-domain resource set are periodically distributed in a time domain; or a time-domain end position of the one time-domain resource set is indicated by the DCI.

In some embodiments, the constraint condition includes at least one of: a time-domain interval between a start time-domain unit of a first channel and an end time-domain unit of a second channel is less than a second threshold; the time-domain interval between the start time-domain unit of the first channel and the end time-domain unit of the second channel is equal to the second threshold; a time-domain interval between the start time-domain unit of the first channel and a start time-domain unit of the second channel is less than the second threshold; the time-domain interval between the start time-domain unit of the first channel and the start time-domain unit of the second channel is equal to the second threshold; a time-domain interval between an end time-domain unit of the first channel and the start time-domain unit of the second channel is less than the second threshold; the time-domain interval between the end time-domain unit of the first channel and the start time-domain unit of the second channel is equal to the second threshold; a time-domain interval between the end time-domain unit of the first channel and the end time-domain unit of the second channel is less than the second threshold; or the time-domain interval between the end time-domain unit of the first channel and the end time-domain unit of the second channel is equal to the second threshold.

The first channel is a channel at an earliest time-domain start position in the n channels, and the second channel is a channel at a latest time-domain end position in the n channels.

In some embodiments, the constraint condition includes at least one of: a third channel of the n channels is indicated by first DCI; or a time-frequency resource of the third channel of the n channels is determined based on a period P.

The third channel is any one or more of the n channels.

In some embodiments, the n channels include at least two fourth channels, wherein the at least two fourth channels repeatedly transmit first transport blocks, and the first transport blocks on different fourth channels correspond to different redundancy version (RV) numbers.

In some embodiments, the RV numbers corresponding to the first transport blocks in the at least two fourth channels are arranged in a first order.

In some embodiments, the first order is defined by a communication protocol or determined based on DCI.

In some embodiments, the n channels include at least two fifth channels, wherein the at least two fifth channels respectively transmit different transport blocks, and the transport blocks on different fifth channels correspond to different hybrid automatic repeat request (HARQ) identifier IDs.

In some embodiments, the HARQ IDs corresponding to the transport blocks in the at least two fifth channels are arranged in a second order.

In some embodiments, the second order is defined by a communication protocol or determined based on downlink control information (DCI).

In some embodiments, the second signal includes at least one of: a DMRS, an SRS, an enhanced-SRS, a CPRS, or a CSI-RS.

In some embodiments, the fourth transmitting module 2110 is configured to perform at least the transmitting processes in the above embodiments, such as, one or more of process 1010, process 1110, process 1220b, process 1310, process 1320b, process 1501, and process 1502.

In some embodiments, the apparatus further includes a fourth processing module 2150 that is configured to perform at least the determining process, the acquiring process, the measuring process, and the processing process in the above embodiments, such as, one or more of process 1320a and process 1503.

In some embodiments, the apparatus further includes a fourth receiving module 2130 that is configured to perform at least the receiving processes in the above embodiments, such as, process 1210.

In some embodiments, the apparatus according to the embodiments of the present disclosure includes one fourth transmitting module 2110 or a plurality of fourth transmitting modules 2110. The processes performed by different fourth transmitting modules 2110 are completely the same, partially the same, or completely different.

In some embodiments, the apparatus according to the embodiments of the present disclosure includes one fourth processing module 2150 or a plurality of fourth processing modules 2150. The processes performed by different fourth processing modules 2150 are completely the same, partially the same, or completely different.

In some embodiments, the apparatus according to the embodiments of the present disclosure includes one fourth receiving module 2130 or a plurality of fourth receiving modules 2130. The processes performed by different fourth receiving modules 2130 are completely the same, partially the same, or completely different.

In summary, in the apparatus according to the embodiments of the present disclosure, because the n channels occupy a large number of time-frequency resources, the second signal carried on the n channels can satisfy the sensing requirement, and the constraint condition effectively improves the transmission efficiency of the n channels. The method according to the embodiments of the present disclosure not only avoids a waste caused by occupying excessive transmission resources by the n channels, but also avoids a reduction in sensing precision and communication quality caused by occupying unreasonable transmission resources by the n channels, thereby implementing both a sensing requirement and a communication requirement. In addition, RV numbers and/or HARQ IDs of transport blocks carried on the n channels may be flexibly adjusted based on different orders, and time-frequency resources of the n channels are fully used, such that a retransmission gain, coding and decoding gains, and a coverage gain can be acquired during the transmission of the transport blocks. The method according to the embodiments of the present disclosure not only reduces the control overhead of the n channels using the constraint condition, but also improves the transmission reliability and the sensing precision of the n channels.

It should be noted that, for the apparatus according to the above embodiments, the division of the functional modules is merely exemplary. In practice, the functions described above can be assigned to different functional modules as needed, that is, the internal structure of the device can be divided into different functional modules, so as to implement all or part of the above functions.

With regard to the apparatus in the embodiments, the specific manner in which each module performs operations has been described in detail in the embodiments related to the method and will not be elaborated in detail herein.

FIG. 22 illustrates a schematic structural diagram of a communication device according to some embodiments of the present disclosure. The communication device 2200 includes: a processor 2201, a receiver 2202, a transmitter 2203, a memory 2204, and a bus 2205.

In some embodiments, the communication device 2200 is implemented as a terminal device. The terminal device may be implemented as the first node illustrated in FIG. 2, FIG. 3, FIG. 6, or FIG. 7, or as a part of the first node illustrated in FIG. 2, FIG. 3, FIG. 6, or FIG. 7, or as the second node illustrated in FIG. 4, FIG. 5, FIG. 6, or FIG. 7, or as a part of the second node illustrated in FIG. 4, FIG. 5, FIG. 6, or FIG. 7, or as the first node illustrated in FIG. 8, FIG. 9, FIG. 12, or FIG. 13, or as a part of the first node illustrated in FIG. 8, FIG. 9, FIG. 12, or FIG. 13, or as the second node illustrated in FIG. 10, FIG. 11, FIG. 12, or FIG. 13, or as a part of the second node illustrated in FIG. 10, FIG. 11, FIG. 12, or FIG. 13.

In some embodiments, the communication device 2200 is implemented as a network device. The network device may be implemented as the first node illustrated in FIG. 2, FIG. 3, FIG. 6, or FIG. 7, or as a part of the first node illustrated in FIG. 2, FIG. 3, FIG. 6, or FIG. 7, or as the second node illustrated in FIG. 4, FIG. 5, FIG. 6, or FIG. 7, or as a part of the second node illustrated in FIG. 4, FIG. 5, FIG. 6, or FIG. 7, or as the first node illustrated in FIG. 8, FIG. 9, FIG. 12, or FIG. 13, or as a part of the first node illustrated in FIG. 8, FIG. 9, FIG. 12, or FIG. 13, or as the second node illustrated in FIG. 10, FIG. 11, FIG. 12, or FIG. 13, or as a part of the second node illustrated in FIG. 10, FIG. 11, FIG. 12, or FIG. 13.

The processor 2201 includes one or more processing cores, and the processor 2201 executes various functional applications and performs information processing by running software programs and modules. In some embodiments, the processor 2201 is configured to implement the functions and processes of the first processing module 1810 and/or the second processing module 1950 and/or the third processing module 2010 and/or the fourth processing module 2150 described above.

The receiver 2202 and the transmitter 2203 may be implemented as a communication assembly, which may be a communication chip. In some embodiments, the receiver 2202 is configured to implement the functions and processes of the first receiving module 1830 and/or the second receiving module 1930 and/or the third receiving module 2030 and/or the fourth receiving module 2130 as described above. In some embodiments, the transmitter 2203 is configured to implement the functions and processes of the first transmitting module 1850 and/or the second transmitting module 1910 and/or the third transmitting module 2050 and/or the fourth transmitting module 2110 as described above.

The memory 2204 is connected to the processor 2201 via the bus 2205. The memory 2204 is configured to store at least one instruction, and the processor 2201 is configured to execute the at least one instruction to perform the processes in the above method embodiments.

In addition, the memory 2204 may be implemented by any type of volatile or non-volatile storage device or a combination thereof. The volatile or non-volatile storage devices include, but are not limited to: magnetic disks or optical disks, electrically-erasable programmable read-only memory (EEPROM), erasable programmable read-only memory (EPROM), static random-access memory (SRAM), read-only memory (ROM), magnetic memory, flash memory, and programmable read-only memory (PROM).

In some embodiments, the receiver 2202 receives signals/data independently, or the processor 2201 controls the receiver 2202 to receive signals/data, or the processor 2201 requests the receiver 2202 to receive signals/data, or the processor 2201 cooperates with the receiver 2202 to receive signals/data.

In some embodiments, the transmitter 2203 transmits signals/data independently, or the processor 2201 controls the transmitter 2203 to transmit signals/data, or the processor 2201 requests the transmitter 2203 to transmit signals/data, or the processor 2201 cooperates with the transmitter 2203 to transmit signals/data.

According to an embodiment of the present disclosure, a computer-readable storage medium is further provided. The computer-readable storage medium stores at least one program, and the at least one program is loaded and executed by the processor to perform the method for transmitting a channel provided in the above method embodiments.

According to an embodiment of the present disclosure, a chip is further provided. The chip includes programmable logic circuitry and/or one or more program instructions. The chip, when running on a communication device, is configured to perform the method for transmitting a channel provided in the above method embodiments.

According to an embodiment of the present disclosure, a computer program product is further provided. The computer program product, when running on a processor of a computer device, causes the computer device to perform the method for transmitting a channel as described above.

According to an exemplary embodiment of the present disclosure, a computer program is further provided. The computer program includes one or more computer instructions. The one or more computer instructions, when executed by a processor of a computer device, cause the computer device to perform the method for transmitting a channel as described above.

A person skilled in the art should be aware that in the foregoing one or more examples, the functions described in the embodiments of the present disclosure may be implemented by hardware, software, firmware, or any combination thereof. The functions, when implemented by software, may be stored in a computer-readable medium or transmitted as one or more instructions or codes on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely optional embodiments of the present disclosure and are not used to limit the present disclosure. Any modifications, equivalent substitutions, improvements, and the like made within the spirit and principles of the present disclosure shall be included within the protection scope of the present disclosure.

**Claims**

1. A method for transmitting a channel, performed by a first node, the method comprising:

   determining, based on a first parameter, a transport block size (TBS) of a transport block carried on a channel; wherein
   a first signal carried on the channel is used to acquire a first sensing result; and
   the first parameter comprises at least one of:

   a first coefficient, wherein a value of the first coefficient is greater than 1 or greater than 0 and less than 1;
   a number of resource blocks (RBs) occupied by the first signal;
   a number of time-domain units occupied by the first signal;
   a number of resource elements (REs) occupied by the first signal; or
   a first overhead amount for sensing function scheduling.

2. The method according to claim 1, wherein

the first parameter comprises the first coefficient;
the TBS is determined based on a product of a first number and the first coefficient; or
the TBS is determined based on a quotient of a first number and the first coefficient.

3. The method according to claim 2, wherein a value of the first number is determined based on at least one of:

   a first code rate;
   a modulation order;
   a number of transmission layers;
   a number of first REs; or
   a first product, wherein the first product is a product of at least two of the first code rate, the modulation order, the number of the transmission layers, and the number of the first REs, and the number of the first REs is less than or equal to a number of REs in a time-frequency resource allocated to the channel.

4. The method according to claim 3, wherein

   the value of the first number is equal to a value of the first product, and the first product is a product of the first code rate, the modulation order, the number of the transmission layers, and the number of the first REs; and
   the TBS is determined based on a product of the first product and the first coefficient, or based on a quotient of the first product and the first coefficient.

5. The method according to claim 3, wherein

   the value of the first number is determined based on the first code rate; and
   the TBS is determined based on a product or a quotient of the first code rate and the first coefficient.

6. The method according to claim 5, wherein

   the value of the first number is further determined based on the modulation order, the number of the transmission layers, and the number of the first REs; and
   the TBS is determined based on a product of the product of the first code rate and the first coefficient, the modulation order, the number of the transmission layers, and the number of the first REs, or the TBS is determined based on a product of the quotient of the first code rate and the first coefficient, the modulation order, the number of the transmission layers, and the number of the first REs.

7. The method according to claim 1, wherein

   the TBS is determined based on a number of second REs, wherein the number of the second REs is determined based on the first parameter; and
   the number of the second REs is less than or equal to a number of REs in a time-frequency resource allocated to the channel.

8. The method according to claim 7, wherein the first parameter comprises at least one of the number of the RBs occupied by the first signal, the number of the time-domain units occupied by the first signal, the number of the REs occupied by the first signal, or the first overhead amount.

9. The method according to claim 8, wherein the TBS is determined based on a product of the number of the second REs, a first code rate, a modulation order, and a number of transmission layers.

10. The method according to any one of claims 1 to 9, wherein the first signal comprises at least one of:

    a demodulation reference signal (DMRS);
    a sounding reference signal (SRS);
    an enhanced-SRS;
    a carrier phase reference signal (CPRS); or
    a channel state information reference signal (CSI-RS).

11. The method according to any one of claims 1 to 10, wherein the first parameter is indicated by at least one of downlink control information (DCI) or higher layer signaling.

12. A method for transmitting a channel, performed by a second node, the method comprising:

transmitting at least one of a transport block or a first signal on a channel;
wherein the first signal is used to acquire a first sensing result, and a transport block size (TBS) of the transport block is determined based on a first parameter,
wherein the first parameter comprises at least one of:

a first coefficient, wherein a value of the first coefficient is greater than 1 or greater than 0 and less than 1;
a number of resource blocks (RBs) occupied by the first signal;
a number of time-domain units occupied by the first signal;
a number of resource elements (REs) occupied by the first signal; or
a first overhead amount for sensing function scheduling.

13. The method according to claim 12, wherein

the first parameter comprises the first coefficient;
the TBS is determined based on a product of a first number and the first coefficient; or
the TBS is determined based on a quotient of a first number and the first coefficient.

14. The method according to claim 8, wherein a value of a first number is determined based on at least one of:

a first code rate;
a modulation order;
a number of transmission layers;
a number of first REs; or
a first product, wherein the first product is a product of at least two of the first code rate, the modulation order, the number of the transmission layers, and the number of the first REs, and the number of the first REs is less than or equal to a number of REs in a time-frequency resource allocated to the channel.

15. The method according to claim 14, wherein

the value of the first number is equal to a value of the first product, and the first product is a product of the first code rate, the modulation order, the number of the transmission layers, and the number of the first REs; and
the TBS is determined based on a product of the first product and a first coefficient, or based on a quotient of the first product and a first coefficient.

16. The method according to claim 14, wherein

the value of the first number is determined based on the first code rate; and
the TBS is determined based on a product or a quotient of the first code rate and the first coefficient.

17. The method according to claim 16, wherein

the value of the first number is further determined based on the modulation order, the number of the transmission layers, and the number of the first REs; and
the TBS is determined based on a product of the product of the first code rate and the first coefficient, the modulation order, the number of the transmission layers, and the number of the first REs, or the TBS is determined based on a product of the quotient of the first code rate and the first coefficient, the modulation order, the number of the transmission layers, and the number of the first REs.

18. The method according to claim 12, wherein the TBS is determined based on a number of second REs, wherein the number of the second REs is determined based on the first parameter; and
the number of the second REs is less than or equal to a number of REs in a time-frequency resource allocated to the channel.

19. The method according to claim 18, wherein the first parameter comprises at least one of the number of the RBs occupied by the first signal, the number of the time-domain units occupied by the first signal, the number of the REs occupied by the first signal, or the first overhead amount.

20. The method according to claim 19, wherein the TBS is determined based on a product of the number of the second REs, a first code rate, a modulation order, and a number of transmission layers.

21. The method according to any one of claims 12 to 20, wherein the first signal comprises at least one of:

a demodulation reference signal (DMRS);
a sounding reference signal (SRS);
an enhanced-SRS;
a carrier phase reference signal (CPRS); or
a channel state information reference signal (CSI-RS).

22. The method according to any one of claims 12 to 21, wherein the first parameter is indicated by at least one of downlink control information (DCI) or higher layer signaling.

23. A method for transmitting a channel, performed by a first node, the method comprising:
acquiring a second sensing result based on a second signal carried on n channels that satisfy a constraint condition, wherein n is an integer greater than 1.

24. The method according to claim 23, wherein

the second sensing result corresponds to one sensing operation; and/or
the second sensing result corresponds to one sensing task; and/or
the second sensing result corresponds to one sensing target; and/or
the second sensing result corresponds to one sensing measurement; and/or
the second sensing result corresponds to one sensing estimation; and/or
the second sensing result is transmitted over one channel; and/or
the second sensing result comprises n sets of information, wherein one of the n sets of information is acquired based on one of the n channels; and/or
the second sensing result comprises one set of information;
wherein the one set of information comprises a joint detection result of the n sets of information, or a joint estimation result of the n sets of information, or an average value determined based on the n sets of information, or a median determined based on the n sets of information, or a maximum value determined based on the n sets of information, or a minimum value determined based on the n sets of information.

25. The method according to claim 23 or 24, wherein the constraint condition comprises at least one of:

time-domain resources occupied by the n channels are the same;
time-domain resources occupied by the n channels have an overlapping part;
time-domain resources occupied by the n channels belong to one time-domain resource set;
a time-domain interval between time-domain resources occupied by the n channels is less than a first threshold;
a time-domain interval between time-domain resources occupied by the n channels is equal to a first threshold;
frequency-domain resources occupied by the n channels belong to one frequency-domain resource set;
the n channels are used to transmit a same transport block; or
the n channels are indicated by one piece of downlink control information (DCI).

26. The method according to claim 25, wherein the one time-domain resource set satisfies at least one of:

a time-domain length of the one time-domain resource set is defined by a communication protocol;
a time-domain length of the one time-domain resource set is configured by a network device;
time-domain start positions of time-domain resources in the one time-domain resource set are periodically distributed in a time domain;
a time-domain start position of the one time-domain resource set is indicated by the DCI;
time-domain end positions of time-domain resources in the one time-domain resource set are periodically distributed in a time domain; or
a time-domain end position of the one time-domain resource set is indicated by the DCI.

**27.** The method according to any one of claims 23 to 26, wherein the constraint condition comprises at least one of:

a time-domain interval between a start time-domain unit of a first channel and an end time-domain unit of a second channel is less than a second threshold;

a time-domain interval between a start time-domain unit of a first channel and an end time-domain unit of a second channel is equal to a second threshold;

a time-domain interval between a start time-domain unit of a first channel and a start time-domain unit of a second channel is less than a second threshold;

a time-domain interval between a start time-domain unit of a first channel and a start time-domain unit of a second channel is equal to a second threshold;

a time-domain interval between an end time-domain unit of a first channel and a start time-domain unit of a second channel is less than a second threshold;

a time-domain interval between an end time-domain unit of a first channel and a start time-domain unit of a second channel is equal to a second threshold;

a time-domain interval between an end time-domain unit of a first channel and an end time-domain unit of a second channel is less than a second threshold; or

a time-domain interval between an end time-domain unit of a first channel and an end time-domain unit of a second channel is equal to a second threshold;

wherein the first channel is a channel at an earliest time-domain start position in the n channels, and the second channel is a channel at a latest time-domain end position in the n channels.

**28.** The method according to any one of claims 23 to 27, wherein the constraint condition comprises at least one of:

a third channel of the n channels is indicated by first downlink control information (DCI); or

a time-frequency resource of a third channel is determined based on a period P;

wherein the third channel is any one or more of the n channels.

**29.** The method according to any one of claims 23 to 28, wherein the n channels comprise at least two fourth channels, wherein the at least two fourth channels repeatedly transmit first transport blocks, wherein the first transport blocks in different fourth channels correspond to different redundancy version (RV) numbers.

**30.** The method according to claim 29, wherein the RV numbers corresponding to the first transport blocks in the at least two fourth channels are arranged in a first order.

**31.** The method according to claim 30, wherein the first order is defined by a communication protocol or determined based on (downlink control information) DCI.

**32.** The method according to any one of claims 23 to 31, wherein the n channels comprise at least two fifth channels, wherein the at least two fifth channels separately transmit different transport blocks, wherein the transport blocks in different fifth channels correspond to different hybrid automatic repeat request (HARQ) identifiers (IDs).

**33.** The method according to claim 32, wherein the HARQ IDs corresponding to the transport blocks in the at least two fifth channels are arranged in a second order.

**34.** The method according to claim 33, wherein the second order is defined by a communication protocol or determined based on downlink control information (DCI).

**35.** The method according to any one of claims 23 to 34, wherein the second signal comprises at least one of:

a demodulation reference signal (DMRS);
a sounding reference signal (SRS);
an enhanced-SRS;
a carrier phase reference signal (CPRS); or
a channel state information reference signal (CSI-RS).

**36.** A method for transmitting a channel, performed by a second node, the method comprising:
transmitting a second signal on n channels that satisfy a constraint condition, wherein the second signal is used to acquire a second sensing result, and n is an integer greater than 1.

**37.** The method according to claim 36, wherein

the second sensing result corresponds to one sensing operation; and/or
the second sensing result corresponds to one sensing task; and/or
the second sensing result corresponds to one sensing target; and/or
the second sensing result corresponds to one sensing measurement; and/or
the second sensing result corresponds to one sensing estimation; and/or
the second sensing result is transmitted over one channel; and/or
the second sensing result comprises n sets of information, wherein one of the n sets of information is acquired based on one of the n channels;
the second sensing result comprises one set of information;
wherein the one set of information comprises a joint detection result of the n sets of information, or a joint estimation result of the n sets of information, or an average value determined based on the n sets of information, or a median determined based on the n sets of information, or a maximum value determined based on the n sets of information, or a minimum value determined based on the n sets of information.

**38.** The method according to claim 36 or 37, wherein the constraint condition comprises at least one of:

time-domain resources occupied by the n channels are the same;
time-domain resources occupied by the n channels have an overlapping part;
time-domain resources occupied by the n channels belong to one time-domain resource set;
a time-domain interval between time-domain resources occupied by the n channels is less than a first threshold;
a time-domain interval between time-domain resources occupied by the n channels is equal to the first threshold;
frequency-domain resources occupied by the n channels belong to one frequency-domain resource set;
the n channels are used to transmit a same transport block; or
the n channels are indicated by one piece of downlink control information (DCI).

**39.** The method according to claim 38, wherein the one time-domain resource set satisfies at least one of:

a time-domain length of the one time-domain resource set is defined by a communication protocol;
a time-domain length of the one time-domain resource set is configured by a network device;
time-domain start positions of time-domain resources in the one time-domain resource set are periodically distributed in a time domain;
a time-domain start position of the one time-domain resource set is indicated by the DCI;
time-domain end positions of time-domain resources in the one time-domain resource set are periodically distributed in a time domain; or
a time-domain end position of the one time-domain resource set is indicated by the DCI.

**40.** The method according to any one of claims 36 to 39, wherein the constraint condition comprises at least one of:

a time-domain interval between a start time-domain unit of a first channel and an end time-domain unit of a second channel is less than a second threshold;
a time-domain interval between a start time-domain unit of a first channel and an end time-domain unit of a second channel is equal to a second threshold;
a time-domain interval between a start time-domain unit of a first channel and a start time-domain unit of a second channel is less than a second threshold;
a time-domain interval between a start time-domain unit of a first channel and a start time-domain unit of a second channel is equal to a second threshold;
a time-domain interval between an end time-domain unit of a first channel and a start time-domain unit of a second channel is less than a second threshold;
a time-domain interval between an end time-domain unit of a first channel and a start time-domain unit of a second channel is equal to a second threshold;
a time-domain interval between an end time-domain unit of a first channel and an end time-domain unit of a second channel is less than a second threshold; or
a time-domain interval between an end time-domain unit of a first channel and an end time-domain unit of a second channel is equal to a second threshold;
wherein the first channel is a channel at an earliest time-domain start position in the n channels, and the second channel is a channel at a latest time-domain end position in the n channels.

41. The method according to any one of claims 36 to 40, wherein the constraint condition comprises at least one of:

> a third channel of the n channels is indicated by first downlink control information (DCI); or
> a time-frequency resource of a third channel is determined based on a period P;
> wherein the third channel is any one or more of the n channels.

42. The method according to any one of claims 36 to 41, wherein the n channels comprise at least two fourth channels, wherein the at least two fourth channels repeatedly transmit first transport blocks, wherein the first transport blocks in different fourth channels correspond to different redundancy version (RV) numbers.

43. The method according to claim 42, wherein the RV numbers corresponding to the first transport blocks in the at least two fourth channels are arranged in a first order.

44. The method according to claim 43, wherein the first order is defined by a communication protocol or determined based on the downlink control information (DCI).

45. The method according to any one of claims 36 to 44, wherein the n channels comprise at least two fifth channels, wherein the at least two fifth channels separately transmit different transport blocks, wherein the transport blocks in different fifth channels correspond to different hybrid automatic repeat request (HARQ) identifiers (IDs).

46. The method according to claim 45, wherein the HARQ IDs corresponding to the transport blocks in the at least two fifth channels are arranged in a second order.

47. The method according to claim 46, wherein the second order is defined by a communication protocol or determined based on downlink control information (DCI).

48. The method according to any one of claims 36 to 47, wherein the second signal comprises at least one of:

> a demodulation reference signal (DMRS);
> a sounding reference signal (SRS);
> an enhanced-SRS;
> a carrier phase reference signal (CPRS); or
> a channel state information reference signal (CSI-RS).

49. An apparatus for transmitting a channel, comprising:

> a first processing module, configured to determine, based on a first parameter, a transport block size (TBS) of a transport block carried on a channel; wherein
> a first signal carried on the channel acquires a first sensing result; and
> the first parameter comprises at least one of:
>
>> a first coefficient, wherein a value of the first coefficient is greater than 1 or greater than 0 and less than 1;
>> a number of resource blocks (RBs) occupied by the first signal;
>> a number of time-domain units occupied by the first signal;
>> a number of resource elements (REs) occupied by the first signal; or
>> a first overhead amount for sensing function scheduling.

50. An apparatus for transmitting a channel, comprising:

> a second transmitting module, configured to transmit at least one of a transport block or a first signal on a channel; wherein the first signal is used to acquire a first sensing result, and a transport block size (TBS) of the transport block is determined based on a first parameter,
> wherein the first parameter comprises at least one of:
>
>> a first coefficient, wherein a value of the first coefficient is greater than 1 or greater than 0 and less than 1;
>> a number of resource blocks (RBs) occupied by the first signal;
>> a number of time-domain units occupied by the first signal;
>> a number of resource elements (REs) occupied by the first signal; or

a first overhead amount for sensing function scheduling.

51. An apparatus for transmitting a channel, comprising:
a third processing module, configured to acquire a second sensing result based on a second signal carried on n channels that satisfy a constraint condition, wherein n is an integer greater than 1.

52. An apparatus for transmitting a channel, comprising:
a fourth transmitting module, configured to transmit a second signal on n channels that satisfy a constraint condition, wherein the second signal is used to acquire a second sensing result, and n is an integer greater than 1.

53. A terminal device, comprising:

a processor;
a transceiver communicably connected to the processor; and
a memory configured to store one or more executable instructions of the processor;
wherein the terminal device is configured to perform the method for transmitting a channel as defined in any one of claims 1 to 11, or the method for transmitting a channel as defined in any one of claims 12 to 22, or the method for transmitting a channel as defined in any one of claims 23 to 35, or the method for transmitting a channel as defined in any one of claims 36 to 48.

54. A network device, comprising:

a processor;
a transceiver communicably connected to the processor; and
a memory configured to store one or more executable instructions of the processor;
wherein the network device is configured to perform the method for transmitting a channel as defined in any one of claims 1 to 11, or the method for transmitting a channel as defined in any one of claims 12 to 22, or the method for transmitting a channel as defined in any one of claims 23 to 35, or the method for transmitting a channel as defined in any one of claims 36 to 48.

55. A computer-readable storage medium, storing one or more executable instructions therein, wherein the one or more executable instructions, when loaded and executed by a processor, cause the processor to perform the method for transmitting a channel as defined in any one of claims 1 to 11, or the method for transmitting a channel as defined in any one of claims 12 to 22, or the method for transmitting a channel as defined in any one of claims 23 to 35, or the method for transmitting a channel as defined in any one of claims 36 to 48.

56. A chip, comprising: programmable logic circuitry or one or more programs, wherein the chip is configured to perform the method for transmitting a channel as defined in any one of claims 1 to 11, or the method for transmitting a channel as defined in any one of claims 12 to 22, or the method for transmitting a channel as defined in any one of claims 23 to 35, or the method for transmitting a channel as defined in any one of claims 36 to 48.

57. A computer program product, comprising: one or more computer instructions stored in a computer-readable storage medium, wherein the one or more computer instructions, when read from the computer-readable storage medium and executed by a processor of a computer device, cause the computer device to perform the method for transmitting a channel as defined in any one of claims 1 to 11, or the method for transmitting a channel as defined in any one of claims 12 to 22, or the method for transmitting a channel as defined in any one of claims 23 to 35, or the method for transmitting a channel as defined in any one of claims 36 to 48.

58. A computer program, comprising one or more computer instructions, wherein the one or more computer instructions, when executed by a processor of a computer device, cause the computer device to perform the method for transmitting a channel as defined in any one of claims 1 to 11, or the method for transmitting a channel as defined in any one of claims 12 to 22, or the method for transmitting a channel as defined in any one of claims 23 to 35, or the method for transmitting a channel as defined in any one of claims 36 to 48.

FIG. 1

Determining, based on a first parameter, a TBS of a transport block carried on a channel, wherein a first signal carried on the channel is used to acquire a first sensing result

210

FIG. 2

Determining, based on a first parameter, a TBS of a transport block carried on a channel, wherein a first signal carried on the channel is used to acquire a first sensing result, and the first parameter includes at least one of a first coefficient, the number of RBs occupied by the first signal, the number of time domain units occupied by the first signal, the number of REs occupied by the first signal, or a first overhead number for sensing function scheduling

310

FIG. 3

Transmitting at least one of a first signal or a transport block on a channel, wherein the first signal is used to acquire a first sensing result, and a TBS of the transport block is determined based on a first parameter

410

FIG. 4

Transmitting at least one of a transport block or a first signal on a channel, wherein the first signal is used to acquire a first sensing result, a TBS of the transport block is determined based on a first parameter, and the first parameter includes at least one of a first coefficient, the number of RBs occupied by the first signal, the number of time domain units occupied by the first signal, the number of REs occupied by the first signal, or a first overhead number for sensing function scheduling

510

FIG. 5

Reporting capability information, wherein the capability information is used to configure a first parameter — 610

Receiving a first coefficient set, wherein the first coefficient set includes a first coefficient — 620

Receiving first information, wherein the first information is used to indicate the first parameter — 630

Determining, based on the first parameter, a TBS of a transport block carried on a channel — 640

650a — Acquiring a first sensing result based on a first signal carried on the channel

Transmitting at least one of a first signal or a transport block on the channel, wherein the first signal is used to acquire the first sensing result — 650b

FIG. 6

Receiving capability information, wherein the capability information is used to configure a first parameter — 710

Transmitting a first coefficient set, wherein the first coefficient set includes a first coefficient — 720

Transmitting first information, wherein the first information is used to indicate the first parameter — 730

Determining, based on the first parameter, a TBS of a transport block carried on a channel — 740

750a — Acquiring a first sensing result based on a first signal carried on the channel

Transmitting at least one of a first signal or a transport block on the channel, wherein the first signal is used to acquire the first sensing result — 750b

FIG. 7

810

Acquiring a second sensing result based on a second signal carried on n channels that satisfy a constraint condition

FIG. 8

910

Acquiring a second sensing result based on a second signal carried on n channels that satisfy a constraint condition

FIG. 9

1010

Transmitting a second signal on n channels that satisfy a constraint condition, wherein the second signal is used to acquire a second sensing result

FIG. 10

1110

Transmitting a second signal on n channels that satisfy a constraint condition, wherein the second signal is used to acquire a second sensing result

FIG. 11

1210

Receiving second information, wherein the second information is used to indicate a second parameter

1220a

Acquiring a second sensing result based on a second signal carried on n channels that satisfy a constraint condition

1220b

Transmitting a second signal on n channels that satisfy a constraint condition, wherein the second signal is used to acquire the second sensing result

FIG. 12

| Transmitting second information, wherein the second information is used to indicate a second parameter | 1310 |

| Acquiring a second sensing result based on a second signal carried on n channels that satisfy a constraint condition | Transmitting a second signal on n channels that satisfy a constraint condition, wherein the second signal is used to acquire the second sensing result |

1320a · 1320b

FIG. 13

| Network device | Terminal device |

Process 1401: Configuring a first coefficient set

Process 1402: Transmitting first information, wherein the first information is used to indicate a first parameter

Process 1403: Determining a TBS based on the first parameter

Process 1404: Transmitting at least one of a transport block or a first signal on a channel

Process 1405: Determining a TBS based on the first parameter

Process 1406: Receiving, based on the TBS, the transport block on the channel

Process 1407: Acquiring a first sensing result based on the first signal

FIG. 14

| Network device | | Terminal device |
|---|---|---|
| Process 1501: Transmitting second information, wherein the second information is used to indicates a second parameter | → | |
| Process 1502: Transmitting a second signal and n transport blocks on n channels that satisfy a constraint condition | → | |
| Process 1503: Acquiring a second sensing result based on the second signal carried on the n channels that satisfy the constraint condition | | |

FIG. 15

Frequency domain ↑

| SH 7 |
|---|
| SH 6 |
| SH 5 |
| SH 4 |
| SH 3 |
| SH 2 |
| SH 1 |

→ Time domain

⇒

Frequency domain ↑

| HARQ ID 0; RV number 2 |
|---|
| HARQ ID 1; RV number 0 |
| HARQ ID 0; RV number 0 |
| HARQ ID 1; RV number 1 |
| HARQ ID 0; RV number 1 |
| HARQ ID 1; RV number 3 |
| HARQ ID 0; RV number 3 |

→ Time domain

FIG. 16

Frequency
domain

| SH 3 |
| SH 5 |
| SH 7 |
| SH 2 |
| SH 4 |
| SH 6 |
| SH 1 |

Time
domain

Frequency
domain

| HARQ ID 0;
RV number 1 |
| HARQ ID 0;
RV number 0 |
| HARQ ID 0;
RV number 2 |
| HARQ ID 1;
RV number 3 |
| HARQ ID 1;
RV number 1 |
| HARQ ID 1;
RV number 0 |
| HARQ ID 0;
RV number 3 |

Time
domain

FIG. 17

First receiving module        1830

First processing module        1810

First transmitting module        1850

FIG. 18

Second receiving module        1930

Second transmitting module        1910

Second processing module        1950

FIG. 19

Third receiving module ⌐ 2030

Third processing module 2010

Third transmitting module 2050

FIG. 20

Fourth receiving module 2130

Fourth transmitting module 2110

Fourth processing module 2150

FIG. 21

Communication device 2200

Processor 2201    Transmitter 2203

Bus 2205

Receiver 2202    Memory 2204

FIG. 22

## INTERNATIONAL SEARCH REPORT

| International application No. |
|---|
| **PCT/CN2023/116845** |

**A.   CLASSIFICATION OF SUBJECT MATTER**

H04W28/02(2009.01)i

According to International Patent Classification (IPC) or to both national classification and IPC

**B.   FIELDS SEARCHED**

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 信道, 承载, 传输块大小, 感知, 感测, 定位, 测距, 测速, 资源块, 资源元素, 时域单元, 编码速率, 码率、调制阶数, 传输层数, RE数目, 参考信号, Transport Block Size, TB Size, TBS, sensing, RS, resource element, time domain unit, coding rate, modulation order, transmission layer

**C.   DOCUMENTS CONSIDERED TO BE RELEVANT**

| Category* | Citation of document, with indication, where appropriate, of the relevant passages | Relevant to claim No. |
|---|---|---|
| X | CN 113890672 A (VIVO MOBILE COMMUNICATION CO., LTD.) 04 January 2022 (2022-01-04) <br> description, paragraphs 54-70 | 1-22, 49-50, 53-58 |
| X | US 2023199837 A1 (VIVO MOBILE COMMUNICATION CO., LTD.) 22 June 2023 (2023-06-22) <br> description, paragraphs 303-331 | 23-48, 51-58 |
| X | KR 20160137442 A (WILUS INSTITUTE OF STANDARDS AND TECHNOLOGY INC.) 30 November 2016 (2016-11-30) <br> description, paragraphs 83-180 | 23-48, 51-58 |
| A | CN 115118380 A (HUAWEI TECHNOLOGIES CO., LTD.) 27 September 2022 (2022-09-27) <br> entire document | 1-58 |
| A | HUAWEI et al. "Remaining Details of Sidelink Physical Layer Structure" <br> *3GPP TSG RAN WG1 Meeting #101-e, R1-2003493*, 05 June 2020 (2020-06-05), <br> entire document | 1-58 |

☐ Further documents are listed in the continuation of Box C.          ☑ See patent family annex.

| | |
|---|---|
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **10 May 2024** | **15 May 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/116845**

| Patent document cited in search report | | | Publication date (day/month/year) | Patent family member(s) | | | Publication date (day/month/year) |
|---|---|---|---|---|---|---|---|
| CN | 113890672 | A | 04 January 2022 | None | | | |
| US | 2023199837 | A1 | 22 June 2023 | EP | 4199624 | A1 | 21 June 2023 |
| | | | | JP | 2023539095 | A | 13 September 2023 |
| | | | | WO | 2022037488 | A1 | 24 February 2022 |
| | | | | CN | 114080010 | A | 22 February 2022 |
| KR | 20160137442 | A | 30 November 2016 | None | | | |
| CN | 115118380 | A | 27 September 2022 | WO | 2022199607 | A1 | 29 September 2022 |
| | | | | BR | 112023019310 | A2 | 31 October 2023 |
| | | | | EP | 4280477 | A1 | 22 November 2023 |
| | | | | US | 2023396392 | A1 | 07 December 2023 |

Form PCT/ISA/210 (patent family annex) (July 2022)